# EUROPEAN PATENT APPLICATION

(11) **EP 1 926 038 A1**
(43) Date of publication of application: **28.05.2008**
(21) Application number: 06781950.8
(22) Date of filing: 28.07.2006
(51) Int. Cl.: G06F 21/20

(54) **AUTHENTICATION SYSTEM**

(30) Priority: 12.08.2005 JP 2005235020
(71) Applicant: MATSUSHITA ELECTRIC INDUSTRIAL CO., LTD., Osaka 571-8501 (JP)
(72) Inventor: SHOJI, Mamoru, c/o Matsushita Electric Industrial Co., Ltd, Intellectual Property Rights Operations Company, Osaka 540-6207 (JP); YAMAOKA, Masaru, c/o Matsushita Electric Industrial Co., Ltd, Intellectual Property Rights Operations Company, Osaka 540-6207 (JP); SATO, Takahiro, c/o Matsushita Electric Industrial Co., Ltd, Intellectual Property Rights Operations Company, Osaka 540-6207 (JP); TANAKA, Shinichi, c/o Matsushita Electric Industrial Co., Ltd, Intellectual Property Rights Operations Company, Osaka 540-6207 (JP); KOIKE, Susumu, c/o Matsushita Electric Industrial Co., Ltd, Intellectual Property Rights Operations Company, Osaka 540-6207 (JP)
(74) Representative: Eisenführ, Speiser & Partner
(86) International application number: PCT/JP2006/315040
(87) International publication number: WO 2007/020782

(57) **Abstract**

It is an object of the present invention to achieve both security and convenience in authentication of authentication targets, which is required in various situations. An authentication system of the present invention includes: a receiving unit operable to receive first ID information from a first device, and receive second ID information from a second device; and an authority information generating unit operable to generate authority information having an authority range varying according to the number of pieces of the ID information received by the receiving unit. Accordingly, the range of authority that can be executed can be limited according to the number of pieces of authenticated ID information, and thus both security and convenience can be achieved in authentication of authentication targets, which is required in various situations.

## Description

### TECHNICAL FIELD

The present invention relates to an authentication system, particularly, to an authentication system for authenticating an object to be authenticated.

### BACKGROUND ART

Conventionally, in a transaction between a customer and a trader, authentication based on a card and a code number has been used for user identification of the customer. However, recently, when a card is stolen, the code number is misused, resulting in damages such as theft of money and goods. Thus, further enhancement of authentication is desired.

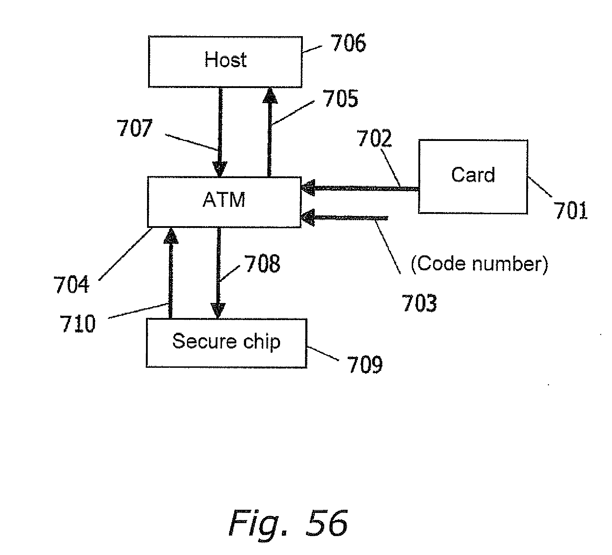

Figure **56** shows a structure of an authentication system according to a conventional example (see, for example, Japanese Patent Document 1). Figure **56** illustrates a method for withdrawing money at an automated teller machine (ATM). In Figure **56****,** reference numeral **701** denotes a magnetic card, reference numeral **704** denotes an ATM, reference numeral **706** denotes a host computer, and reference numeral **709** denotes a secure chip attached to a watch or the like.
Now, the authentication system according to the conventional example is described. A customer inserts a card to the ATM **704 (702),** and inputs a code number **(703).** If the code number is correct, the ATM **704** inquires the host computer **706** whether authentication by the secure chip **709** is required or not **(705).** The host computer **706** answers the ATM **704.**

If the authentication by the secure chip **709** is required, inherent information of the customer is sent to the ATM **704 (707).** As the ATM **704** receives this signal, it requests the secure chip **709** to provide the inherent information of the customer **(708).** The secure chip **709** responds to the demand and send the inherent information to the ATM **704 (710).**
If two sets of inherent information, i.e., the inherent information sent from the host **706** and the inherent information sent from the secure chip **709** match, the ATM **704** authenticates identification of the customer who is operating as an authorized user, and permits withdrawals.
However, in the authentication system of the conventional example, the secure chip **709** alone provides the inherent information, so there is a problem that, when the secure chip **709** is lost, it may be misused. Further, there is also a problem that when the customer has forgotten to carry the secure chip **709,** a predetermined withdrawal is not permitted.

Moreover, in these days, credit cards and debit cards utilizing IC card media are widely used. Also, electronic money utilizing the same type of IC cards has been becoming widely used. However, credit cards and debit cards require authentication of the user by an input of a password in order to protect them from misuse by a malicious third party. Thus, operations become complicated and a factor of concern in security aspect such as leakage of the password or the like is also pointed out. Therefore, a safe electronic settlement method in which only key information for user authentication is stored on the IC card media, and an electronic wallet server connected via a network is used to secure anonymity of the user and uniqueness of electronic money, which performs a batch processing from authentication to charging, has been disclosed (see Patent Document 2).
For using a credit card in an electronic transaction via the Internet, a user inputs and sends a card number. Even when it is encrypted and sent securely, user's anxiety cannot be eased completely. Also, complexity of such an input operation hinders expansion of users. Further, regarding Web money, there is complexity that a password has to be input every time it is used. Thus, a settlement method in which authentication information of a user and right to purchase of the user (i.e., electronic money information) are previously stored on the IC card, and a settlement server via the network updates the electronic money information so that password input or the like is not necessary, which means that complexity of conventional credit cards or Web money is avoided, has been disclosed (see Patent Document 3).

However, any of the methods which are currently disclosed cannot provide complete safety in the case when the user lost the card or has the card stolen.
For example, in the case where the electronic money information or electronic ticket information is securely stored on the current type of IC cards in order to use for settlement, it may be used by a malicious third party if the user did not notice he/she has lost it.
Even when authentication by a password is performed as for credit cards, password information can be readily read by using an external device, and thus, security is not ensured. Also, password input results in complexity of user operation. When it is used for electronic transaction, since the user has to notify the card number information, the user's anxiety cannot be eased.
The settlement system in which the IC card stores only the key information for identifying the user and settlement servers are used is not very practical since there is no reliability in the case of loss or theft of the IC card, and the settlement server has a burden to perform a process for every use of the user.

A charging method (a method in which a user previously register electronic money information) is now becoming mainstream. In the method, suppressing damage due to a loss or theft to a certain extent or crediting is not required. Thus, the method is effective to a certain extent in avoiding risks such as loan-loss and the like. However, there is complexity that the user has to often register the electronic money information. Further, it is merely usual paper money transformed into an electronic form, so the convenience that the electronic money naturally has is not pursued.
Patent Document 1: Japanese Laid-Open Publication No.2002-318903
Patent Document 2: Japanese Laid-Open Publication No.2003-50959
Patent Document 3: Japanese Laid-Open Publication No.2002-279322

### DISCLOSURE OF THE INVENTION

### (Problems to be Solved by the Invention)

An object of the present invention is to simultaneously pursue the safety and convenience in authentication of an object to be authenticated which is required in various situations.

### (Means for solving the problems)

A first aspect of the present invention is directed to an authentication system, comprising: a receiving unit operable to receive first ID information from a first device, and receive second ID information from a second device; and an authority information generating unit operable to generate authority information having an authority range varying according to the number of pieces of the ID information received by the receiving unit.
A second or third aspect of the present invention is the first aspect of the present invention, wherein the first or second ID information is encrypted user ID information, and the second or first ID information is a decryption key of the user ID information.
A fourth or fifth aspect of the present invention is the first aspect of the present invention, wherein the first or second ID information is user ID information, and the second or first ID information is a digital signature of the user ID information.
A sixth aspect of the present invention is the first aspect of the present invention, comprising a user management unit and a user confirmation unit. The user management unit holds information relating to a user. The user confirmation unit makes an inquiry as to the first ID information or the second ID information to the user management unit, and acquires information regarding whether or not a user corresponding to the first ID information or the second ID information has been registered. Moreover, if information indicating that the user has been registered is not acquired by the user confirmation unit, the authority information generating unit does not generate the authority information.

A seventh aspect of the present invention is the first aspect of the present invention, comprising: a user management unit operable to manage the first ID information and the second ID information such that they correspond to each other; and an ID correspondence confirmation unit operable to acquire information regarding whether or not the first ID information and the second ID information correspond to each other.
An eighth aspect of the present invention is the first aspect of the present invention, wherein the authority information generating unit generates, as the authority information, full authority information or limited authority information. The full authority information is generated if the receiving unit receives both the first ID information and the second ID information. The limited authority information is generated if the receiving unit receives only either one of the first ID information and the second ID information.
A ninth aspect of the present invention is the eighth aspect of the present invention, comprising a storage unit operable to store the full authority information and the limited authority information, wherein the authority information generating unit selects either one of the full authority information and the limited authority information in the storage unit.

A tenth aspect of the present invention is the first aspect of the present invention, comprising a device selecting unit operable to select either one of the first device and the second device, wherein the authority information generating unit generates the authority information according to a result of the selection performed by the device selecting unit.
An eleventh aspect of the present invention is the tenth aspect of the present invention, wherein if the first device is selected by the device selecting unit, the authority information generating unit generates the authority information, by encrypting the authority information with the first ID information, and if the second device is selected, the authority information generating unit generates the authority information, by encrypting the authority information with the second ID information.
A twelfth aspect of the present invention is the tenth aspect of the present invention, wherein if the first device is selected by the device selecting unit, the authority information generating unit generates the authority information, by providing a digital signature to the authority information and the first ID information, and if the second device is selected, the authority information generating unit generates the authority information, by providing a digital signature to the authority information and the second ID information.

A thirteenth aspect of the present invention is the tenth aspect of the present invention, comprising a sending unit operable to send the authority information to a device that has been selected by the device selecting unit.
A fourteenth aspect of the present invention is the first aspect of the present invention, comprising a sending unit operable to send the authority information that has been generated by the authority information generating unit, to the first device or the second device.
A fifteenth aspect of the present invention is the first aspect of the present invention, comprising an authority exercising unit configured to operate according to the authority information that has been generated by the authority information generating unit.
A sixteenth aspect of the present invention is the first aspect of the present invention, wherein the limited information is the amount of money that can be used, the number of times of operation that can be performed, time, period, expiration date, or area.

### ADVANTAGEOUS EFFECTS

According to the present invention, the range of authority to be executed can be limited dynamically and in real time, and thus both security and convenience can be achieved in authentication of authentication targets, which is required in various situations.

### BEST MODE FOR CARRYING OUT THE INVENTION

### (Overview of embodiment)

Hereinafter, overview of embodiments of the present invention will be described.

### <1>

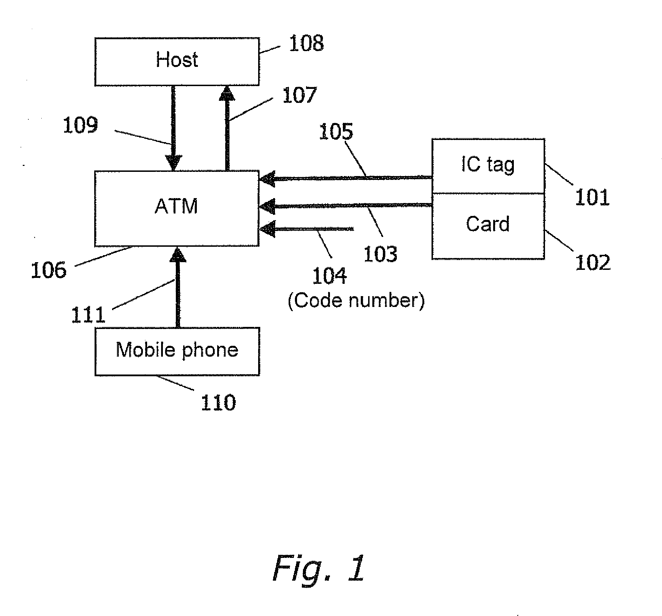

In the first through fifth embodiments, an object is to provide an authentication system which realizes enhancement of authentication, and reducing risks in the case where a device including inherent information is lost or forgotten to be carried.
According to the first through fifth embodiments, enhancement of authentication in various events which require authentication, reducing of risks in the case where a device including inherent information is lost, and prevention of impairing convenience when the device including inherent information is forgotten to be carried can be realized.
For example, in the present invention shown in the first embodiment (see Figure **1****),** a customer inserts a magnetic card to an ATM **106 (103),** and inputs a code number **(104).** If the code number is correct, the ATM **106** reads a signal **105** input from an IC tag **101.** The signal **105** includes a personal ID of the IC tag **101** which is encrypted, and also ID information of a mobile phone **110.** The ATM **106** checks whether it has received the ID information of the mobile phone **110,** and if it confirms receipt **(111),** the personal ID of the IC tag **101** is decrypted using the ID information as a key. The ATM **106** sends the decrypted personal ID of the IC tag **101** to a host computer **108 (107).** The host computer **108** searches whether the personal ID of the IC tag **101** exists in a predetermined database of personal IDs. If it is confirmed to exist, the host computer **108** sends a signal to permit withdrawal to the ATM **106 (109).**

### <2>

The sixth through eighth embodiments are to solve a problem that, in a conventional electronic money system, use of card by a third party due to a theft, loss or the like of cards cannot be eliminated as a result of focusing anonymity in electronic money use. An object of the sixth through eighth embodiments is to provide an authentication system and authentication device which can prevent misuse by a third party even in the case where a card is lost or stolen without complicated input of a password or the like by the user.

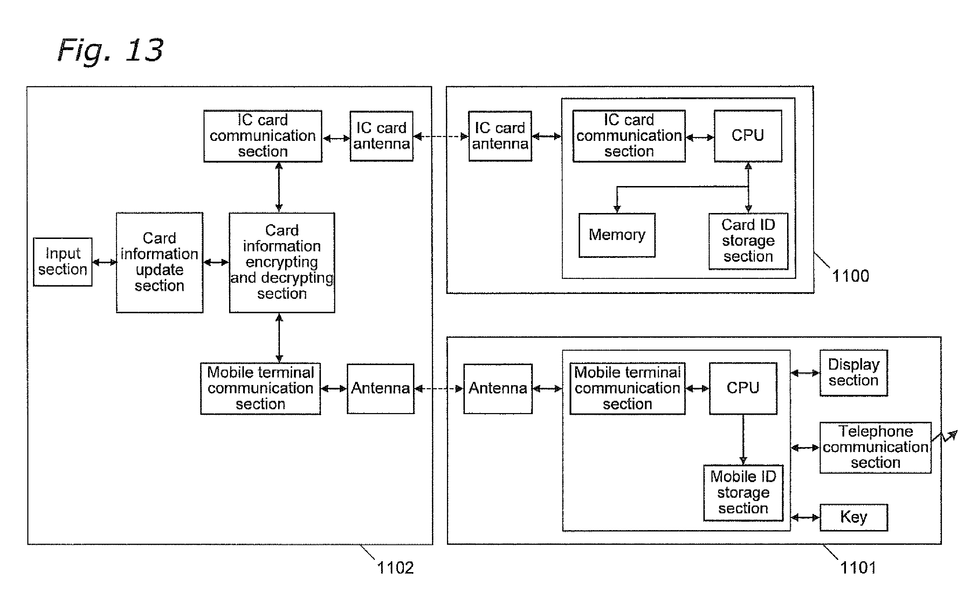

According to the sixth through eighth embodiments, safety which has been conventionally achieved by a combination of a passbook and a registered seal can be applied to electronic personal authentication. Thus, it becomes possible to be used for safe electronic money, deposit and withdrawal control, and digital information recording or the like.
For example, in the present invention shown in the sixth embodiment (see Figure **13****),** an authentication system is formed of an IC card **1100** on which card information is recorded, a mobile terminal **1101** which stores mobile ID, and a reader/writer having secure communication means with the IC card, communication means with the mobile terminal, extraction means for extracting electronic money information from the card information read from the IC card and the mobile ID information read from the mobile terminal, and update means for updating the electronic money information. With such a structure, an electronic money system which can eliminate misuse by a third party even when the IC card is stolen or lost is provided.

### <3>

In the ninth embodiment, an information recording apparatus using an authentication process will be described. This allows prevention of misuse of contents and the like.

### <4>

In the tenth embodiment, further application of the authentication process will be described.

### <5>

In the eleventh embodiment, another application of the authentication process will be described.

### <6>

In the twelfth embodiment, an authentication process will be described in which use is permitted within a limited authority range even with only one of two devices having inherent information.

### <7>

In the thirteenth embodiment, another application of the authentication process using two devices having inherent information will be described.

### (First embodiment)

Hereinafter, a preferred embodiment of the present invention is described with reference to the drawings. Figure **1** shows a structure of an authentication system according to the first embodiment of the present invention. Figure **1** illustrates a method for withdrawing money at an ATM. In Figure **1****,** reference numeral **101** denotes an IC tag, reference numeral **102** denotes a magnetic card, reference numeral **106** denotes an ATM, reference numeral **108** denotes a host computer, and reference numeral **110** denotes a mobile phone. The IC tag **101** is embedded in the magnetic card **102.**

Now, the authentication system in the first embodiment is described. A customer inserts a magnetic card to the ATM **106 (103),** and inputs a code number **(104).** If the code number is correct, the ATM **106** reads a signal **105** input from the IC tag **101.** The signal **105** includes a personal ID of the IC tag **101** which is encrypted, and also ID information of the mobile phone **110.** The ATM **106** checks whether it has received the ID information of the mobile phone **110.**
In general, mobile phones have a function to switch base stations as they move so that call is not interrupted while they are moving, and intermittently transmit a signal to notify their current positions to the base stations.
In the present embodiment, such a signal is utilized. The signal transmitted by the mobile phone includes at least ID information specific to the mobile phone **110.** The receiving sensitivity of the ATM **106** for the ID information of the mobile phone **110** is suppressed to be lower than the receiving sensitivity of the base stations, and the ATM **106** can receive the ID information only from the mobile phones within the range of about a few meters.

If the ATM **106** confirms reception of the ID information which matches the ID information received from the IC tag **101 (111),** the personal ID of the IC tag **101** is decrypted using the ID information as a key. Then, the ATM **106** sends the decrypted personal ID of the IC tag **101** to the host computer **108 (107).** The host computer **108** searches whether the personal ID of the IC tag **101** exists in a predetermined database of personal IDs. If it is confirmed to exist, the host computer **108** sends a signal to permit withdrawal to the ATM **106 (109).**
As described above, by the authentication system of the present embodiment, the personal ID is decrypted using two devices, i.e., the IC tag **101** and the mobile phone **110.** Thus, security level can be improved compared to the case where only one device is used.
Furthermore, since the mobile phone **110** is used, original functions of mobile phones, such as a function for transmitting a signal or the power supply can be utilized, and thus, authentication of an individual can be performed with a simple structure. Further, since the ID information intermittently transmitted from the mobile phone **110** is utilized, there is no need to request the mobile phone **110** to transmit the ID information from the ATM **106,** and thus, a time period necessary for authentication is reduced.

Usually, if the number of so-called keys is increased in order to improve the level of security, the operations become complicated, and may impair convenience of the customer. However, in the present embodiment, the ID information which is intermittently transmitted from the mobile phone **110** is used so that the authentication can be performed without impairing convenience of the customer.
In the present embodiment, the IC tag **101** is embedded in the magnetic card **102.** However, the IC tag **101** can be provided separately from the magnetic card **102.** It may be in any form such as a key ring, a bracelet, a watch with the IC tag being embedded, or the like. If the IC tag **101** is separated from the magnetic card **102,** it becomes necessary to take a measure such as bringing the IC tag **101** closer to the ATM **106** or the like to send the signal 105. However, since at least three devices, the magnetic card **102,** the IC tag **101,** and the mobile phone **110** are necessary, the security level can be improved compared to that when two devices are used.

Since the IC tag cannot complete the authentication by itself, a plurality of IC tags may be provided in view of the case of losing or forgetting the IC tag. By carrying a plurality of IC tags, even when the IC tag is forgotten to be carried, the convenience can be prevented from being impaired without increasing the risk of misuse.
In the present embodiment, a signal of the mobile phone for notifying base stations of its position is used. However, any signal other than the signal for notifying base stations of the position can be used as long as it is intermittently transmitted at a frequency of once in about a few seconds or more. By employing another signal, a weak signal which reaches to only a range of about a few meters can be used so that the power consumption of the mobile phone can be reduced by that amount.
In the present embodiment, the ATM **106** decrypts the personal ID of the IC tag **101** using the ID information received from the mobile phone **110** as a key. However, as long as the host computer **108** already knows or can recognize, a signal obtained by **a**rbitrarily calculating the signal **111** received from the mobile phone **110** and the signal **105** received from the IC tag **101** may be sent to the host computer **108.** Sending and receiving between the host computer **108** and the ATM **106** may be in any form such as wired, wireless, one-way communication, bidirectional communication, or the like.

In the present embodiment, the decrypted personal ID of the IC tag **101** is sent to the host computer **108.** However, the signal may be sent as it remains encrypted, and may be decrypted at the host computer **108.**
In the present embodiment, if the customer does not carry the mobile phone **110,** for example, money cannot be withdrawn. However, it may allow for a withdrawal within a predetermined range upon transmission of the code number to the magnetic card **102** as in conventional art, and it may further allow for an increase in the amount of money which can be withdrawn upon transmission of the signal **105** from the IC tag **101.**
The signal input from the IC tag **101** to the ATM **106** may include address information of the host computer **108.** Since the address information is included, the signal **107** can be sent to the host computer **108** even when the ATM **106** does not have address information of the host computer **108.**

Even when the address information is not included, if the personal ID is a personal ID which is authenticated by an authentication organization which is designated by the ATM **106** and whose address information is known, it can be used. However, by including the address information, the personal ID authenticated by another authentication organization can be used. In this way, the number of the personal IDs can be prevented from increasing, and the customers do not have to increase the personal IDs. Thus, management of the personal IDs becomes easy.
The signal input from the mobile phone **110** to the ATM **106** may also include the address information of the host computer **108.** Since the address information is included, the signal **107** can be sent to the host computer **108** even when the ATM **106** does not have address information of the host computer **108.**
Even when the address information is not included, if the personal ID is a personal ID which is authenticated by an authentication organization which is designated by the ATM **106** and whose address information is known, it can be used. However, by including the address information, the personal ID authenticated by another authentication organization can be shared. In this way, the number of the personal IDs can be prevented from increasing, and the customers do not have to increase the personal IDs. Thus, management of the personal IDs becomes easy.

The signal input from the ATM **106** to the host computer **108** may include the address information of the ATM **106.** By including the address information, a sending process to the host computer **108** and a receiving process from the host computer **108** can be separated. This allows selecting communication means other than bidirectional communication, and the range of choices for the communication means can be expanded.
In the present embodiment, the customer inserts the magnetic card to the ATM **106** and inputs the code number. If the code number is correct, the ATM **106** reads the signal **105** from the IC tag **101.** However, the signal **105** may be sent to the ATM **106** by an operation of the customer. If the signal **105** is sent upon the customer's operation, it is no longer necessary to send the personal ID when the signal **105** does not have to be sent. Thus, the security level of the personal information can be further enhanced than that in the case where the personal IDs are always transmitted.

In the present embodiment, the customer inserts the magnetic card to the ATM **106** and inputs the code number. If the code number is correct, the ATM **106** reads the signal **105** from the IC tag **101.** However, transmission of the personal ID from the IC tag **101** may be performed at a timing different from that of transmitting the ID information of the mobile phone **110** from the IC tag **101.** By sending the personal ID of the IC tag **101** only under a predetermined condition, the security level of the personal information can be further enhanced than that in the case where the personal IDs are always transmitted.
An example of transmitting the personal ID of the IC tag **101** at the different timing is as follows. First, the IC tag **101** transmits only the ID information of the mobile phone **110,** and the ATM **106** confirms the ID information transmitted from the mobile phone **110.** Then, upon a request from the ATM **106,** the IC tag **101** may transmit the personal ID of the IC tag **101.** In this way, the personal ID of the IC tag is not transmitted any longer when a mobile phone which does not transmit correct ID information due to misuse is being used. Thus, the security level of the personal information can be further enhanced.

As another example, the IC tag **101** receives the ID information of the mobile phone **110** first, and is triggered by it to transmit the personal ID of the IC tag **101.** Transmission of the ID information of the mobile phone **110** from the IC tag **101** to the ATM **106** may be before or after reception of the ID information of the mobile phone **110,** or at the same timing. This allows omitting receiving means of the ATM **106** from the mobile phone **110.**
The transmission of the personal ID from the IC tag **101** may be performed intermittently for a predetermined period of time once transmission is performed. In this way, it is ensured that the personal ID is sent to the ATM **106.**
In the present embodiment, the mobile phone **110** intermittently transmits the ID information. However, the transmission may be performed upon an operation of the customer in the case of emergency, in the case where timing has to be adjusted with respect to the receiving side, or the like. Similarly, when the communication between the IC tag **101,** the ATM **106,** and the mobile phone **110** has to be performed at a predetermined timing, the transmission of the ID information from the mobile phone **110** may be triggered by the IC tag **101** or the ATM **106.**

Further, transmission of predetermined information stored in the IC tag **101** such as the personal ID, the ID information of the mobile phone **110** and the like may be stopped by sending a predetermined signal to the IC tag **101.** This reduces a risk of misuse in the case of loss.
Moreover, predetermined information stored in the IC tag **101** such as the personal ID, the ID information of the mobile phone **110** and the like may be erased by sending a predetermined signal to the IC tag **101.** This reduces a risk of misuse in the case of loss.
Furthermore, predetermined information stored in the IC tag **101** such as the personal ID, the ID information of the mobile phone **110** and the like may be transferred to a predetermined device by sending a predetermined signal to the IC tag **101.** This reduces a risk of misuse in the case of loss, and also allows reuse of the information which has been stored in the IC tag **101.**

Further, transmission of predetermined information stored in the mobile phone **110** such as the ID information and the like may be stopped by sending a predetermined signal to the IC tag **101.** This reduces a risk of misuse in the case of loss.
Moreover, predetermined information stored in the mobile phone **110** such as the ID information and the like may be erased by sending a predetermined signal to the IC tag **101.** This reduces a risk of misuse in the case of loss.
Furthermore, predetermined information stored in the mobile phone 110 such as the ID information and the like may be transferred to a predetermined device by sending a predetermined signal to the IC tag **101.** This reduces a risk of misuse in the case of loss, and also allows reuse of the information which has been stored in the mobile phone **110.**

Alternatively, by sending a predetermined signal to the host computer **108,** authentication of the ATM **106** may be stopped, or may notify the ATM **106** of a misuse.
Further, in the case of loss or the like, a predetermined code number may be input for transmitting a predetermined signal to the IC tag **101,** the ATM **106,** or the mobile phone **110,** and the signal may be sent only when the code number is correct. This can prevent erroneous suspension of a predetermined function.
Further, the host computer **108** may be set to perform authentication only at a predetermined place. For example, the name of the store which is designated by the customer is previously registered to the host computer **108.** Authentication is not performed at a store which is not designated even when a predetermined signal is sent. In this way, misuse can be prevented.

Moreover, the host computer **108** may be set to perform authentication only within a predetermined time zone. For example, a time zone designated by the customer is previously registered to the host computer **108.** Authentication is not performed in time zones which are not designated even when a predetermined signal is sent. In this way, misuse can be prevented.
In the present embodiment, the signal sent from the IC tag **101** to the ATM **106** includes the ID information of the mobile phone **110** with the encrypted personal ID of the IC tag **101.** The ATM **106** reads the signal input from the IC tag **101,** and checks whether it has received the ID information of the mobile phone **110** which is intermittently transmitted. When the ATM **106** confirms reception of the ID information which matches the ID information received from the IC tag **101,** the ATM **106** decrypts the personal ID of the IC tag **101** using the ID information as a key. Then, the ATM **106** sends the decrypted personal ID of the IC tag **101** to the host computer **108.** However, the signal sent to the ATM **105** from the IC tag **101** may be sent to the mobile phone **110,** and the decrypted personal ID may be sent from the mobile phone **110** to the host computer **108.**

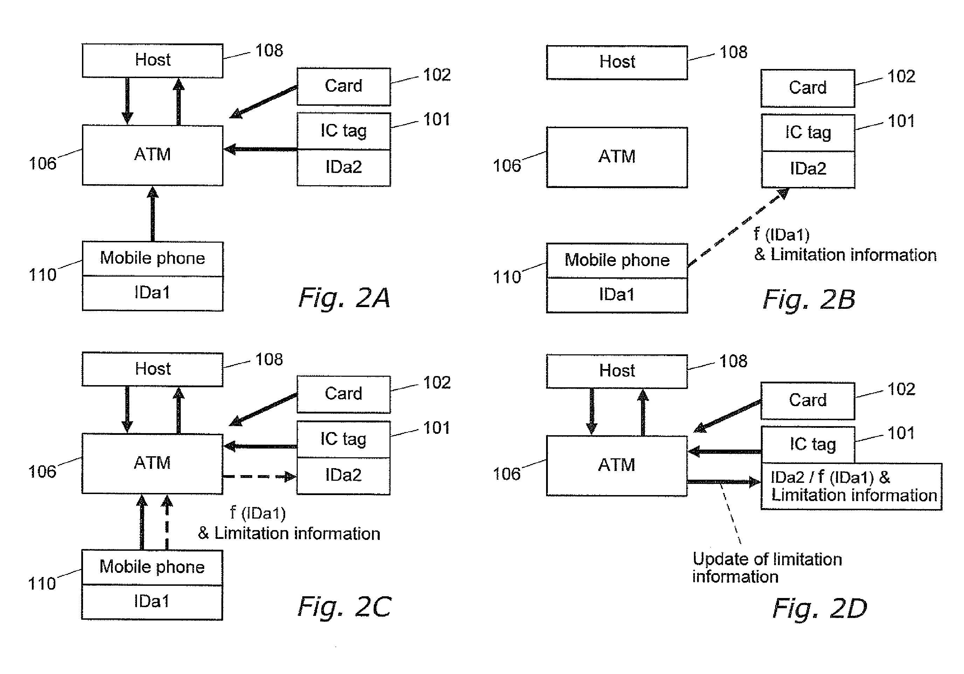

Thus, the personal ID of the IC tag **101** is no longer necessary to be sent to the ATM **105.** The personal ID of the IC tag **101** is just sent to the same host computer **108.** Thus, compared to the case where the personal ID is transmitted to the ATM which is used every time money is withdrawn, the security level of the personal information can be further enhanced.
The owner of the host computer **108** and the owner of the ATM **106** may be the same. However, if the owner of the host computer **108** and the owner of the ATM **106** are different, the burden of the owner of the ATM **106** can be reduced since the owner of the host computer **108** can carry out the authentication process for it.
In the present embodiment, withdrawal is permitted when there are both the mobile phone **110** and the IC tag **101** (see Figure **2A****).** However, withdrawal with either device may be permitted within a limited extent upon previous registration with both the mobile phone **110** and the IC tag **101.** Such an example will be described with reference to Figures **2B** through **2D****.** Herein, the limited extent refers to the amount of money which can be withdrawn, the number of times allowed to withdraw, the time zone in which withdrawal is permitted (for example, from 9AM to 10AM), the time period permitted to withdraw (for example, one day), the time limit for withdrawal (for example, until August 5), the area in which withdrawal is permitted, and the like.

With such a feature, even when, for example, the customer notices that he/she has forgotten the mobile phone **110** at the time he/she tries to withdraw the money, or the power supply of the mobile phone **110** is insufficient or the mobile phone **110** has a failure, or money is to be withdrawn in a place where the mobile phone **110** has to be turned off, the money can be withdrawn with only the IC tag **101** if the information is registered such that the withdrawal is permitted for just once with the upper limit of the amount of money being determined.
The registration may be performed by, for example, sending the ID information of the mobile phone **110,** or information obtained by arbitrarily calculating the ID information and the limitation information for limiting the range of use from the mobile phone **110** to the IC tag **101** (see Figures **2B** and **2C****).** The ATM **106** receives the information, and then sends the decrypted personal ID of the IC tag **101** to the host computer without receiving the ID information from the mobile phone **110** (see Figure **2D****).**
Updating of the limitation information shown in Figure **2D** means that, for example, in the case where the number of times to permit withdrawal is "once", if money is withdrawn using only the IC tag **101,** the limitation information is updated, and the number of times of withdrawal is updated to "zero".

In the present embodiment, the signal sent from the IC tag **101** to the ATM **106** includes the ID information of the mobile phone **110** with the encrypted personal ID of the IC tag **101.** The ATM **106** reads the signal input from the IC tag **101,** and checks whether it has received the ID information of the mobile phone **110** which is intermittently transmitted. When the ATM **106** confirms reception of the ID information which matches the ID information received from the IC tag **101,** the ATM **106** decrypts the personal ID of the IC tag **101** using the ID information as a key. Then, the ATM **106** sends the decrypted personal ID of the IC tag **101** to the host computer **108.** The host computer **108** searches whether the personal ID of the IC tag **101** is in a predetermined database of personal IDs. If the host computer **108** can confirm that the personal ID exists, it sends the signal to permit withdrawal to the ATM **106.** However, the host computer **108** may input the limitation information to the ATM later, and the ATM **106** may send the ID information of the mobile phone **110,** or information obtained by arbitrarily calculating the ID information and the limitation information for limiting the range of use to the IC tag **101** (see Figure **2C****).** Alternatively, the limitation information may be stored in the ATM or the host computer.

The method of registering can be any method other than the method of the present embodiment as long as it is performed after the user is authenticated.
In the case where the power supply of the mobile phone **110** is insufficient, the IC tag **101** may be notified by a sound or vibration.
Similarly, if previously registered, the limited withdrawal using only the mobile phone **110** may be permitted in the case of a failure of the IC tag **101.**
This allows, for example, asking other person to withdraw money with passing only the IC tag as the owner keeps the mobile phone **110.**
Functions of the mobile phone **110** may be transferred to an IC tag different from the IC tag **101** or a mobile phone within a limited extent if it is previously registered with both the mobile phone **110** and the IC tag **101.** Herein, the limited extent refers to the amount of money which can be withdrawn, the number of times allowed to withdraw, the time zone in which withdrawal is permitted (for example, from 9AM to 10AM), the time period permitted to withdraw (for example, one day or until August 5), the area in which withdrawal is permitted, and the like. In this way, even in the case where the mobile phone **110** cannot be used, another IC tag or mobile phone can carry out the functions for it within the limited extent so that money can be withdrawn within the limited extent without lowering the security level.

The extent of limitation may be varied depending upon the cases, for example, the case where there are both the mobile phone **110** and the IC tag, the case where there are a substituting device for the mobile phone **110** and the IC tag, the case where there is only the registered IC tag, and the case where there is an IC tag which is not registered.
In the present embodiment, the signal sent from the IC tag **101** to the ATM **106** includes the ID information of the mobile phone **110** with the encrypted personal ID of the IC tag **101.** The ATM **106** reads the signal input from the IC tag **101,** and checks whether it has received the ID information of the mobile phone **110** which is intermittently transmitted. When the ATM **106** confirms reception of the ID information which matches the ID information received from the IC tag **101,** the ATM **106** decrypts the personal ID of the IC tag **101** using the ID information as a key. Then, the ATM **106** sends the decrypted personal ID of the IC tag **101** to the host computer **108.** However, the signal sent from the IC tag **101** to the ATM **106** may not include the ID information of the mobile phone **110.** The ATM **106** may receive the ID information of any mobile phone and decrypts it to send to the host computer. If there are a number of mobile phones around the ATM **106,** it may take some time for the ATM **106** to obtain the ID information of the mobile phone **110.** However, in this way, the ID information of the mobile phone **110** is no longer necessary to be stored in the IC tag **101,** so the security level can be enhanced in terms of protecting the ID information of the mobile phone.

In the present embodiment, the personal ID of the IC tag **101** is decrypted using the ID information of the mobile phone as a key, and the decrypted personal ID of the IC tag **101** is sent to the host computer. However, the present invention is not limited to such an example, and the withdrawal may be permitted by simply having both the ID of the mobile phone and the signal sent from the IC tag. In this way, decrypting means is no longer necessary, and the system can be simplified.
In the present embodiment, the signal sent from the IC tag **101** to the ATM **106** includes the ID information of the mobile phone **110** with the encrypted personal ID of the IC tag **101.** The ATM **106** reads the signal input from the IC tag **101,** and checks whether it has received the ID information of the mobile phone **110** which is intermittently transmitted. When the ATM **106** confirms reception of the ID information which matches the ID information received from the IC tag **101,** the ATM **106** decrypts the personal ID of the IC tag **101** using the ID information as a key. Then, the ATM **106** sends the decrypted personal ID of the IC tag **101** to the host computer **108.** However, the signal sent from the IC tag **101** to the ATM **108** may include mail address information or a telephone number of the mobile phone **110.** When the ATM **108** receives the signal output from the IC tag, it may send mail to or call the mobile phone **110,** and upon a predetermined receiving operation (clicking a predetermined button or the like) on the mobile phone **110,** withdrawal may be permitted. In this way, decrypting means is no longer necessary, and the system can be simplified.

### (Second embodiment)

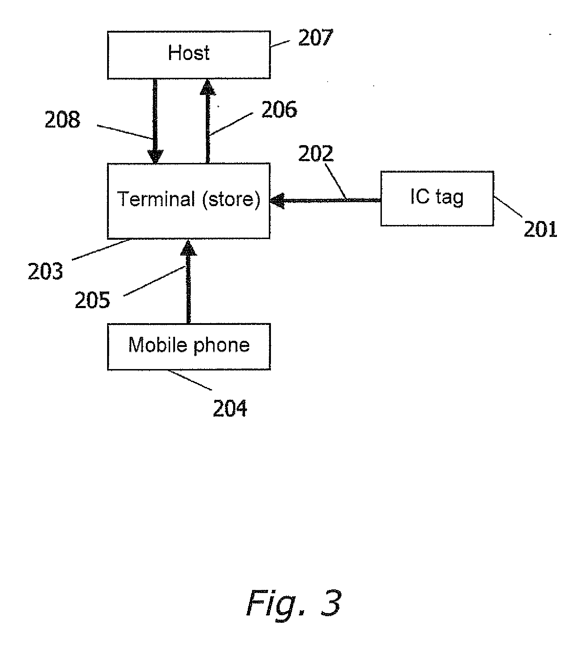

Hereinafter, another embodiment of the present invention is described with reference to the drawings. Figure **3** shows a structure of an authentication system according to another embodiment of the present invention. Figure **3** illustrates a method for settling for shopping at a store or the like. In Figure **3****,** reference numeral **201** denotes an IC tag, reference numeral **203** denotes a terminal, reference numeral **204** denotes a mobile phone, and reference numeral **207** denotes a host computer.

Now, the authentication system in the second embodiment is described. For purchasing a product, a customer passes the IC tag **201** to the store. A form of the IC tag **201** may be a card or the like with an IC tag being embedded. The store reads a signal **202** by the terminal **203** having a reader function for the IC tag **201.**
The signal **202** includes a personal ID of the IC tag **201** which is encrypted, and also ID information of the mobile phone **204.** The terminal **203** checks whether it has received the ID information of the mobile phone **204.**
In general, mobile phones have a function to switch base stations as they move so that call is not interrupted while they are moving, and intermittently transmit a signal to notify their current positions to the base stations.

In the present embodiment, such a signal is utilized. The signal transmitted by the mobile phone includes at least ID information specific to the mobile phone **204.** The receiving sensitivity of the terminal **203** for the ID information of the mobile phone is suppressed to be lower than the receiving sensitivity of the base stations, and the terminal **203** can receive the ID information only from the mobile phones within the range of about a few meters.
If the terminal **203** confirms reception of the ID information which matches the ID information received from the IC tag **201 (205),** the personal ID of the IC tag **201** is decrypted using the ID information as a key. Then, the terminal **203** sends the decrypted personal ID of the IC tag **201** to the host computer **207 (206).** The host computer **207** searches whether the personal ID of the IC tag **201** exists in a predetermined database of personal IDs. If it is confirmed to exist, the host computer **207** sends a signal to confirm authentication to the terminal **203 (208).**

As described above, by the authentication system of the present embodiment, the personal ID is decrypted using two devices, i.e., the IC tag **201** and the mobile phone **204.** Thus, security level can be improved.
Furthermore, since the mobile phone **204** is used, original functions of mobile phones, such as a function for transmitting signal or the power supply can be utilized, and thus, authentication of an individual can be performed with a simple structure. Further, since the ID information intermittently transmitted from the mobile phone **204** is utilized, there is no need to request the mobile phone **204** to transmit the ID information from the terminal **203,** and thus, a time period necessary for authentication is reduced.
Usually, if the number of so-called keys is increased in order to improve the level of security, the operations become complicated, and may impair convenience of the customer. However, in the present embodiment, the ID information which is intermittently transmitted from the mobile phone **204** is used so the authentication can be performed without impairing convenience of the customer.

In the present embodiment, the IC tag **201** is formed into a card. However, it may be in any form such as a key ring, a bracelet, a watch with the IC tag being embedded, or the like.
Since the IC tag cannot complete the authentication by itself, a plurality of IC tags may be provided in view of the case of losing or failing to bring the IC tag.
In the present embodiment, a signal of the mobile phone for notifying base stations of its position is used. However, any signal other than the signal for notifying base stations of the position can be used as long as it is intermittently transmitted at a frequency of once in about a few seconds or more. By employing another signal, a weak signal which reaches to a range of about a few meters can be used so the power consumption of the mobile phone can be reduced by that amount.
In the present embodiment, the terminal **203** decrypts the personal ID of the IC tag **201** using the ID information received from the mobile phone **204** as a key. However, as long as the host computer **207** already knows or can recognize, a signal obtained by arbitrarily calculating the signal **205** received from the mobile phone **204** and the signal **202** received from the IC tag **201** may be sent to the host computer **207.** Sending and receiving between the host computer **207** and the terminal **203** may be in any form such as wired, wireless, one-way communication, bidirectional communication, or the like.

In the present embodiment, if the customer does not carry the mobile phone **204,** for example, withdrawal is not permitted. However, if some money is deposited to the card having the IC tag in the form of electronic money or the like, the settlement may be performed within that range.
In the present embodiment, the decrypted personal ID of the IC tag **201** is sent to the host computer **207.** However, the signal may be sent as it remains encrypted, and may be decrypted at the host computer **207.**
The signal input from the IC tag **201** to the terminal **203** may include address information of the host computer **207.** Since the address information is included, the signal **206** can be sent to the host computer **207** even when the terminal **203** does not have address information of the host computer **207.**

Even if the address information is not included, if the personal ID is a personal ID which is authenticated by an authentication organization which is designated by the terminal **203** and has known address information, it can be used. However, by including the address information, the personal ID authenticated by another authentication organization can be used. In this way, the number of the personal IDs can be prevented from increasing, and the customers do not have to increase the personal IDs. Thus, management of the personal IDs becomes easy.
The signal input from the mobile phone **204** to the terminal **203** may also include the address information of the host computer **207.** Since the address information is included, the signal **206** can be sent to the host computer **207** even when the terminal **203** does not have address information of the host computer **207.**
Even if the address information is not included, if the personal ID is a personal ID which is authenticated by an authentication organization which is designated by the terminal **203** and has known address information, it can be used. However, by including the address information, the personal ID authenticated by another authentication organization can be used. In this way, the number of the personal IDs can be prevented from increasing, and the customers do not have to increase the personal IDs. Thus, management of the personal IDs becomes easy.

The signal input from the terminal **203** to the host computer **207** may include the address information of the terminal **203.** Since the address information is included, a sending process to the host computer **207** and a receiving process from the host computer **207** can be separated. This allows selecting communication means other than bidirectional communication, and the range of choices for the communication means can be expanded.
Further, the signal input from the host computer **207** to the terminal **203** may include address information of an object to be billed. By including the address information, the terminal **203** can quickly bill.
In the present embodiment, the terminal **203** having a reader function reads the signal **202.** However, the signal **202** may be sent to the terminal **203** by an operation of the customer. If the signal **202** is sent upon the customer's operation, it is no longer necessary to send the personal ID when the signal **202** does not have to be sent. Thus, the security level of the personal information can be further enhanced than that in the case where the personal IDs are always transmitted.

The terminal **203** may receive only a signal from the IC tag **201** within a range of about a few meters. In this way, crossed line with signals sent from other IC tags can be prevented.
In the present embodiment, the terminal **203** having a reader function reads the signal **202.** However, transmission of the personal ID from the IC tag **201** may be performed at a timing different from that of transmitting the ID information of the mobile phone **204** from the IC tag **201.** By sending the personal ID of the IC tag **201** only under a predetermined condition, the security level of the personal information can be further enhanced than that in the case where the personal IDs are always transmitted.
An example of transmitting the personal ID of the IC tag **201** at the different timing is as follows. First, the IC tag **201** transmits only the ID information of the mobile phone **204,** and the terminal **203** confirms the ID information transmitted from the mobile phone **204.** Then, upon a request from the terminal **203,** the IC tag **201** may transmit the personal ID of the IC tag **201.** In this way, the personal ID of the IC tag is not transmitted any longer when a mobile phone which does not transmit correct ID information due to misuse is being used. Thus, the security level of the personal information can be further enhanced.

As another example, the IC tag **201** receives the ID information of the mobile phone **204** first, and is triggered by it to transmit the personal ID of the IC tag **201.** Transmission of the ID information of the mobile phone **204** from the IC tag **201** may be before or after reception of the ID information of the mobile phone **204,** or at the same timing. This allows omitting receiving means of the terminal **203** which is for receiving from the mobile phone **204.**
The transmission of the personal ID from the IC tag **201** may be performed intermittently for a predetermined period of time once transmission is performed. In this way, it is ensured that the personal ID can be sent to the terminal **203.**
In the present embodiment, the mobile phone **204** intermittently transmits the ID information. However, transmission may be performed upon an operation of the customer in the case of emergency, in the case where timing has to be adjusted with respect to the receiving side, or the like. Similarly, when the communication between the IC tag **201,** the terminal **203,** and the mobile phone **204** has to be performed at a predetermined timing, transmission of the ID information from the mobile phone **204** may be triggered by the IC tag **201** or the terminal **203.**

Further, transmission of predetermined information stored in the IC tag **201** such as the personal ID, the ID information of the mobile phone **204** and the like may be stopped by sending a predetermined signal to the IC tag **201.** This reduces a risk of misuse in the case of loss.
Moreover, predetermined information stored in the IC tag **201** such as the personal ID, the ID information of the mobile phone **204** and the like may be erased by sending a predetermined signal to the IC tag **201.** This reduces a risk of misuse in the case of loss.
Furthermore, predetermined information stored in the IC tag **201** such as the personal ID, the ID information of the mobile phone **204** and the like may be transferred to a predetermined device by sending a predetermined signal to the IC tag **201.** This reduces a risk of misuse in the case of loss, and also allows reuse of the information which has been stored in the IC tag **201.**

Further, transmission of the ID information and the like of the mobile phone **204** may be stopped by sending a predetermined signal to the IC tag **201.** This reduces a risk of misuse in the case of loss.
Moreover, predetermined information stored in the mobile phone **204** such as the ID information and the like may be erased by sending a predetermined signal to the IC tag **201.** This reduces a risk of misuse in the case of loss.
Furthermore, predetermined information stored in the mobile phone **204** such as the ID information and the like may be transferred to a predetermined device by sending a predetermined signal to the IC tag **201**. This reduces a risk of misuse in the case of loss, and also allows reuse of the information which has been stored in the mobile phone **204.**

Alternatively, by sending a predetermined signal to the host computer **207,** authentication of the terminal **203** may be stopped, or may notify the terminal **203** of a misuse.
Further, in the case of loss or the like, a predetermined code number may be input for transmitting a predetermined signal to the IC tag **201,** the terminal **203,** or the mobile phone **204,** and the signal may be sent only when the code number is correct. This can prevent erroneous suspension of a predetermined function.
Further, the host computer **207** may be set to perform authentication only at a predetermined place. For example, the name of the store which is designated by the customer is previously registered to the host computer **207.** Authentication is not performed at a store which is not designated even when a predetermined signal is sent. In this way, misuse can be prevented.

Moreover, the host computer **207** may be set to perform authentication only within a predetermined time zone. For example, a time zone designated by the customer is previously registered to the host computer **207.** Authentication is not performed in time zones which are not designated even when a predetermined signal is sent. In this way, misuse can be prevented.
In the present embodiment, the signal sent from the IC tag **201** to the terminal 203 includes the ID information of the mobile phone **204** with the encrypted personal ID of the IC tag **201.** The terminal **203** reads the signal input from the IC tag **201,** and checks whether it has received the ID information of the mobile phone **204** which is intermittently transmitted. When the terminal **203** confirms reception of the ID information which matches the ID information received from the IC tag **201,** the terminal **203** decrypts the personal ID of the IC tag **201** using the ID information as a key. Then, the terminal **203** sends the decrypted personal ID of the IC tag **201** to the host computer **207.** However, the signal sent to the terminal **203** from the IC tag **201** may be sent to the mobile phone **204,** and the decrypted personal ID may be sent from the mobile phone **204** to the host computer **207.**

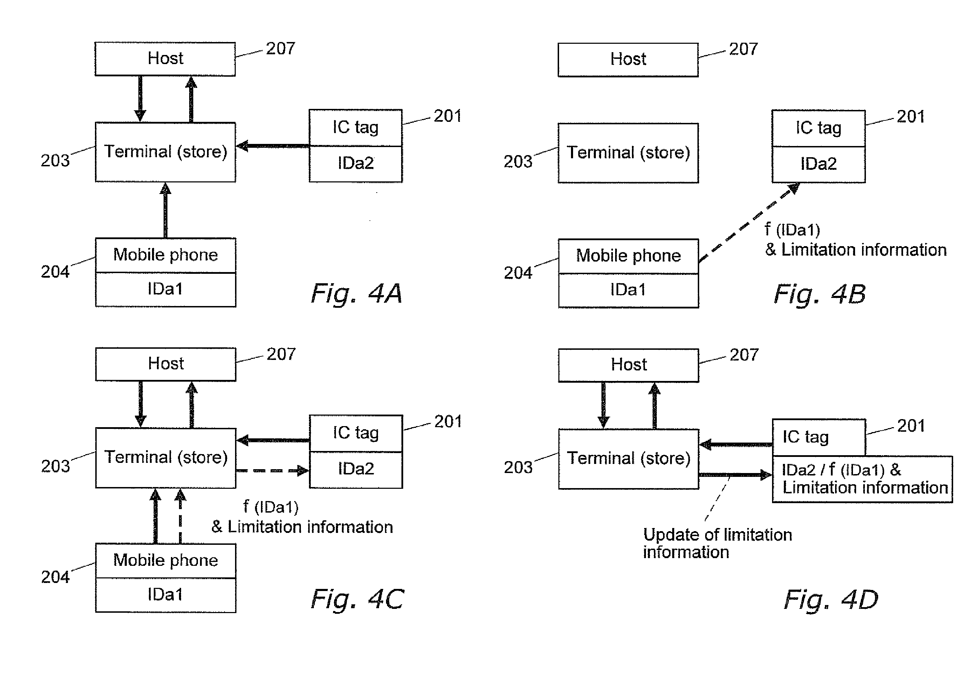

Thus, the personal ID of the IC tag **201** is no longer necessary to be sent to the terminal **203.** The personal information of the IC tag **201** is just sent to the host computer **207.** Thus, compared to the case where the personal ID is transmitted to each terminal every time for shopping, the security level of the personal information can be further enhanced.
In the present embodiment, settlement is permitted when there are both the mobile phone **204** and the IC tag **201** (see Figure **4A****).** However, settlement with either device may be permitted within a limited extent upon previous registration with both the mobile phone **204** and the IC tag **201.** Such an example will be described with reference to Figures **4B** through **4D****.** Herein, the limited extent refers to the amount of money which can be settled, the number of times allowed to settle, the time zone in which settlement is permitted (for example, between 9AM to 10AM), the time period permitted to settle (for example, one day), the time limit for settlement (for example, until August 5), the area in which settlement is permitted, and the like.

With such a feature, even when, for example, the customer notices that he/she has forgotten the mobile phone **204** at the time he/she tries to settle, or the power of the mobile phone **204** is insufficient or the mobile phone **204** has a failure, or settlement is to be performed in a place where the mobile phone **204** has to be turned off, the settlement can be performed with only the IC tag **201** if the information is registered such that the settlement is permitted for just once with the upper limit of the amount of money being determined.
The registration may be performed by, for example, sending the ID information of the mobile phone **204,** or information obtained by arbitrarily calculating the ID information and the limitation information for limiting the range of use from the mobile phone **204** to the IC tag **201** (see Figures **4B** or **4C****).** The terminal **203** receives the information, and then sends the decrypted personal ID of the IC tag **201** to the host computer without receiving the ID information from the mobile phone **204** (see Figure **4D****.**
Updating of the limitation information shown in Figure **4D** means that, for example, in the case where the number of times to permit settlement is "once", if withdrawal is performed using only the IC tag **201,** the limitation information is updated, and the number of times of settlement is updated to "zero".

In the present embodiment, the signal sent from the IC tag **201** to the terminal **203** includes the ID information of the mobile phone **204** with the encrypted personal ID of the IC tag **201.** The terminal **203** reads the signal input from the IC tag **201,** and checks whether it has received the ID information of the mobile phone **204** which is intermittently transmitted. When the terminal **203** confirms reception of the ID information which matches the ID information received from the IC tag **201,** the terminal **203** decrypts the personal ID of the IC tag **201** using the ID information as a key. Then, the terminal **203** sends the decrypted personal ID of the IC tag **201** to the host computer **207.** The host computer **207** searches whether the personal ID of the IC tag **201** is in a predetermined database of personal IDs. If the host computer **207** can confirm that the personal ID exists, it sends the signal to permit settlement to the terminal **203.** However, the host computer **207** may input the limitation information to the terminal later, and the terminal **203** may send the ID information of the mobile phone **204,** or information obtained by arbitrarily calculating the ID information and the limitation information for limiting the range of use to the IC tag **201** (see Figure **4C****).** Alternatively, the limitation information may be stored in the terminal or the host computer.

The method of registering can be any method other than the method of the present embodiment as long as it is performed after the user is authenticated.
In the case where the power supply of the mobile phone **204** is insufficient, the IC tag **201** may be notified by a sound or vibration.
Similarly, if previously registered, the limited settlement using only the mobile phone **204** may be permitted in the case of a failure of the IC tag **201.**
This allows, for example, asking other person to settle with passing only the IC tag as the owner keeps the mobile phone **204.**
Functions of the mobile phone **204** may be transferred to an IC tag different from the IC tag **201** or a mobile phone within a limited extent if it is previously registered with both the mobile phone **204** and the IC tag **201.** Herein, the limited extent refers to the amount of money which can be settled, the number of times allowed to settle, the time zone in which settlement is permitted (for example, between 9AM to 10AM), the time period permitted to settle (for example, for one day or until August 5), the area in which settlement is permitted, and the like. In this way, even in the case where the mobile phone **204** cannot be used, another IC tag or mobile phone can carry out the functions for it within the limited extent so that settlement can be performed within the limited extent without lowering the security level.

The extent of limitation may be varied depending upon the cases, for example, the case where there are both the mobile phone **204** and the IC tag, the case where there are a substituting device for the mobile phone **204** and the IC tag, the case where there is only the registered tag, and the case where there is an IC tag which is not registered.
In the present embodiment, the signal sent from the IC tag **201** to the terminal **203** includes the ID information of the mobile phone **204** with the encrypted personal ID of the IC tag **201.** The terminal **203** reads the signal input from the IC tag **201,** and checks whether it has received the ID information of the mobile phone **204** which is intermittently transmitted. When the terminal **203** confirms reception of the ID information which matches the ID information received from the IC tag **201,** the terminal **203** decrypts the personal ID of the IC tag **201** using the ID information as a key. Then, the terminal **203** sends the decrypted personal ID of the IC tag **201** to the host computer **207.** However, the signal sent from the IC tag **201** to the terminal **203** may not include the ID information of the mobile phone **204.** The terminal **203** may receive the ID information of any mobile phone and decrypts it to send to the host computer. If there are a number of mobile phones around the terminal **203,** it may take some time for the terminal **203** to obtain the ID information of the mobile phone **204.** However, in this way, the ID information of the mobile phone is no longer necessary to be stored in the IC tag **201,** so the security level can be enhanced in terms of protecting the ID information of the mobile phone.

In the present embodiment, the personal ID of the IC tag **201** is decrypted using the ID information of the mobile phone as a key, and the decrypted personal ID of the IC tag **201** is sent to the host computer. However, the present invention is not limited to such an example, and the settlement may be permitted by simply having both the ID of the mobile phone and the signal sent from the IC tag. In this way, decrypting means is no longer necessary, and the system can be simplified.
In the present embodiment, the signal sent from the IC tag **201** to the terminal **203** includes the ID information of the mobile phone **204** with the encrypted personal ID of the IC tag **201.** The terminal **203** reads the signal input from the IC tag **201,** and checks whether it has received the ID information of the mobile phone **204** which is intermittently transmitted. When the terminal **203** confirms reception of the ID information which matches the ID information received from the IC tag **201,** the terminal **203** decrypts the personal ID of the IC tag **201** using the ID information as a key. Then, the terminal **203** sends the decrypted personal ID of the IC tag **201** to the host computer **207.** However, the signal sent from the IC tag **201** to the terminal **203** may include mail address information or a telephone number of the mobile phone **204.** When the terminal **203** receives the signal output from the IC tag, it may send mail to or call the mobile phone **204,** and upon a predetermined receiving operation (clicking a predetermined button or the like) on the mobile phone **204,** settlement may be permitted. In this way, decrypting means is no longer necessary, and the system can be simplified.

### (Third embodiment)

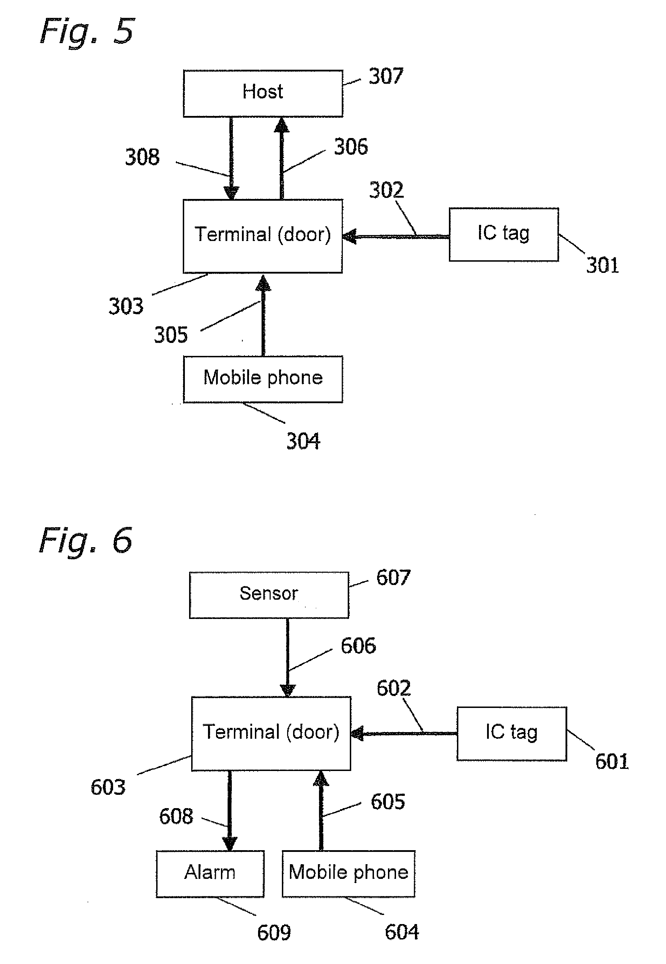

Hereinafter, another embodiment of the present invention is described with reference to the drawings. Figure **5** shows a structure of an authentication system according to another embodiment of the present invention. Figure **5** illustrates a method of authentication for entering a building or a car. In Figure **5****,** reference numeral **301** denotes an IC tag, reference numeral **303** denotes a terminal, reference numeral **304** denotes a mobile phone, and reference numeral **307** denotes a host computer.

Now, the authentication system in the third embodiment is described. A person who wants to enter holds the IC tag **301** over the terminal **303** of the door. A form of the IC tag **301** may be a card or the like with an IC tag being embedded. The door reads a signal **302** by the terminal **303** having a reader function for the IC tag **301.**
The signal **302** includes a personal ID of the IC tag **301** which is encrypted, and also ID information of the mobile phone **304.** The terminal **303** checks whether it has received the ID information of the mobile phone **304.**
In general, mobile phones have a function to switch base stations as they move so that call is not interrupted while they are moving, and intermittently transmit a signal to notify their current positions to the base stations.

In the present embodiment, such a signal is utilized. The signal transmitted by the mobile phone includes at least ID information specific to the mobile phone **304.** The receiving sensitivity of the terminal **303** for the ID information of the mobile phone is suppressed to be lower than the receiving sensitivity of the base stations, and the terminal **303** can receive the ID information only from the mobile phones within the range of about a few meters.
If the terminal **303** confirms reception of the ID information which matches the ID information received from the IC tag **301 (305),** the personal ID of the IC tag **301** is decrypted using the ID information as a key. Then, the terminal **303** sends the decrypted personal ID of the IC tag **301** to the host computer **307 (306).** The host computer **307** searches whether the personal ID of the IC tag **301** exists in a predetermined database of personal IDs. If it is confirmed to exist, the host computer **307** sends a signal to confirm authentication to the terminal **303 (308),** and the door is unlocked.

As described above, by the authentication system of the present embodiment, the personal ID is decrypted using two devices, i.e., the IC tag **301** and the mobile phone **304.** Thus, security level can be improved.
Furthermore, since the mobile phone **304** is used, original functions of mobile phones, such as a function for transmitting signal or the power supply can be utilized, and thus, authentication of an individual can be performed with a simple structure. Further, since the ID information intermittently transmitted from the mobile phone **304** is utilized, there is no need to request the mobile phone **304** to transmit the ID information from the terminal **303,** and thus, a time period necessary for authentication is reduced.
Usually, if the number of so-called keys is increased in order to improve the level of security, the operations become complicated, and may impair convenience of the person who wants to enter. However, in the present embodiment, the ID information which is intermittently transmitted from the mobile phone **304** is used so the authentication can be performed without impairing convenience of the person who wants to enter.

In the present embodiment, the IC tag **301** is formed into a card. However, it may be in any form such as a key ring, a bracelet, a watch with the IC tag being embedded, or the like.
Since the IC tag cannot complete the authentication by itself, a plurality of IC tags may be provided in view of the case of losing or failing to bring the IC tag.
In the present embodiment, a signal of the mobile phone for notifying base stations of its position is used. However, any signal other than the signal for notifying base stations of the position can be used as long as it is intermittently transmitted at a frequency of once in about a few seconds or more. By employing another signal, a weak signal which reaches only in a range of about a few meters can be used so the power consumption of the mobile phone can be reduced by that amount.
In the present embodiment, the terminal **303** decrypts the personal ID of the IC tag **301** using the ID information received from the mobile phone **304** as a key. However, as long as the host computer **307** already knows or can recognize, a signal obtained by arbitrarily calculating the signal **305** received from the mobile phone **304** and the signal **302** received from the IC tag **301** may be sent to the host computer **307.** Sending and receiving between the host computer **307** and the terminal **303** may be in any form such as wired, wireless, one-way communication, bidirectional communication, or the like.

In the present embodiment, the decrypted personal ID of the IC tag **301** is sent to the host computer **307.** However, the signal may be sent as it remains encrypted, and may be decrypted at the host computer **307.**
In the present embodiment, the terminal **303** having a reader function reads the signal **302.** However, the signal **302** may be sent to the terminal **303** by an operation of the person who wants to enter. If the signal **302** is sent upon the operation by the person who wants to enter, it is no longer necessary to send the personal ID when the signal **302** does not have to be sent. Thus, the security level of the personal information can be further enhanced than that in the case where the personal IDs are always transmitted.
The terminal **303** may receive only a signal from the IC tag **301** within a range of about a few meters. In this way, crossed line with signals sent from other IC tags can be prevented.

In the present embodiment, the terminal **303** having a reader function reads the signal **302.** However, transmission of the personal ID from the IC tag **301** may be performed at timing different from that of transmitting the ID information of the mobile phone **304** from the IC tag **301.** By sending the personal ID of the IC tag **301** only under a predetermined condition, the security level of the personal information can be further enhanced than that in the case where the personal IDs are always transmitted.
An example of transmitting the personal ID of the IC tag **301** at the different timing is as follows. First, the IC tag **301** transmits only the ID information of the mobile phone **304,** and the terminal **303** confirms the ID information transmitted from the mobile phone **304.** Then, upon a request from the terminal **203,** the IC tag **301** may transmit the personal ID of the IC tag **301**. In this way, the personal ID of the IC tag is not transmitted any longer when a mobile phone which does not transmit correct ID information due to misuse is being used. Thus, the security level of the personal information can be further enhanced.

As another example, the IC tag **301** receives the ID information of the mobile phone **304** first, and is triggered by it to transmit the personal ID of the IC tag **301.** Transmission of the ID information of the mobile phone **304** from the IC tag **301** may be before or after reception of the ID information of the mobile phone **304,** or at the same timing. This allows omitting receiving means of the terminal **303** which is for receiving from the mobile phone **304.**
The transmission of the personal ID from the IC tag **301** may be performed intermittently for a predetermined period of time once transmission is performed. In this way, it is ensured that the personal ID can be sent to the terminal **303.**
In the present embodiment, the mobile phone **304** intermittently transmits the ID information. However, transmission may be performed upon an operation of the person who wants to enter in the case of emergency, in the case where timing has to be adjusted with respect to the receiving side, or the like. Similarly, when the communication between the IC tag **301,** the terminal **303,** and the mobile phone **304** has to be performed at a predetermined timing, transmission of the ID information from the mobile phone **304** may be triggered by the IC tag **301** or the terminal **303.**

Further, transmission of predetermined information stored in the IC tag **301** such as the personal ID, the ID information of the mobile phone **304** and the like may be stopped by sending a predetermined signal to the IC tag **301.** This reduces a risk of misuse in the case of loss.
Moreover, predetermined information stored in the IC tag **301** such as the personal ID, the ID information of the mobile phone **304** and the like may be erased by sending a predetermined signal to the IC tag **301.** This reduces a risk of misuse in the case of loss.
Furthermore, predetermined information stored in the IC tag **301** such as the personal ID, the ID information of the mobile phone **304** and the like may be transferred to a predetermined device by sending a predetermined signal to the IC tag **301.** This reduces a risk of misuse in the case of loss, and also allows reuse of the information which has been stored in the IC tag **301.**

Further, transmission of the ID information and the like of the mobile phone **304** may be stopped by sending a predetermined signal to the IC tag **301.** This reduces a risk of misuse in the case of loss.
Moreover, predetermined information stored in the mobile phone **304** such as the ID information and the like may be erased by sending a predetermined signal to the IC tag **301.** This reduces a risk of misuse in the case of loss.
Furthermore, predetermined information stored in the mobile phone **304** such as the ID information and the like may be transferred to a predetermined device by sending a predetermined signal to the IC tag **301.** This reduces a risk of misuse in the case of loss, and also allows reuse of the information which has been stored in the mobile phone **304.**

Alternatively, by sending a predetermined signal to the host computer **207,** authentication of the terminal **303** may be stopped, or may notify the terminal **303** of a misuse.
Further, in the case of loss or the like, a predetermined code number may be input for transmitting a predetermined signal to the IC tag **301,** the terminal **303,** or the mobile phone **304,** and the signal may be sent only when the code number is correct. This can prevent erroneous suspension of a predetermined function.
Moreover, the host computer **307** may be set to perform authentication only within a predetermined time zone. For example, a time zone designated by the customer is previously registered to the host computer **307.** Authentication is not performed in time zones which are not designated even when a predetermined signal is sent. In this way, misuse can be prevented.

In the present embodiment, the signal sent from the IC tag **301** to the terminal **303** includes the ID information of the mobile phone **304** with the encrypted personal ID of the IC tag **301.** The terminal **303** reads the signal input from the IC tag **301,** and checks whether it has received the ID information of the mobile phone **304** which is intermittently transmitted. When the terminal **303** confirms reception of the ID information which matches the ID information received from the IC tag **301,** the terminal **303** decrypts the personal ID of the IC tag **301** using the ID information as a key. Then, the terminal **303** sends the decrypted personal ID of the IC tag **301** to the host computer **307.** However, the signal sent to the terminal **303** from the IC tag **301** may be sent to the mobile phone **304,** and the decrypted personal ID may be sent from the mobile phone **304** to the host computer **307.**
For room entry in the case of loss of the IC tag **301** and/or the mobile phone **304,** means for unlocking or locking which uses a code number may be provided.

Further, a locking system for preventing failing to bring the IC tag **301** and/or the mobile phone **304** may also be provided. Figure **6** is a diagram illustrating a locking system used when a person leave a building or a car. In Figure **6****,** reference numeral **601** denotes an IC tag, reference numeral **603** denotes a terminal, reference numeral **604** denotes a mobile phone, reference numeral **607** denotes a sensor, and reference numeral **609** denotes an alarm. The locking system is described below.
For leaving a building, first, the sensor **607** senses a person, and sends a signal **606** to the terminal **603.** Then, the terminal **603** confirms whether a signal **602** is input from a predetermined IC tag **601.** If the signal has not been input after a predetermined period of time elapsed, the terminal **603** sends a signal **608** to the alarm. The alarm **609** transmits warning. To the terminal **603**, IC tags of members who need the locking systems are previously registered.
The sensor **607** may be of a type detecting a temperature, a type detecting a weight, or a type detecting interruption of light.

The signal **602** includes the ID information of the mobile phone **604** with the encrypted personal ID of the IC tag **601.** If the signal **602** is sent from the IC tag **601,** the terminal **603** checks whether it has received the ID information 605 of the mobile phone **604.**
For sending the signal **602,** for example, a person who wants to exit holds the IC tag **601** over the terminal **603.** The terminal **603** of the door, which has a reader function for the IC tag **601,** reads the signal **602.**
The terminal **603** confirms whether the signal **605** is input from the mobile phone **604.** If the signal has not been input after a predetermined period of time elapsed, the terminal **603** sends a signal **608** to the alarm. The alarm **609** transmits warning. If the signal **605** has been input, the terminal **603** locks the door.

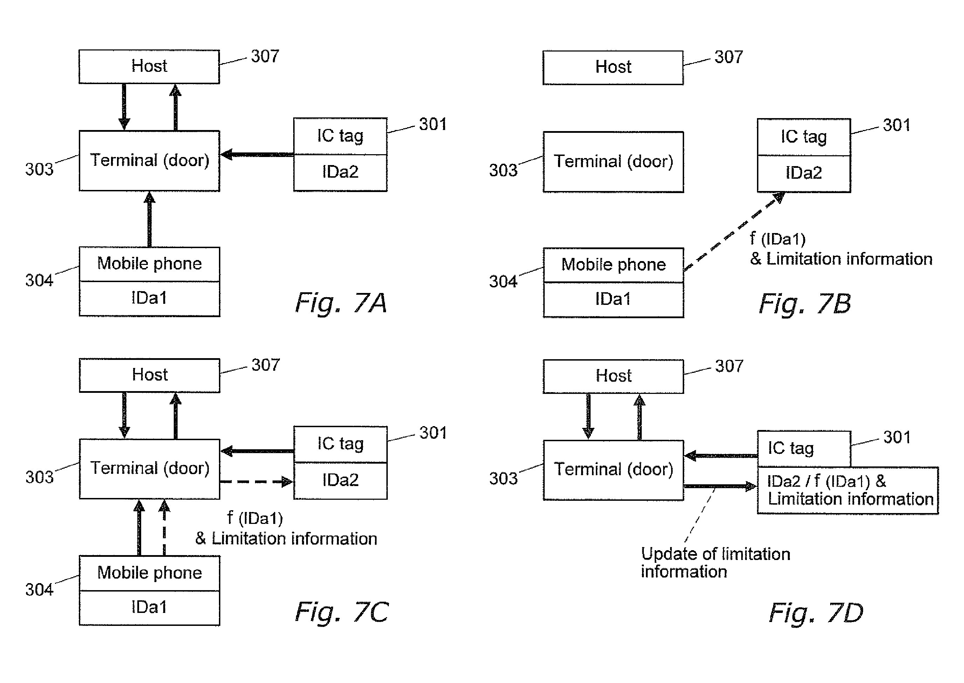

The signal **605** may be sent from the mobile phone **604** intermittently, or may be sent upon an operation by the person who wants to exit.
To the terminal **603,** IC tags of members who need the locking systems are previously registered. The ID information of the mobile phones may be registered together. If the ID information of the mobile phones is registered, the terminal **603** has to receive just the personal ID of the IC tag **601** from the IC tag **601.** Thus, a time period necessary for locking can be reduced.
As described above, the locking system of the present embodiment ensure that the IC tag **601** and/or the mobile phone **604** is carried when the person leaves.
In the present embodiment, unlocking is permitted when there are both the mobile phone **304** and the IC tag **301** (see Figure **7A****).** However, unlocking with either device may be permitted within a limited extent upon previous registration with both the mobile phone **304** and the IC tag **301.** Such an example will be described with reference to Figures **7B** through **7D****.** Herein, the limited extent refers to the number of times allowed to unlock, the time zone in which unlocking is permitted (for example, between 9AM to lOAM), the time period permitted to unlock (for example, one day), the time limit for unlocking (for example, until August 5), and the like.

With such a feature, even when, for example, the person who wants to enter notices that he/she has forgotten the mobile phone **304** at the time he/she tries to unlock, or the power of the mobile phone **304** is insufficient or the mobile phone **304** has a failure, or unlocking is to be performed in a place where the mobile phone **304** has to be turned off, the unlocking can be performed with only the IC tag **301** if the information is registered such that the unlocking is permitted for just once with the upper limit of the amount of money being determined.
The registration may be performed by, for example, sending the ID information of the mobile phone **304,** or information obtained by arbitrarily calculating the ID information and the limitation information for limiting the range of use from the mobile phone **304** to the IC tag **301** (see Figures **7B** or **7C****).** The terminal **303** receives the information, and then sends the decrypted personal ID of the IC tag **301** to the host computer without receiving the ID information from the mobile phone **304** (see Figure **7D****).**
Updating of the limitation information shown in Figure **7D** means that, for example, in the case where the number of times to permit unlocking is "once", if unlocking is performed using only the IC tag **301,** the limitation information is updated, and the number of times of unlocking is updated to "zero".

In the present embodiment, the signal sent from the IC tag **301** to the terminal **303** includes the ID information of the mobile phone **304** with the encrypted personal ID of the IC tag **301.** The terminal **303** reads the signal input from the IC tag **301,** and checks whether it has received the ID information of the mobile phone **304** which is intermittently transmitted. When the terminal **303** confirms reception of the ID information which matches the ID information received from the IC tag **301,** the terminal **303** decrypts the personal ID of the IC tag **301** using the ID information as a key. Then, the terminal **303** sends the decrypted personal ID of the IC tag **301** to the host computer **307.** The host computer **307** searches whether the personal ID of the IC tag **301** is in a predetermined database of personal IDs. If the host computer **307** can confirm that the personal ID exists, it sends the signal to permit unlocking to the terminal **303.** However, the host computer **307** may input the limitation information to the terminal later, and the terminal **303** may send the ID information of the mobile phone **304,** or information obtained by calculating the ID information and the limitation information for limiting the range of use to the IC tag **301** (see Figure **7C****).** Alternatively, the limitation information may be stored in the terminal or the host computer.

The method of registering can be any method other than the method of the present embodiment as long as it is performed after the user is authenticated.
In the case where the power supply of the mobile phone **304** is insufficient, the IC tag **301** may be notified by a sound or vibration.
Similarly, if previously registered, the limited unlocking using only the mobile phone **304** may be permitted in the case of a failure of the IC tag **301.**
This allows, for example, asking other person to unlock with passing only the IC tag as the owner keeps the mobile phone **304.**
Functions of the mobile phone **304** may be transferred to an IC tag different from the IC tag **301** or a mobile phone within a limited extent if they are previously registered with both the mobile phone **304** and the IC tag **301.** Herein, the limited extent refers the number of times allowed to unlock, the time zone in which unlocking is permitted (for example, between 9AM to 10AM), the time period permitted to unlock (for example, for one day), the time limit for unlocking (for example, until August 5), and the like. In this way, even in the case where the mobile phone **304** cannot be used, another IC tag or mobile phone can carry out the functions for it within the limited extent so that unlocking can be performed within the limited extent without lowering the security level.

The extent of limitation may be varied depending upon the cases, for example, the case where there are both the mobile phone **304** and the IC tag, the case where there are a substituting device for the mobile phone **304** and the IC tag, the case where there is only the registered tag, and the case where there is an IC tag which is not registered.
In the present embodiment, the signal sent from the IC tag **301** to the terminal **303** includes the ID information of the mobile phone **304** with the encrypted personal ID of the IC tag **301.** The terminal **303** reads the signal input from the IC tag **301,** and checks whether it has received the ID information of the mobile phone **304** which is intermittently transmitted. When the terminal **303** confirms reception of the ID information which matches the ID information received from the IC tag **301,** the terminal **303** decrypts the personal ID of the IC tag **301** using the ID information as a key. Then, the terminal **303** sends the decrypted personal ID of the IC tag **301** to the host computer **307.** However, the signal sent from the IC tag **301** to the terminal **303** may not include the ID information of the mobile phone **304.** The terminal **303** may receive the ID information of any mobile phone and decrypts it to send to the host computer. If there are a number of mobile phones around the terminal **303,** it may take some time for the terminal **303** to obtain the ID information of the mobile phone **304.** However, in this way, the ID information of the mobile phone is no longer necessary to be stored in the IC tag **301,** so the security level can be enhanced in terms of protecting the ID information of the mobile phone.

In the present embodiment, the personal ID of the IC tag **301** is decrypted using the ID information of the mobile phone as a key, and the decrypted personal ID of the IC tag **301** is sent to the host computer. However, the present invention is not limited to such an example, and the unlocking may be permitted by simply having both the ID of the mobile phone and the signal sent from the IC tag. In this way, decrypting means is no longer necessary, and the system can be simplified.
In the present embodiment, the signal sent from the IC tag **301** to the terminal **303** includes the ID information of the mobile phone **304** with the encrypted personal ID of the IC tag **301.** The terminal **303** reads the signal input from the IC tag **301,** and checks whether it has received the ID information of the mobile phone **304** which is intermittently transmitted. When the terminal **303** confirms reception of the ID information which matches the ID information received from the IC tag **301,** the terminal **303** decrypts the personal ID of the IC tag **301** using the ID information as a key. Then, the terminal **303** sends the decrypted personal ID of the IC tag **301** to the host computer **307.** However, the signal sent from the IC tag **301** to the terminal **303** includes mail address information or a telephone number of the mobile phone **304.** When the terminal **303** receives the signal output from the IC tag, it may send mail to or call the mobile phone **304,** and upon a predetermined receiving operation (clicking a predetermined button or the like) on the mobile phone **304,** unlocking may be permitted. In this way, decrypting means is no longer necessary, and the system can be simplified.

### (Fourth embodiment)

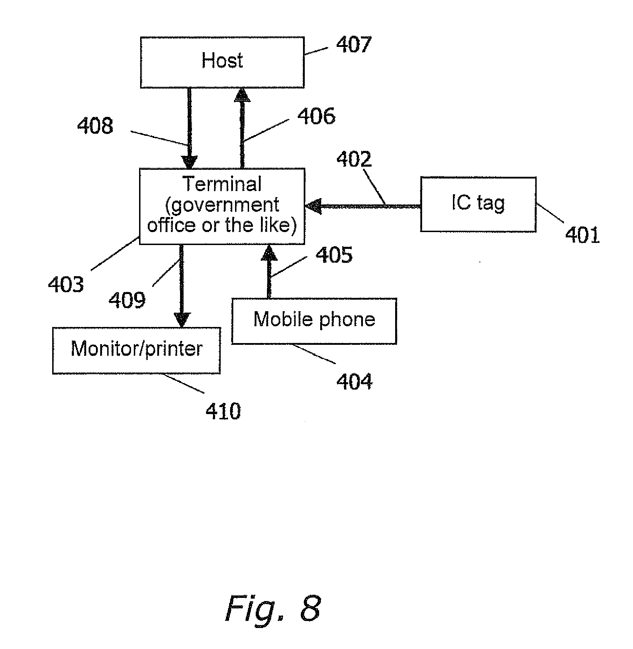

Hereinafter, another embodiment of the present invention is described with reference to the drawings. Figure **8** shows a structure of an authentication system according to another embodiment of the present invention. Figure **8** illustrates an authentication method when asking to disclose or issue a certificate at a government office and the like. In Figure **8****,** reference numeral **401** denotes an IC tag, reference numeral **403** denotes a terminal, reference numeral **404** denotes a mobile phone, reference numeral **407** denotes a host computer, and reference numeral **410** denotes a monitor.

Now, the authentication system in the fourth embodiment is described. First, a person who wants to ask holds the IC tag **401** over the terminal **403** at the government office. A form of the IC tag **401** may be a card or the like with an IC tag being embedded. The terminal **403** has a reader function for the IC tag **401** and reads a signal **402.**
The signal **402** includes a personal ID of the IC tag **401** which is encrypted, and also ID information of the mobile phone **404.** The terminal **403** checks whether it has received the ID information of the mobile phone **404.**
In general, mobile phones have a function to switch base stations as they move so that call is not interrupted while they are moving, and intermittently transmit a signal to notify their current positions to the base stations.

In the present embodiment, such a signal is utilized. The signal transmitted by the mobile phone includes at least ID information specific to the mobile phone **404.** The receiving sensitivity of the terminal **403** for the ID information of the mobile phone is suppressed to be lower than the receiving sensitivity of the base stations, and the terminal **403** can receive the ID information only from the mobile phones within the range of about a few meters.
If the terminal **403** confirms reception of the ID information which matches the ID information received from the IC tag **401 (405),** the personal ID of the IC tag **301** is decrypted using the ID information as a key. Then, the terminal **403** sends the decrypted personal ID of the IC tag **401** to the host computer **407 (406).** The host computer **407** searches whether the personal ID of the IC tag **401** exists in a predetermined database of personal IDs. If it is confirmed to exist, the host computer **407** sends a signal to confirm authentication to the terminal **403 (408),** and the certificate is displayed on the monitor **410** or output from a printer.

As described above, by the authentication system of the present embodiment, the personal ID is decrypted using two devices, i.e., the IC tag **401** and the mobile phone **404.** Thus, security level can be improved.
Furthermore, since the mobile phone **404** is used, original functions of mobile phones, such as a function for transmitting signal or the power supply can be utilized, and thus, authentication of an individual can be performed with a simple structure. Further, since the ID information intermittently transmitted from the mobile phone **404** is utilized, there is no need to request the mobile phone **404** to transmit the ID information from the terminal **403,** and thus, a time period necessary for authentication is reduced.
Usually, if the number of so-called keys is increased in order to improve the level of security, the operations become complicated, and may impair convenience of the customer. However, in the present embodiment, the ID information which is intermittently transmitted from the mobile phone **404** is used so the authentication can be performed without impairing convenience of the customer.

In the present embodiment, the IC tag **401** is formed into a card. However, it may be in any form such as a key ring, a bracelet, a watch with the IC tag being embedded, or the like.
Since the IC tag cannot complete the authentication by itself, a plurality of IC tags may be provided in view of the case of losing or failing to bring the IC tag.
In the present embodiment, a signal of the mobile phone for notifying base stations of its position is used. However, any signal other than the signal for notifying base stations of the position can be used as long as it is intermittently transmitted at a frequency of once in about a few seconds or more. By employing another signal, a weak signal which reaches to a range of about a few meters can be used so the power consumption of the mobile phone can be reduced by that amount.
In the present embodiment, the terminal **403** decrypts the personal ID of the IC tag **401** using the ID information received from the mobile phone **404** as a key. However, as long as the host computer **407** already knows or can recognize, a signal obtained by arbitrarily calculating the signal **405** received from the mobile phone **404** and the signal **402** received from the IC tag **401** may be sent to the host computer **407.** Sending and receiving between the host computer **407** and the terminal **403** may be in any form such as wired, wireless, one-way communication, bidirectional communication, or the like.

In the present embodiment, the decrypted personal ID of the IC tag **401** is sent to the host computer **407.** However, the signal may be sent as it remains encrypted, and may be decrypted at the host computer **407.**
The signal input from the IC tag **401** to the terminal **403** may include address information of the host computer **407.** Since the address information is included, the signal **406** can be sent to the host computer **407** even when the terminal **403** does not have address information of the host computer **407.**
Even if the address information is not included, if the personal ID is a personal ID which is authenticated by an authentication organization which is designated by the terminal **403** and has known address information, it can be used. However, by including the address information, the personal ID authenticated by another authentication organization can be used. In this way, the number of the personal IDs can be prevented from increasing, and the customers do not have to increase the personal IDs. Thus, management of the personal IDs becomes easy.

The signal input from the mobile phone **404** to the terminal **403** may also include the address information of the host computer **407.** Since the address information is included, the signal **406** can be sent to the host computer **407** even when the terminal **403** does not have address information of the host computer **407.**
Even if the address information is not included, if the personal ID is a personal ID which is authenticated by an authentication organization which is designated by the terminal **403** and has known address information, it can be used. However, by including the address information, the personal ID authenticated by another authentication organization can be used. In this way, the number of the personal IDs can be prevented from increasing, and the customers do not have to increase the personal IDs. Thus, management of the personal IDs becomes easy.
The signal input from the terminal **403** to the host computer **407** may include the address information of the terminal **403.** Since the address information is included, a sending process to the host computer **407** and a receiving process from the host computer **407** can be separated. This allows selecting communication means other than bidirectional communication, and the range of choices for the communication means can be expanded.

In the present embodiment, the terminal **403** having a reader function reads the signal **402.** However, the signal **402** may be sent to the terminal **403** by an operation of the customer. If the signal **402** is sent upon the customer's operation, it is no longer necessary to send the personal ID when the signal **402** does not have to be sent. Thus, the security level of the personal information can be further enhanced than that in the case where the personal IDs are always transmitted.
The terminal **403** may receive only a signal from the IC tag **401** within a range of about a few meters. In this way, crossed line with signals sent from other IC tags can be prevented.
In the present embodiment, the terminal **403** having a reader function reads the signal **402.** However, transmission of the personal ID from the IC tag **401** may be performed at a timing different from that of transmitting the ID information of the mobile phone **404** from the IC tag **401.** By sending the personal ID of the IC tag **401** only under a predetermined condition, the security level of the personal information can be further enhanced than that in the case where the personal IDs are always transmitted.

An example of transmitting the personal ID of the IC tag **401** at the different timing is as follows. First, the IC tag **401** transmits only the ID information of the mobile phone **404,** and the terminal **403** confirms the ID information transmitted from the mobile phone **404.** Then, upon a request from the terminal **403,** the IC tag **401** may transmit the personal ID of the IC tag **401.** In this way, the personal ID of the IC tag is not transmitted any longer when a mobile phone which does not transmit correct ID information due to misuse is being used. Thus, the security level of the personal information can be further enhanced.
As another example, the IC tag **401** receives the ID information of the mobile phone **404** first, and is triggered by it to transmit the personal ID of the IC tag **401.** Transmission of the ID information of the mobile phone **404** from the IC tag **401** may be before or after reception of the ID information of the mobile phone **404,** or at the same timing. This allows omitting receiving means of the terminal **403** which is for receiving from the mobile phone **404.**

The transmission of the personal ID from the IC tag **401** may be performed intermittently for a predetermined period of time once transmission is performed. In this way, it is ensured that the personal ID can be sent to the terminal **403.**
In the present embodiment, the mobile phone **404** intermittently transmits the ID information. However, transmission may be performed upon an operation of the customer in the case of emergency, in the case where timing has to be adjusted with respect to the receiving side, or the like. Similarly, when the communication between the IC tag **401,** the terminal **403,** and the mobile phone **404** has to be performed at a predetermined timing, transmission of the ID information from the mobile phone **404** may be triggered by the IC tag **401** or the terminal **403.**
Further, transmission of predetermined information stored in the IC tag **401** such as the personal ID, the ID information of the mobile phone **404** and the like may be stopped by sending a predetermined signal to the IC tag **401.** This reduces a risk of misuse in the case of loss.

Moreover, predetermined information stored in the IC tag **401** such as the personal ID, the ID information of the mobile phone **404** and the like may be erased by sending a predetermined signal to the IC tag **401.** This reduces a risk of misuse in the case of loss.
Furthermore, predetermined information stored in the IC tag **401** such as the personal ID, the ID information of the mobile phone **404** and the like may be transferred to a predetermined device by sending a predetermined signal to the IC tag **401.** This reduces a risk of misuse in the case of loss, and also allows reuse of the information which has been stored in the IC tag **401.**
Further, transmission of the ID information and the like of the mobile phone **404** may be stopped by sending a predetermined signal to the IC tag **401.** This reduces a risk of misuse in the case of loss.

Moreover, predetermined information stored in the mobile phone **404** such as the ID information and the like may be erased by sending a predetermined signal to the IC tag **401.** This reduces a risk of misuse in the case of loss.
Furthermore, predetermined information stored in the mobile phone **404** such as the ID information and the like may be transferred to a predetermined device by sending a predetermined signal to the IC tag **401.** This reduces a risk of misuse in the case of loss, and also allows reuse of the information which has been stored in the mobile phone **404.**
Alternatively, by sending a predetermined signal to the host computer **407,** authentication of the terminal **403** may be stopped, or may notify the terminal **403** of a misuse.

Further, in the case of loss or the like, a predetermined code number may be input for transmitting a predetermined signal to the IC tag **401,** the terminal **403,** or the mobile phone **404,** and the signal may be sent only when the code number is correct. This can prevent erroneous suspension of a predetermined function.
Further, the host computer **407** may be set to perform authentication only at a predetermined place. For example, the name of the store which is designated by the customer is previously registered to the host computer **407.** Authentication is not performed at a store which is not designated even when a predetermined signal is sent. In this way, misuse can be prevented.
Moreover, the host computer **407** may be set to perform authentication only within a predetermined time zone. For example, a time zone designated by the customer is previously registered to the host computer **407.** Authentication is not performed in time zones which are not designated even when a predetermined signal is sent. In this way, misuse can be prevented.

In the present embodiment, the signal sent from the IC tag **401** to the terminal **403** includes the ID information of the mobile phone **404** with the encrypted personal ID of the IC tag **401.** The terminal **403** reads the signal input from the IC tag **401,** and checks whether it has received the ID information of the mobile phone **404** which is intermittently transmitted. When the terminal **403** confirms reception of the ID information which matches the ID information received from the IC tag **401,** the terminal **403** decrypts the personal ID of the IC tag **401** using the ID information as a key. Then, the terminal **403** sends the decrypted personal ID of the IC tag **401** to the host computer **407.** However, the signal sent to the terminal **403** from the IC tag **401** may be sent to the mobile phone **404,** and the decrypted personal ID may be sent from the mobile phone **404** to the host computer **407.**
Thus, the personal ID of the IC tag **401** is no longer necessary to be sent to the terminal **403.** The personal information of the IC tag **401** is just sent to the host computer **407.** Thus, compared to the case where the personal ID is transmitted to each terminal every time a certificate is issued, the security level of the personal information can be further enhanced.

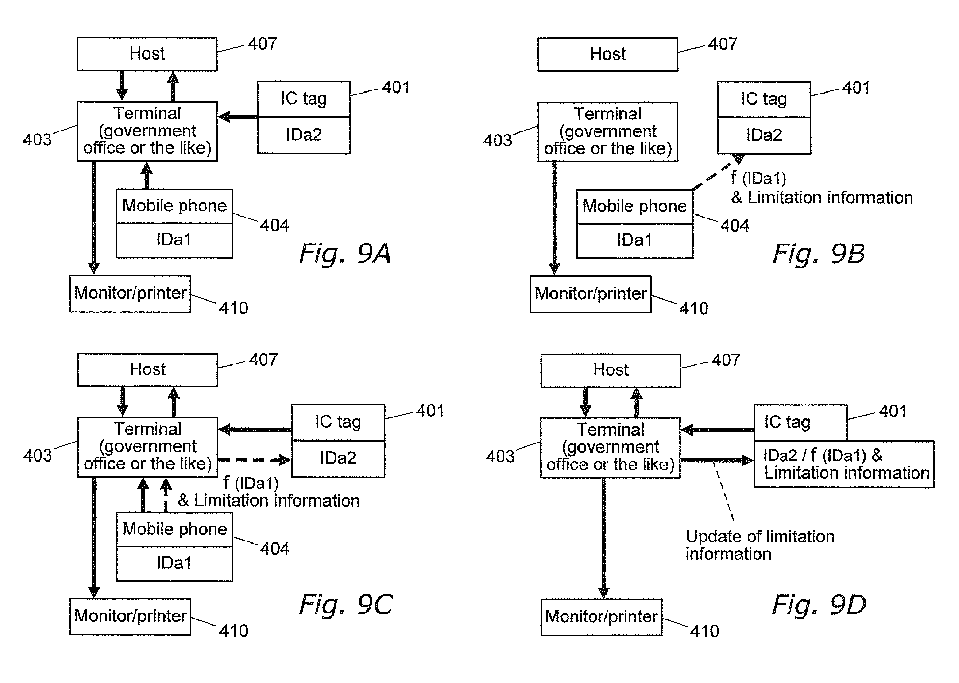

In the present embodiment, authentication is permitted when there are both the mobile phone **404** and the IC tag **401** (see Figure **9A****).** However, authentication with either device may be permitted within a limited extent upon previous registration with both the mobile phone **404** and the IC tag **401.** Such an example will be described with reference to Figures **9B** through **9D****.** Herein, the limited extent refers to the amount of money which can be authenticated, the number of times allowed to authenticate, the time zone in which authentication is permitted (for example, between 9AM to 10AM), the time period permitted to authenticate (for example, for one day), the time limit for authentication (for example, until August 5), the area in which authentication is permitted, and the like.
With such a feature, even when, for example, the user notices that he/she has forgotten the mobile phone **404** at the time he/she tries to be authenticated, or the power of the mobile phone **404** is insufficient or the mobile phone **404** has a failure, or authentication is to be performed in a place where the mobile phone **404** has to be turned off, the authentication can be performed with only the IC tag **401** if the information is registered such that the authentication is permitted for just once with the upper limit of the amount of money being determined.

The registration may be performed by, for example, sending the ID information of the mobile phone **404,** or information obtained by arbitrarily calculating the ID information and the limitation information for limiting the range of use from the mobile phone **404** to the IC tag **401** (see Figures **9B** or **9C****).** The terminal **403** receives the information, and then sends the decrypted personal ID of the IC tag **401** to the host computer without receiving the ID information from the mobile phone **404** (see Figure **9D****).**
Updating of the limitation information shown in Figure **9D** means that, for example, in the case where the number of times to permit authentication is "once", if authentication is performed using only the IC tag **401,** the limitation information is updated, and the number of times of authentication is updated to "zero".
In the present embodiment, the signal sent from the IC tag **401** to the terminal **403** includes the ID information of the mobile phone **404** with the encrypted personal ID of the IC tag **401.** The terminal **403** reads the signal input from the IC tag **401,** and checks whether it has received the ID information of the mobile phone **404** which is intermittently transmitted. When the terminal **403** confirms reception of the ID information which matches the ID information received from the IC tag **401,** the terminal **403** decrypts the personal ID of the IC tag **401** using the ID information as a key. Then, the terminal **403** sends the decrypted personal ID of the IC tag **401** to the host computer **407.** The host computer **407** searches whether the personal ID of the IC tag **401** is in a predetermined database of personal IDs. If the host computer **407** can confirm that the personal ID exists, it sends the signal to permit authentication to the terminal **403.** However, the host computer **407** may input the limitation information to the terminal later, and the terminal **403** may send the ID information of the mobile phone **404,** or information obtained by arbitrarily calculating the ID information and the limitation information for limiting the range of use to the IC tag **401** (see Figure **9C****).** Alternatively, the limitation information may be stored in the terminal or the host computer.

The method of registering can be any method other than the method of the present embodiment as long as it is performed after the user is authenticated.
In the case where the power supply of the mobile phone **404** is insufficient, the IC tag **401** may be notified by a sound or vibration.
Similarly, if previously registered, the limited authentication using only the mobile phone **404** may be permitted in the case of a failure of the IC tag **401.**
This allows, for example, asking other person to be authenticated with passing only the IC tag as the owner keeps the mobile phone **404.**
Functions of the mobile phone **404** may be transferred to an IC tag different from the IC tag **401** or a mobile phone within a limited extent if it is previously registered with both the mobile phone **404** and the IC tag **401.** Herein, the limited extent refers to the amount of money which can be authenticated, the number of times allowed to authenticate, the time zone in which authentication is permitted (for example, between 9AM to 10AM), the time period permitted to authenticate (for example, one day or until August 5), the area in which authentication is permitted, and the like. In this way, even in the case where the mobile phone **410** cannot be used, another IC tag or mobile phone can carry out the functions for it within the limited extent so that authentication can be performed within the limited extent without lowering the security level.

The extent of limitation may be varied depending upon the cases, for example, the case where there are both the mobile phone **404** and the IC tag, the case where there are a substituting device for the mobile phone **404** and the IC tag, the case where there is only the registered tag, and the case where there is an IC tag which is not registered.
In the present embodiment, the signal sent from the IC tag **401** to the terminal **403** includes the ID information of the mobile phone **404** with the encrypted personal ID of the IC tag **401.** The terminal **403** reads the signal input from the IC tag **401,** and checks whether it has received the ID information of the mobile phone **404** which is intermittently transmitted. When the terminal **403** confirms reception of the ID information which matches the ID information received from the IC tag **401,** the terminal **403** decrypts the personal ID of the IC tag **401** using the ID information as a key. Then, the terminal **403** sends the decrypted personal ID of the IC tag **401** to the host computer **407.** However, the signal sent from the IC tag **401** to the terminal **403** may not include the ID information of the mobile phone **404.** The terminal **403** may receive the ID information of any mobile phone and decrypts it to send to the host computer. If there are a number of mobile phones around the terminal **403,** it may take some time for the terminal **403** to obtain the ID information of the mobile phone **404.** However, in this way, the ID information of the mobile phone is no longer necessary to be stored in the IC tag **401,** so the security level can be enhanced in terms of protecting the ID information of the mobile phone.

In the present embodiment, the personal ID of the IC tag **401** is decrypted using the ID information of the mobile phone as a key, and the decrypted personal ID of the IC tag **401** is sent to the host computer. However, the present invention is not limited to such an example, and the authentication may be permitted by simply having both the ID of the mobile phone and the signal sent from the IC tag. In this way, decrypting means is no longer necessary, and the system can be simplified.
In the present embodiment, the signal sent from the IC tag **401** to the terminal **403** includes the ID information of the mobile phone **404** with the encrypted personal ID of the IC tag **401.** The terminal **403** reads the signal input from the IC tag **401,** and checks whether it has received the ID information of the mobile phone **404** which is intermittently transmitted. When the terminal **403** confirms reception of the ID information which matches the ID information received from the IC tag **401,** the terminal **403** decrypts the personal ID of the IC tag **401** using the ID information as a key. Then, the terminal **403** sends the decrypted personal ID of the IC tag **401** to the host computer **407.** However, the signal sent from the IC tag **401** to the terminal **403** may include mail address information or a telephone number of the mobile phone **404.** When the terminal **403** receives the signal output from the IC tag, it may send mail to or call the mobile phone **404,** and upon a predetermined receiving operation (clicking a predetermined button or the like) on the mobile phone **404,** authentication may be permitted. In this way, decrypting means is no longer necessary, and the system can be simplified.

### (Fifth embodiment)

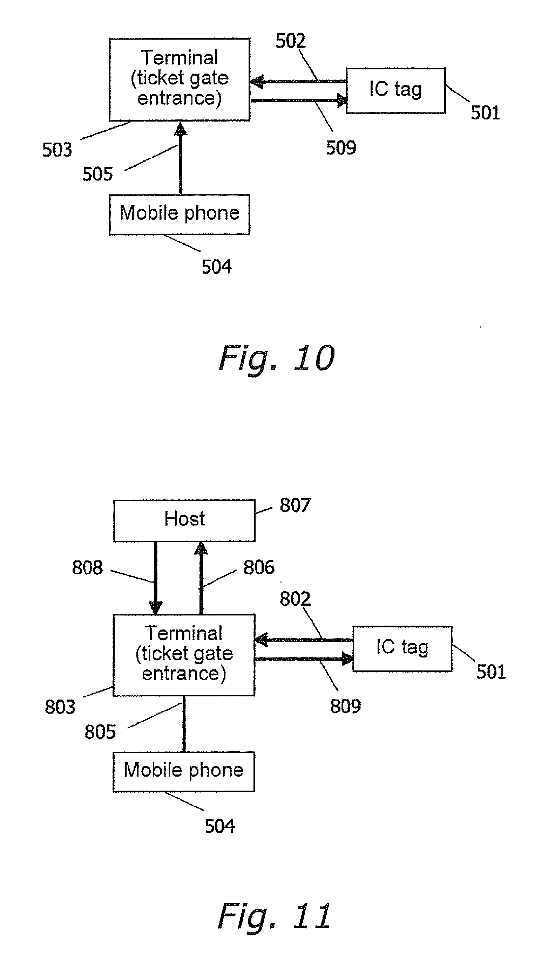

Hereinafter, another embodiment of the present invention is described with reference to the drawings. Figures **10** and **11** show a structure of an authentication system according to another embodiment of the present invention. Figures **10** and **11** illustrate a method for settling at a ticket gate when taking a train or the like. In Figure **10****,** reference numeral **501** denotes an IC tag, reference numeral **503** denotes a terminal, and reference numeral **504** denotes a mobile phone. In Figure **11****,** reference numeral **807** denotes a host computer. Now, the authentication system in the fifth embodiment is described.

First, a passenger holds the IC tag **501** over the terminal **503** of a ticket gate for passing the ticket gate before riding the train. A form of the IC tag **501** may be a card or the like with an IC tag being embedded. The ticket gate reads a signal **502** with the terminal **503** having a reader function for the IC tag **501.**
The signal **502** includes a personal ID of the IC tag **501** which is encrypted, and also ID information of the mobile phone **504.** The terminal **503** checks whether it has received the ID information of the mobile phone **504.**
In general, mobile phones have a function to switch base stations as they move so that call is not interrupted while they are moving, and intermittently transmit a signal to notify their current positions to the base stations.

In the present embodiment, such a signal is utilized. The signal transmitted by the mobile phone includes at least ID information specific to the mobile phone **504.** The receiving sensitivity of the terminal **503** for the ID information of the mobile phone is suppressed to be lower than the receiving sensitivity of the base stations, and the terminal **503** can receive the ID information only from the mobile phones within the range of about a few meters.
If the terminal **503** confirms reception of the ID information which matches the ID information received from the IC tag **501 (505),** it opens an entrance gate of the ticket gate after it sends and records an information signal regarding entry to and on the IC tag **501 (509).**
Then, for passing a ticket gate after getting off the train, the passenger holds the IC tag **501** over a terminal **803** at the ticket gate. The ticket gate reads a signal **802** with the terminal **803** having a reader function for the IC tag **501.** The signal **802** includes a personal ID of the IC tag **501** which is encrypted, ID information of the mobile phone **504,** and the information when the passenger ride the train. The terminal **803** checks whether it has received the ID information of the mobile phone **504.**

If the terminal **803** confirms reception of the ID information which matches the ID information received from the IC tag **501 (805),** it opens an exit gate at the ticket gate after it sends and records an information signal regarding exit to and on the IC tag **501 (809).**
Meanwhile, the terminal **803** decrypts the personal ID of the IC tag **501** using the ID information as a key. Then, the terminal **803** sends the decrypted personal ID of the IC tag **501** and information on entry and exit to the host computer **807 (806).** The host computer **807** searches whether the personal ID of the IC tag **501** exists in a predetermined database of personal IDs. If it is confirmed to exist, the host computer **807** sends a signal to confirm authentication to the terminal **803 (808),** and the fare is billed to a predetermined object to be billed from the terminal **803.**
As described above, by the authentication system of the present embodiment, the personal ID is decrypted using two devices, i.e., the IC tag **501** and the mobile phone **504.** Thus, security level can be improved.

If the personal ID of the IC tag **501** does not exist in the predetermined database of the personal IDs, a signal is sent to any similar terminal to prohibit entry for the next time. For example, when IC tag and/or ID information of the mobile phone sent from the IC tag **501,** or ID information of the mobile phone sent from the mobile phone **504** is detected, entry is not permitted and the entrance gate is not open.
Furthermore, since the mobile phone **504** is used, original functions of mobile phones, such as a function for transmitting signal or the power supply can be utilized, and thus, authentication of an individual can be performed with a simple structure. Further, since the ID information intermittently transmitted from the mobile phone **504** is utilized, there is no need to request the mobile phone **504** to send the ID information from the terminal **503** or **803,** and thus, a time period necessary for authentication is reduced.

Usually, if the number of so-called keys is increased in order to improve the level of security, the operations become complicated, and may impair convenience of the customer. However, in the present embodiment, the ID information which is intermittently transmitted from the mobile phone **504** is used so the authentication can be performed without impairing convenience of the passenger.
In the present embodiment, the IC tag **501** is formed into a card. However, it may be in any form such as a key ring, a bracelet, a watch with the IC tag being embedded, or the like.
Since the IC tag cannot complete the authentication by itself, a plurality of IC tags may be provided in view of the case of losing or failing to bring the IC tag.
In the present embodiment, a signal of the mobile phone for notifying base stations of its position is used. However, any signal other than the signal for notifying base stations of the position can be used as long as it is intermittently transmitted at a frequency of once in about a few seconds or more. By employing another signal, a weak signal which reaches to a range of about a few meters can be used so the power consumption of the mobile phone can be reduced by that amount.

In the present embodiment, the terminal **803** decrypts the personal ID of the IC tag **501** using the ID information received from the mobile phone **504** as a key. However, as long as the host computer **807** already knows or can recognize, a signal obtained by arbitrarily calculating the signals **505** and **805** received from the mobile phone **504** and the signal **502** and **802** received from the IC tag **501** may be sent to the host computer **807.** Sending and receiving between the host computer **807** and the terminal **803** may be in any form such as wired, wireless, one-way communication, bidirectional communication, or the like.
In the present embodiment, the decrypted personal ID of the IC tag **501** is sent to the host computer **807.** However, the signal may be sent as it remains encrypted, and may be decrypted at the host computer **807.**
The signal input from the IC tag **501** to the terminal **503** may include address information of the host computer **807.** Since the address information is included, the signal **506** can be sent to the host computer **807** even when the terminal **503** does not have address information of the host computer **807.**

Even if the address information is not included, if the personal ID is a personal ID which is authenticated by an authentication organization which is designated by the terminal **503** and has known address information, it can be used. However, by including the address information, the personal ID authenticated by another authentication organization can be used.
In this way, the number of the personal IDs can be prevented from increasing, and the customers do not have to increase the personal IDs. Thus, management of the personal IDs becomes easy.
The signal input from the mobile phone **504** to the terminal **503** may also include the address information of the host computer **507.** Since the address information is included, the signal **806** can be sent to the host computer **507** even when the terminal **503** does not have address information of the host computer **507.**
Even if the address information is not included, if the personal ID is a personal ID which is authenticated by an authentication organization which is designated by the terminal **503** and has known address information, it can be used. However, by including the address information, the personal ID authenticated by another authentication organization can be used. In this way, the number of the personal IDs can be prevented from increasing, and the customers do not have to increase the personal IDs. Thus, management of the personal IDs becomes easy.

The signal input from the terminal **503** to the host computer **807** may include the address information of the terminal **503.** Since the address information is included, a sending process to the host computer **807** and a receiving process from the host computer **807** can be separated. This allows selecting communication means other than bidirectional communication, and the range of choices for the communication means can be expanded.
In the present embodiment, the terminal **503** having a reader function reads the signal **502.** However, the signal **502** may be sent to the terminal **503** by an operation of the customer. If the signal **502** is sent upon the customer's operation, it is no longer necessary to send the personal ID when the signal **502** does not have to be sent. Thus, the security level of the personal information can be further enhanced than that in the case where the personal IDs are always transmitted.

The terminal **503** may receive only a signal from the IC tag **501** within a range of about a few meters. In this way, crossed line with signals sent from other IC tags can be prevented.
In the present embodiment, the terminal **503** having a reader function reads the signal **502.** However, transmission of the personal ID from the IC tag **501** may be performed at a timing different from that of transmitting the ID information of the mobile phone **504** from the IC tag **501.** By sending the personal ID of the IC tag **501** only under a predetermined condition, the security level of the personal information can be further enhanced than that in the case where the personal IDs are always transmitted.
An example of transmitting the personal ID of the IC tag **501** at the different timing is as follows. First, the IC tag **501** transmits only the ID information of the mobile phone **504,** and the terminal **503** confirms the ID information transmitted from the mobile phone **504.** Then, upon a request from the terminal **503,** the IC tag **501** may transmit the personal ID of the IC tag **501.** In this way, the personal ID of the IC tag is not transmitted any longer when a mobile phone which does not transmit correct ID information due to misuse is being used. Thus, the security level of the personal information can be further enhanced.

As another example, the IC tag **501** receives the ID information of the mobile phone **504** first, and is triggered by it to transmit the personal ID of the IC tag **501.** Transmission of the ID information of the mobile phone **504** from the IC tag **501** may be before or after reception of the ID information of the mobile phone **504,** or at the same timing. This allows omitting receiving means of the terminal **503** which is for receiving from the mobile phone **504.**
The transmission of the personal ID from the IC tag **501** may be performed intermittently for a predetermined period of time once transmission is performed. In this way, it is ensured that the personal ID can be sent to the terminal **503.**
In the present embodiment, the mobile phone **504** intermittently transmits the ID information. However, transmission may be performed upon an operation of the customer in the case of emergency, in the case where timing has to be adjusted with respect to the receiving side, or the like. Similarly, when the communication between the IC tag **501,** the terminal **503,** and the mobile phone **504** has to be performed at a predetermined timing, transmission of the ID information from the mobile phone **504** may be triggered by the IC tag **501** or the terminal **503.**

Further, transmission of predetermined information stored in the IC tag **501** such as the personal ID, the ID information of the mobile phone **504** and the like may be stopped by sending a predetermined signal to the IC tag **501**. This reduces a risk of misuse in the case of loss.
Moreover, predetermined information stored in the IC tag **501** such as the personal ID, the ID information of the mobile phone **504** and the like may be erased by sending a predetermined signal to the IC tag **501.** This reduces a risk of misuse in the case of loss.
Furthermore, predetermined information stored in the IC tag **501** such as the personal ID, the ID information of the mobile phone **504** and the like may be transferred to a predetermined device by sending a predetermined signal to the IC tag **501.** This reduces a risk of misuse in the case of loss, and also allows reuse of the information which has been stored in the IC tag **501.**

Further, transmission of the ID information and the like of the mobile phone **504** may be stopped by sending a predetermined signal to the IC tag **501.** This reduces a risk of misuse in the case of loss.
Moreover, predetermined information stored in the mobile phone **504** such as the ID information and the like may be erased by sending a predetermined signal to the IC tag **501.** This reduces a risk of misuse in the case of loss.
Furthermore, predetermined information stored in the mobile phone **504** such as the ID information and the like may be transferred to a predetermined device by sending a predetermined signal to the IC tag **501.** This reduces a risk of misuse in the case of loss, and also allows reuse of the information which has been stored in the mobile phone **504.**

Alternatively, by sending a predetermined signal to the host computer **807,** authentication of the terminal **503** may be stopped, or may notify the terminal **503** of a misuse.
Further, in the case of loss or the like, a predetermined code number may be input for transmitting a predetermined signal to the IC tag **501,** the terminal **503,** or the mobile phone 504, and the signal may be sent only when the code number is correct. This can prevent erroneous suspension of a predetermined function.
In the present embodiment, the signal sent from the IC tag **501** to the terminal **503** includes the ID information of the mobile phone **504** with the encrypted personal ID of the IC tag **501.** The terminal **503** reads the signal input from the IC tag **501,** and checks whether it has received the ID information of the mobile phone **504** which is intermittently transmitted. When the terminal **503** confirms reception of the ID information which matches the ID information received from the IC tag **501,** the terminal **503** decrypts the personal ID of the IC tag **501** using the ID information as a key. Then, the terminal **503** sends the decrypted personal ID of the IC tag **501** to the host computer **807.** However, the signal sent to the terminal **503** from the IC tag **501** may be sent to the mobile phone **504,** and the decrypted personal ID may be sent from the mobile phone **504** to the host computer **807.**

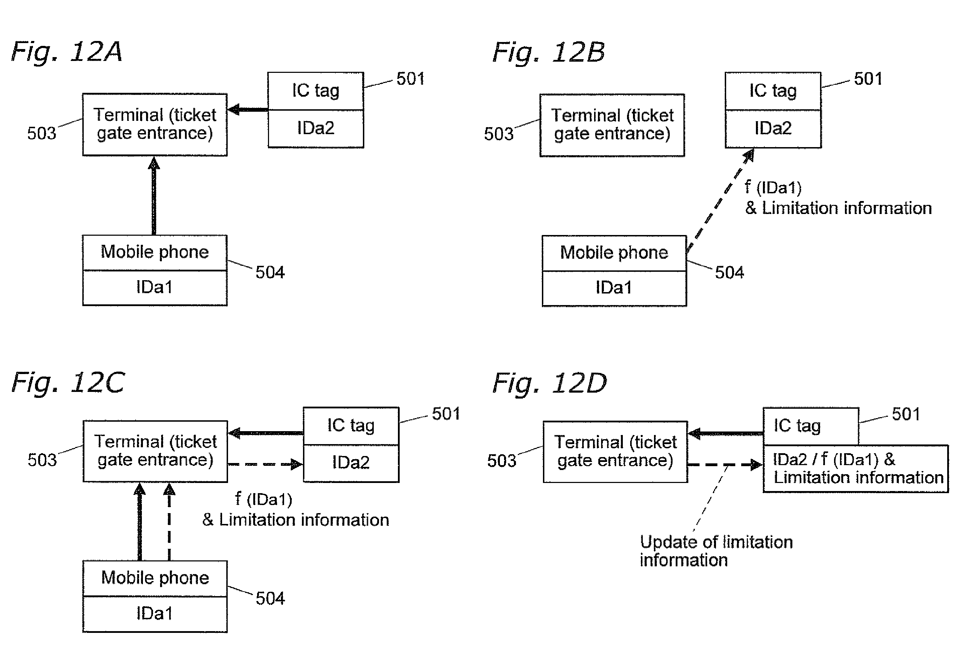

Thus, the personal information of the IC tag **501** is no longer necessary to be sent to the terminal **503.** The personal information of the IC tag **501** is just sent to the host computer **807.** Thus, compared to the case where the personal ID is transmitted to each terminal every time a certificate is issued, the security level of the personal information can be further enhanced.
In the present embodiment, authentication is permitted when there are both the mobile phone **504** and the IC tag **501** (see Figure **12A****).** However, authentication with either device may be permitted within a limited extent upon previous registration with both the mobile phone **504** and the IC tag **501.** Such an example will be described with reference to Figures **12B** through **12D****.** Herein, the limited extent refers to the amount of money which can be authenticated, the number of times allowed to authenticate, the time zone in which authentication is permitted (for example, between 9AM to 10AM), the time period permitted to authenticate (for example, one day), the time limit for authentication (for example, until August 5), the area in which authentication is permitted, and the like.

With such a feature, even when, for example, the user notices that he/she has forgotten the mobile phone **504** at the time he/she tries to be authenticated, or the power of the mobile phone **504** is insufficient or the mobile phone **504** has a failure, or authentication is to be performed in a place where the mobile phone **504** has to be turned off, the authentication can be performed with only the IC tag **501** if the information is registered such that the authentication is permitted for just once with the upper limit of the amount of money being determined.
The registration may be performed by, for example, sending the ID information of the mobile phone **504,** or information obtained by arbitrarily calculating the ID information and the limitation information for limiting the range of use from the mobile phone **504** to the IC tag **501** directly or indirectly via the terminal **503** (see Figures **12B** or **12C****).** The terminal **503** receives the information, and performs authentication without receiving the ID information from the mobile phone **504** (see Figure **12D****).**
Updating of the limitation information shown in Figure **12D** means that, for example, in the case where the number of times to permit withdrawal is "once", if withdrawal is performed using only the IC tag **101,** the limitation information is updated, and the number of times of withdrawal is updated to "zero".

In the case where the power supply of the mobile phone **504** is insufficient, the IC tag **501** may be notified by a sound or vibration.
Similarly, if previously registered, the limited authentication using only the mobile phone **504** may be permitted in the case of a failure of the IC tag **501.**
Functions of the mobile phone **504** may be transferred to an IC tag different from the IC tag **501** or a mobile phone within a limited extent if it is previously registered with both the mobile phone **504** and the IC tag **501.** Herein, the limited extent refers to the amount of money which can be authenticated, the number of times allowed to authenticate, the time zone in which authentication is permitted (for example, between 9AM to 10AM), the time period permitted to authenticate (for example, for one day or until August 5), the area in which authentication is permitted, and the like. In this way, even in the case where the mobile phone **504** cannot be used, another IC tag or mobile phone can carry out the functions for it within the limited extent so that authentication can be performed within the limited extent without lowering the security level.

The extent of limitation may be varied depending upon the cases, for example, the case where there are both the mobile phone **504** and the IC tag, the case where there are a substituting device for the mobile phone **504** and the IC tag, the case where there is only the registered tag, and the case where there is an IC tag which is not registered.

### (Variations of the first through fifth embodiments)

### <1>

In the above embodiments and variations thereof, the mobile phone may poll the IC tag.
If there is no response from the IC tag for a certain period of time as a result of such polling, the mobile phone may send ID information stored in the mobile phone, storage information such as address list information, or positional information of the mobile phone to a predetermined device.

The state that the IC tag and the mobile phone cannot communicate each other for a certain period of time may possibly mean that the mobile phone is lost. When the mobile phone transmits information in such a state, the address list and the like stored in the mobile phone are sent and transferred to a predetermined device so that they can be reused. Alternatively, the positional information of the mobile phone is obtained so that the mobile phone can be found.
Further, if there is no response from the IC tag for a certain period of time as a result of polling, the mobile phone may erase specific information such as the address list information and the like stored in the mobile phone.
In this way, even when the mobile phone is lost, misuse of the information stored in the mobile phone can be prevented.
Moreover, if there is no response from the IC tag for a certain period of time as a result of polling, the mobile phone may be switched to a setting in which manipulations on the mobile phone are invalidated.

In this way, even when the mobile phone is lost, misuse of the mobile phone itself can be prevented.
These operations may be performed in accordance with not the response from the IC tag, but power supply level of the mobile phone.
For example, if the power supply level of the mobile phone is lower than a predetermined value, the mobile phone may send ID information stored in the mobile phone, storage information such as address list information, or positional information of the mobile phone to a predetermined device.
When the mobile phone transmits information in a state that the power supply level of the mobile phone is lower than a predetermined value, the address list and the like stored in the mobile phone are sent and transferred to a predetermined device so that they can be reused. Alternatively, in the case where the mobile phone cannot be charged because it is lost, the positional information of the mobile phone is obtained so that the mobile phone can be found.

When the power supply level of the mobile phone is lower than a predetermined value, the mobile phone may erase specific information such as the address list information stored in the mobile phone.
In this way, even when the power supply level of the mobile phone is reduced because it is lost, misuse of the information stored in the mobile phone can be prevented.
Moreover, when the power supply level of the mobile phone is lower than a predetermined value, the mobile phone may be switched to a setting in which manipulations on the mobile phone are invalidated.
In this way, even when the power supply level of the mobile phone is reduced because it is lost, misuse of the mobile phone itself can be prevented.

### <2>

In the above embodiments and variations thereof, encryption and decryption of the personal ID of the IC tag may be performed using the ID information of the mobile phone as an encryption key and a decryption key.

### <3>

The IC tag and the mobile phone used in the above embodiments and variations thereof may transmit their ID information only within a predetermined area. Herein, the predetermined area refers to, for example, premises of a building or a station, a predetermined site and the like.

In the predetermined area, a transmitter included in or connected to the terminal is provided. The transmitter polls the IC tag and the mobile phone. The terminal receives a response to polling from the IC tag and the mobile phone. Further, the terminal performs a process as described in the above embodiments and variations thereof to perform authentication.
In such a state, the IC tag and the mobile phone transmit their ID information only when they receive a radio wave from the transmitter provided in the predetermined area. Thus, the ID information is transmitted from the IC tag and/or the mobile phone only in the predetermined area. Therefore, the security level can be further improved.

### <4>

In the above embodiments and variations thereof, the ID information of either the IC tag or the mobile phone may be registered to a predetermined registration device when entering a predetermined area. In the predetermined area, the registered ID information and the other ID information may be used for authentication.

For example, in the area where the mobile phone has to be turned off such as a hospital, authentication using the mobile phone as described in the above embodiments may be inappropriate sometime.
Therefore, when entering the predetermined area, the ID information of the mobile phone is registered to the terminal at the entrance. In the predetermined area, the authentication is performed using the personal ID of the IC tag and the ID information registered to the terminal.
Registration of ID information to the terminal by the mobile phone is performed at, for example, a remote terminal which is provided outside the predetermined area or both outside and inside of the area near the border and which is connected to the terminal via a wired or wireless network. The remote terminal receives a signal of the mobile phone notifying the base stations of its position, and obtains the ID information included in the signal. Further, the remote terminal sends the obtained ID information to the terminal via the network. The terminal registers (stores) the received ID information. In the predetermined area, the terminal obtains the personal ID from the IC tag. The terminal performs authentication using the obtained personal ID and the registered ID information.

As described, in the predetermined area, the terminal merely obtains the personal ID from the IC tag. Thus, even in the area in which the mobile phone has to be turned off (for example, a hospital, a theater, a station and the like), the authentication with improved security level can be performed.
In the above description, the remote terminal registers the ID information obtained from the mobile phone to the terminal. However, the ID information may be registered to a server connected to the terminal. When the terminal obtains the personal ID from the IC tag, it further obtains the corresponding ID information from the server to perform authentication.
In the above description, the mobile phone is used for entering the predetermined area and the IC tag is used in the predetermined area. However, the present invention is not limited to such an example. The IC tag may be used for entering the predetermined area, and the mobile phone may be used in the predetermined area, for example.

### <5>

In the above embodiments and variations thereof, the ID information of the IC tag and the mobile phone are used for authentication for entering the predetermined area, and once the user entered the predetermined area, either one of the ID information of the IC tag and the mobile phone may be used for authentication in the predetermined area.

For entering the predetermined area, as described in the above embodiments, the terminal performs authentication by using the ID information of the IC tag and the mobile phone. Further, the terminal stores in a database or the like that the authentication is performed at the entrance and the object to be authenticated is in an authenticated status. In the predetermined area, when the terminal obtains ID information of either the IC tag or the mobile phone, the authenticated status of the object to be authenticated for that ID information is searched for in the database. If it is determined that the object to be authenticated is in the authenticated status as a result of searching the database, the authentication within the predetermined area is completed.
In this way, the convenience can be improved with the safety of the authentication in the predetermined area being maintained. In other words, once authentication is performed when the user enters the area (for example, a hospital, a theater, a station and the like), the sufficient security level is maintained even when the security level in the following authentication processes is reduced. Furthermore, since authentication is performed by a simple method in the area, convenience can be improved.

### (Sixth embodiment) (Separated ID electronic money)

Hereinafter, the sixth embodiment of the present invention will be described in details with reference to the drawings.

The present embodiment is a card type electronic money system is characterized by an IC card on which electronic money information is recorded, a mobile terminal device for validating use of the electronic money information, and a settlement or charging process performed with IC card information and communication with a mobile terminal. Figure **13** shows the detailed structure thereof.
The card type electronic money system is formed of an IC card **1100,** a mobile terminal **1101,** and a reader/writer **1102.**
The IC card **1100** includes: an IC card antenna for obtaining a signal by a radio wave from the reader/writer **1102;** an IC card communication section which controls information communication with the reader/writer; a memory formed of ROM to which an operation program is previously stored and an EEPROM to which rewritable information such as electronic money information or the like is stored; a card ID information storage section which is inherent to each card (unique to a card user); and a CPU which controls main components of the card.

The mobile terminal **1101** is formed of: an antenna used for sending and receiving information to and from the reader/writer; a mobile terminal communication section which controls information communication with the reader/writer; a mobile ID storage section to which mobile ID inherent to the mobile terminal is previously stored; a display device formed of a liquid crystal display or the like; a telephone communication section which controls usual telephone call or communication such as universal-use internet or the like; keys for inputting numerical or text information; and a CPU which controls main components of the mobile terminal.
The reader/writer **1102** is formed of: an IC card antenna used for communication with the IC card **1100;** an IC card communication section for controlling information communication with the IC card; an antenna used for communicating with the mobile terminal; a mobile terminal communication section for controlling information communication with the mobile terminal; a card information encrypting and decrypting section for decrypting the electronic money information received from the IC card and encrypting electronic money information to be recorded on the IC card by using the mobile ID information obtained from the mobile terminal as a key; a card information updating section for updating the electronic money information by a settlement process and/or a charging process; and an input section for inputting information for a settlement process and/or a charging process.

For communication using the IC card antenna, for example, a communication form which operates with power and a clock supplied from the reader/writer **1102** by communication using electromagnetic induction, has a carrier wave of **13.56** MHz, and utilizes Manchester as an encoding method is used.
Next, operations of the card type electronic money system will be described.
First, a communication form between the IC card **1100** and the reader/writer **1102** is described.
The communication form of the IC card **1100** and the reader/writer **1102** can be roughly separated into: **(1)** a card capture and key exchange process by the reader/writer; **(2)** a mutual authentication process between the reader/writer and the IC card; and **(3)** data communication.

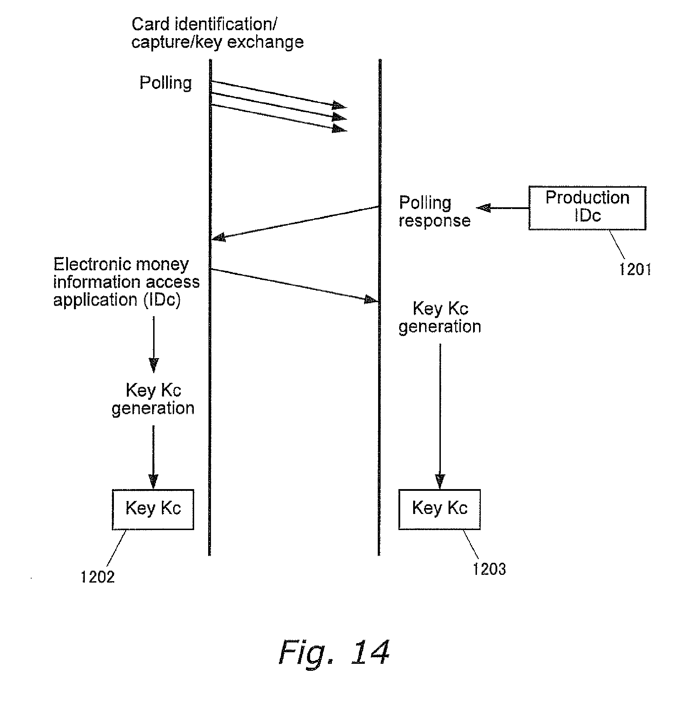

Figure **14** is a flow diagram illustrating a flow of a capture and key exchange process between the reader/writer and the IC card.

The reader/writer calls (polls) unspecified IC cards to check whether an IC card with which it can communicate is in a communicable range. In such a state, if the user intentionally holds his/her IC card near the IC card antenna of the reader/writer, and the IC card is polled, it sends a polling response to the reader/writer by sending its production ID (card ID) IDc to the reader/writer.
When the reader/writer receives the polling response, it sends an electronic money information access application to the IC card, having the production ID received from the IC card as an identifier.
When the IC card receives the electronic money information access application, it generates a key Kc by performing data conversion of the electronic money information access application by using, for example, a one-way function. The reader/writer also generates a key Kc by using the same one-way function as the IC card for the electronic money information access application which it sent to the IC card. In this way, a common key Kc can be generated by the reader/writer and the IC card without outputting the key information as it is to the communication path.

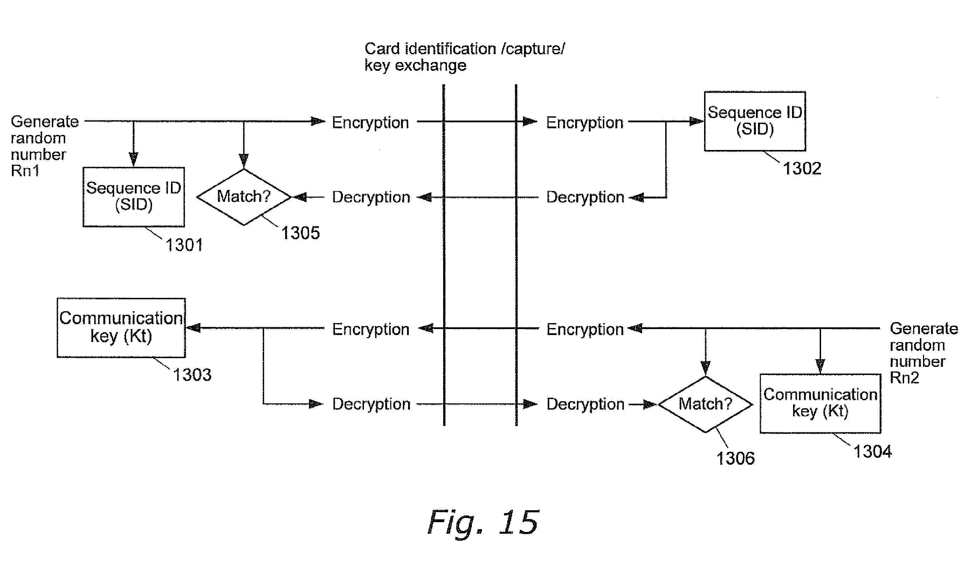

Figure **15** is a flow diagram showing a mutual authentication process for the reader/writer and the IC card to authenticate each other whether they are valid devices.
First, a random number generator, which is not shown, of the IC card communication section of the reader/writer **1102** generates a random number. The random number generated by the random number generator is stored in a temporal storage section as a sequence ID, and is also encrypted with the key Kc generated by the above key exchange process at the IC card communication section to be sent to the IC card.
When the IC card receives the encrypted random number, it decrypts the random number with the key Kc generated by the above key exchange process. The decrypted result is temporally stored as a sequence ID, and is also encrypted again by using the key Kc and sent to the reader/writer.
When the reader/writer receives the encrypted random number, it decrypts the random number using the key Kc, and checks whether it matches random number Rn1 generated by itself **(1305).** If they do not match, the process is suspended as a mutual authentication error.

If it is confirmed to match the random number Rn**1**, the random number Rn**2** is generated at the IC card communication section of the IC card **1100,** and is temporally stored as a communication key Kt **1304.** The random number Rn**2** is also encrypted with the key Kc, and is sent to the reader/writer.
When the reader/writer receives the encrypted random number Rn**2**, it decrypts the random number with the key Kc, and temporally stores as a communication key. Also, the reader/writer encrypts the random number again with the key Kc and sends it to the IC card.
When the IC card receives the encrypted random number Rn**2**, it decrypts the random number with the key Kc and compares the decrypted result with the random number Rn**2** generated by itself. If they do not match, the process is suspended as a mutual authentication error.
In such a way, if both devices are valid devices, common (same) sequence IDs **1301** and **1302,** and communication keys **1303** and **1304** can be obtained.

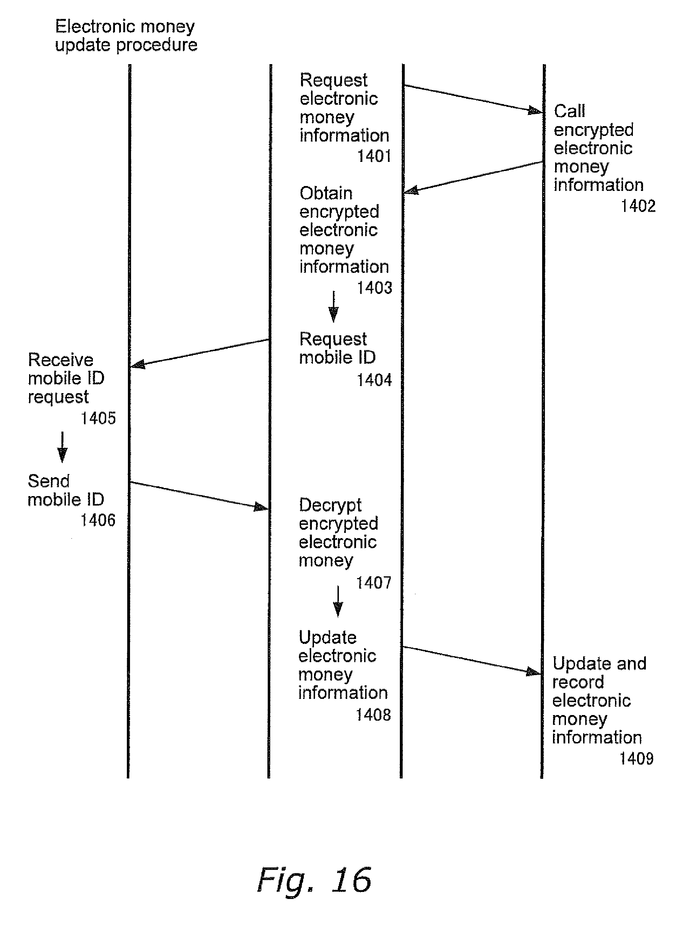

When mutual authentication is completed, that is, when the reader/writer and the IC card complete authentication to check whether the other device is a valid device or not, data communication safe against frauds such as manipulation, eavesdropping and the like can be performed by performing communication using sequence IDs and communication keys they generated in common (and commands encrypted by them).
As shown in Figure **16****,** in the card type electronic money system of the present embodiment, the reader/writer outputs a request for reading out the encrypted electronic money information stored in the EEPROM of the IC card after the reader/writer and the IC card are authenticated **(1401).**
When the IC card receives the reading out request, it reads out the electronic money information stored in its EEPROM and sends it to the reader/writer **(1402).**
When the reader/writer receives the encrypted electronic money information from the IC card, it searches for accessible mobile terminals with its antenna and mobile terminal communication section to obtain the key information for decrypting the encrypted electronic money information. The reader/writer sends a request for sending the mobile ID to the accessible mobile terminal **(1404).**

When the mobile terminal receives the mobile ID sending request from the mobile terminal communication section of the reader/writer, it sends the mobile terminal ID stored therein to the reader/writer.
When the reader/writer receives the mobile terminal ID, it tries to decipher the encrypted electronic money information received from the IC card using the mobile terminal ID as a key.
If decipherment succeeds, it is determined that use of electronic money stored on the IC card is permitted. The electronic money information is updated based on the charging process or the settlement process **(1408),** and is sent to the IC card. The electronic money information in the IC card is updated.
In this way, the settlement process and the charging process of the card type electronic money system of the present embodiment is completed.
The reader/writer of the present embodiment sends the mobile ID request (1404) to all the accessible mobile terminals and obtains the mobile terminal IDs of all the accessible mobile terminals.

However, only one of the mobile terminal IDs can be used for deciphering the encrypted electronic money information recorded on the IC card. By trying the decrypting process with all the received mobile terminal IDs, the encrypted electronic money information can be decrypted.
If the encrypted electronic money information cannot be decrypted with any of the received mobile terminal IDs, however, the process is suspended as not having an access right to the IC card. Thus, if no corresponding mobile terminal is in the limited area in which the IC card is used, access to the IC card cannot be established.
This is just like account access means utilizing a passbook and a registered seal, which can be used only when there are two types of information only the user has. Thus, the card type electronic money system according to the present embodiment has a sufficient reliability and safety in terms of dealing money information.

However, from the user's point of view, the action of actually setting a seal is replaced with an automatic process of reading out the portable mobile terminal ID. So, even when the reliability and the safety are sufficient the sense of safety of the user may be improved by adding, for example, means for notifying the user that decryption of the encrypted electronic money **(1407)** succeeds, which means that access to the electronic money is permitted and the settlement process or the charging process is performed, by sending the mail address information at the time same as sending the mobile ID **(1406).**
Further, by adding means for confirming update with the user by using the keys of the reader/writer or the mobile terminal (e.g., pressing one button) at some point after the mobile ID is received and the encrypted electronic money is decrypted **(1407)** and before the electronic money information is updated **(1408)** in order to suspend the process until the confirmation is detected, the sense of safety of the user is further improved, and the higher reliability can be ensured.

### (Seventh embodiment) (Crediting utilizing a settlement server)

Hereinafter, the seventh embodiment of the present invention will be described in details with reference to the drawings.

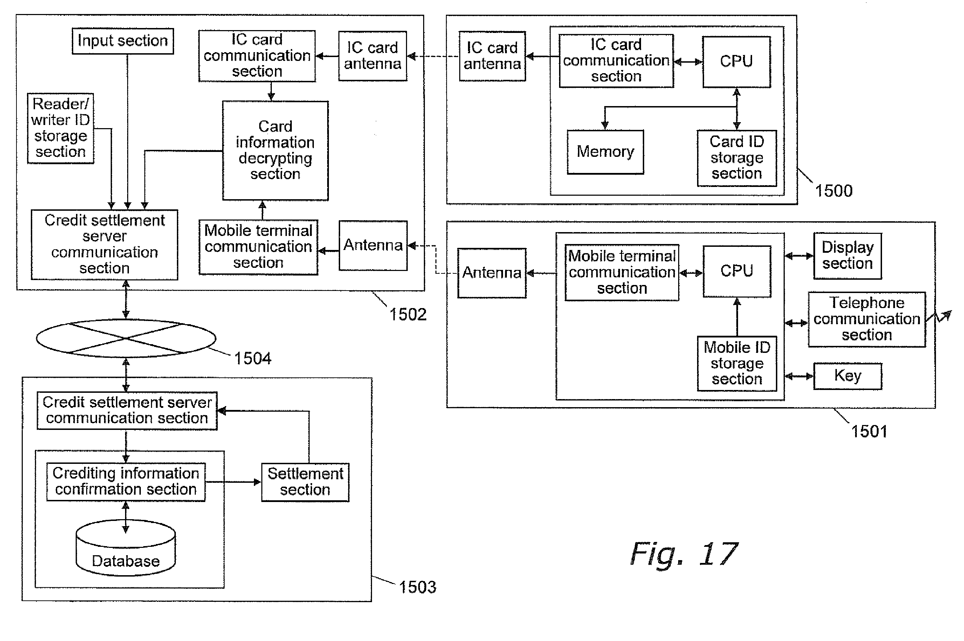

The seventh embodiment of the present invention is a credit settlement system formed of: an IC card on which crediting information is recorded; a mobile terminal which stores mobile ID for permitting use of the crediting information; a reader/writer for reading out the crediting information and also reading out the mobile ID to validate use of the crediting information; and a credit settlement server for receiving the crediting information from the reader/writer and specifying the card information of the user to perform credit settlement. Figure **17** is a schematic diagram of the credit settlement system.
The credit settlement system is formed of an IC card **1500** which stores the crediting information, a mobile terminal **1501** which stores the mobile ID for validating use of the crediting information, a reader/writer **1502** for reading out the crediting information from the IC card **1500** and also reading out the mobile ID from the mobile terminal **1501** to send the extracted crediting information to the credit settlement sever, and a credit settlement server **1503** for settling based on a database which stores the crediting information from the reader/writer **1502** and a card information list.

The IC card **1500** of the present embodiment is different from the IC card **1100** of the sixth embodiment on the point that the stored information is not electronic money information but the crediting information. The crediting information is the same as crediting information for specifying a person recorded on a credit card in a system using a current magnetic or IC card. The IC card of the present embodiment has a similar structure and functions as the IC card of the sixth embodiment besides the above mentioned difference. Thus, detailed description thereof is omitted.
The mobile terminal **1501** of the present embodiment is a device for sending a mobile ID, which it has, to the reader/writer upon a request from the reader/writer **1502.** The mobile terminal **1501** has a similar structure and functions as the mobile terminal **1101** of the sixth embodiment, and thus, detailed description thereof is omitted.
The reader/writer of the present embodiment is formed of: an IC card antenna for receiving encrypted crediting information stored in the memory of the IC card **1500;** an IC card communication section for controlling communication with the IC card; an antenna for receiving the mobile ID stored in the mobile terminal **1501;** a mobile terminal communication section for controlling communication with the mobile terminal **1501;** a card information decrypting section for decrypting the encrypted crediting information from the IC card **1500** with the mobile ID read out from the mobile terminal **1501;** a reader/writer ID storage section for storing the reader/writer ID; an input section formed of keys, a barcode reader, an infrared data communication device, or an RFID reader which is for inputting billed amount information; and a credit settlement server communication section for communicating with the crediting server by having a dedicated line or universal-use internet as a communication media.

The IC card communication section of the reader/writer is a block having similar functions as the IC card communication section in the sixth embodiment. By performing **(1)** IC card capture and key exchange process, **(2)** mutual authentication process with the IC card, and **(3)** secure data communication with the IC card, the encrypted crediting information stored in the IC card **1500** is obtained and output to the card information decrypting section.
The mobile terminal communication section of the reader/writer is a block for outputting the mobile ID sending request to all the communicable mobile terminals after mutual authentication by the IC card communication section is finished normally, receiving the mobile ID, and outputting the received mobile ID to the card information decrypting section. The mobile terminal communication section is a block having similar functions as the mobile terminal communication section in the reader/writer of the sixth embodiment.
The card information decrypting section of the reader/writer is a section for deciphering the encrypted crediting information received from the IC card **1500** with the mobile ID received from the mobile terminal **1501** and extracting the crediting information of the user. The card information decrypting section is formed using a DEC decrypter, or an AES decrypter having the mobile ID as a secret key.

The input section of the reader/writer is means for inputting the billed amount information for the user, which is formed of numeric keys, a barcode reader, infrared input device or RFID reading device and outputs the input billed amount information to the credit settlement server communication means.
The reader/writer ID storage section of the reader/writer is a section for previously storing inherent identification information which is unique to each reader/writer. The reader/writer ID storage section is used for the key exchange process and the mutual authentication process with the credit settlement server **1503** by the credit settlement server communication device, and the read out reader/writer ID is output to the credit settlement server communication section.
The credit settlement server **1503** in the credit settlement system according to the present embodiment is connected to the reader/writer **1502** via a dedicated line or a universe-use network **1504.**

The credit settlement server communication section of the credit settlement server establishes secure data communication through the key exchange process and mutual authentication process and by encrypting a key which changes over time in response to the communication application to the credit settlement server from the reader/writer having its reader/writer ID as an identifier. The credit settlement server communication section obtains the billed amount information and crediting information of the user from the reader/writer **1502** and outputs them to the crediting information confirmation section.
The crediting information confirmation section of the credit settlement server uses the database having the crediting information of the user as a list to determine whether the crediting information is permitted to be used, and also obtains the bank account number of the user to output it to the settlement section.
The database is a database for managing a list of user identification information such as the name or address of the user, account numbers used for settlement, and the like for the user who previously applies to obtain the IC card.

The settlement section of the credit settlement server applies the financial institution of the user for withdrawal of the charged amount from the account number based on the account number of the user from the crediting information confirmation section and the billed amount information from the credit settlement server communication means to complete the settlement. The settlement section notifies the reader/writer that the settlement process is completed by using the credit settlement server communication means.
The credit settlement system of the present embodiment is characterized in that the crediting information encrypted using the mobile ID of the mobile terminal device of the user is previously stored in the IC card.
This means that the crediting information recorded on the IC card cannot be decrypted and used unless there is the mobile ID. On the other hand, complexity of signing or inputting of a password by the user, which has been required conventionally for using the crediting information, can be eliminated.

Further, since two types of information which only the user has, i.e., the mobile ID of the mobile terminal and the crediting information of the IC card, are used for confirming the settlement, security having the level same as or higher than that of a combination of a conventional credit card and signing or input of a password can be secured.
Although it is not described in details in the present embodiment, the secure communication by encrypting a key which changes over time by key exchange, mutual authentication and the like is also desirable when the reader/writer reads out the mobile ID from the mobile terminal.
Further, as described in the sixth embodiment, the sense of safety of the user can be further obtained by adding means for confirming completion of settlement which allows the user to confirm by pressing one button of the mobile terminal before the credit settlement is completed.

### (Eighth embodiment) (Air charging)

Hereinafter, the eighth embodiment of the present invention will be described in details with reference to the drawings.

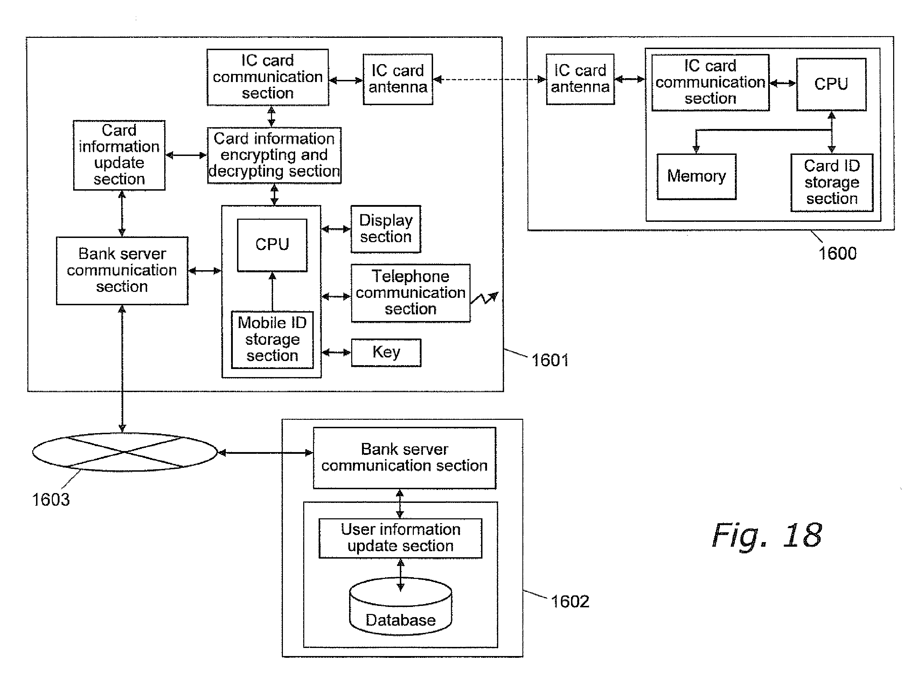

The present embodiment provides an IC card type electronic money system which can perform electronic money charging of the IC card type electronic money at any time, in any place. Figure **18** shows a detailed structure thereof.
The IC card type electronic money system of the present embodiment is formed of: an IC card which stores electronic money information and user account specifying information; a mobile terminal **1601** which reads out the electronic money information and user account specifying information from the IC card **1600** and also has keys and the like for receiving instructions from the user; and a bank server **1603** which is connected to the mobile terminal **1601** via a dedicated line or a universal-use network **1603.**
The IC card **1600** of the present embodiment has a similar structure and functions as the IC cards described in the sixth and seventh embodiments. However, the IC card of the present embodiment is different from the IC cards described in the sixth and seventh embodiments on the point that it stores the encrypted electronic money information and encrypted user account information.

The mobile terminal **1601** of the present embodiment is formed of: an IC card antenna for receiving information from the IC card; an IC card communication section for controlling secure communication with the IC card, a display section formed of a liquid crystal display or the like; a telephone communication section for establishing a line with other mobile terminals to send and receive audio information and the like; keys formed of numeric keys and the like; a CPU for controlling operations of main blocks; a mobile ID storage section for storing the mobile ID unique to each mobile terminal; a card information encrypting and decrypting section for decrypting or encrypting the encrypted electronic money information and the user account information read out from the IC card by using the mobile ID received from the mobile terminal as a key; a card information update section for updating the electronic money information in accordance with the billed amount information and the electronic money information inputted from the keys; and a bank server communication section for communicating the user account information to the bank server.

The IC card antenna of the mobile terminal **1601** is a block for supplying power and clock to the IC card when the IC card enters the communicable range, and receiving the encrypted electronic money information and the encrypted user account information from the IC card in which they are stored. The IC card antenna has a similar structure and functions as the IC card antennas in the reader/writers in the sixth and seventh embodiments.
The IC card communication section of the mobile terminal is a block which performs capture of the IC card, key exchange, and mutual authentication for establishing secure communication with the IC card. The IC card communication section has similar functions as the IC card communication section in the reader/writers described in the sixth and seventh embodiments.
The display section of the mobile terminal **1601** is a so-called display device. Usually, it is formed of a liquid crystal display or the like.

The key of the mobile terminal **1601** represents so-called numeric keypad. They are input means for inputting numeric information, text information, and the like.
The telephone communication section of the mobile terminal **1601** is a so-called mobile phone device which establishes a line based on a telephone number or the like input from the keys to exchange audio information and the like.
The CPU of the mobile terminal **1601** receives a mobile ID request from the card information encrypting and decrypting section, reads out the mobile ID unique to each mobile terminal stored therein to output to the card information encrypting and decrypting section.
The card information encrypting and decrypting section of the mobile terminal **1601** is a block which decrypts the encrypted electronic money information and the encrypted user account information received from the IC card by using the mobile ID stored therein. In this way, the card information encrypting and decrypting section extracts the electronic money information and user account information and outputs them to the card information update section, and/or encrypts the electronic money information updated by the card information update section by using the mobile ID information stored therein as a key. The card information encrypting and decrypting section is formed of a DES encrypting and decrypting or AES encrypting and decrypting block having the mobile ID information as a key. Further, the decrypted user account information is output to the bank server communication section.

The bank server of the mobile terminal **1601** is a communication section which performs communication with a bank server using a dedicated line or a universal-use network. It performs key exchange, mutual authentication or encrypted data communication with the bank server to have secure communication with the bank server, and sends the account information decrypted by the card information decrypting section and the additional amount information input from the keys to the bank server.
The bank server **1602** of the present embodiment is formed of: a bank server communication section for communicating with the mobile terminal **1601;** a user information update section for specifying the account of the user based on the user account information from the mobile terminal **1601** and the account information previously registered for each user in a form of a list, subtracting the amount information indicated by the received additional money information from the remaining balance, and outputting permission for additional money to the bank server communication section; and a database for previously managing and recording account information for each user as a list for each user.

The bank server communication section of the bank server **1602** establishes a secure communication path with the mobile terminal **1601** to receive the user account information and additional money information and output to the user information update section.
The user information update section of the bank server **1602** specifies the account information of the user based on the user account information from the bank server communication section, and the database which previously manages the account information (name, account number, the information on the amount of money permitted to use, loan information and the like) for each user, and subtracts the amount of money indicated by the additional money information from the information on the amount of money permitted to use of the user to generate addable money information. The addable money information is output to the mobile terminal **1601** via the bank server communication section.
When the mobile terminal **1601** receives the addable money information, it updates the electronic money information by adding the addable money information from the bank server **1602,** and sends it to the card information encrypting and decrypting section.

The card information encrypting and decrypting section encrypts the electronic money information updated by adding at the card information update section, by having the mobile ID information stored in the mobile terminal **1601** as a key. The encrypted information is sent securely to the IC card **1600** via the IC card communication section.
When the IC card **1600** receives the updated and encrypted electronic money information, it records the received encrypted electronic money information in the memory therein to complete the charging process.
In this way, the amount of money indicated by the additional money information which is input by the user using the mobile terminal is transferred from the bank account to the IC card.
Such an operation is enabled since the mobile phone according to the present embodiment includes the communication means with the IC card, electronic money updating means, and bank server communication means as its components.

According to the present embodiment, use of the charge type IC card electronic money allows charging to the IC card, which has conventionally been able at only an IC card reader/writer for charging, to be performed in any place with the mobile terminal device.
Further, since the electronic money information and user account information which are recorded on the IC card cannot be used unless the mobile ID of the mobile terminal which the user uses is confirmed, a security of the level same as or higher than that of the combination of a passbook and a registered seal can be achieved.

### (Ninth embodiment) (Information recording apparatus)

In the above sixth through eighth embodiments, the present invention is applied to the electronic money system using the authentication system or the crediting system. However, the present invention is not limited to such applications.
By utilizing the authentication system in an information recording apparatus, information recording which allows only the user to browse can be realized. This is achieved by, for example, recording information which can be used by only the user on information recording media such as DVD recorders and the like. An encryption key for previously recording information on the IC card is further encrypted with an identifier of the mobile device and is recorded.

The information recording apparatus reads out the content encryption key which has been encrypted by holding the IC card information of the user before recording the information.
At the same time as or after reading out the encrypted content encryption key, the identifier is read out from the mobile device.
The information recording apparatus decrypts the encrypted content encryption key by using the identifier of the mobile device to extract the content encryption key. The information recording apparatus encrypts the contents with the content encryption key and records on the information recording medium.
For reproducing the content, the content encryption key is extracted similarly. The content recorded on the information recording medium is decrypted with the content encryption key and reproduced.
According to the above-described structure, two types of information which only the user is permitted to have, i.e., the information recorded on the IC card, and the information in the mobile terminal, are used for extracting the content encryption key. The key information is used for encryption/recording, and decryption/reproduction of the content. Thus, the information recording apparatus and the information reproducing apparatus, which do not allow browsing by a third party who does not have the IC card and the corresponding mobile terminal, can be provided.

### (Structure)

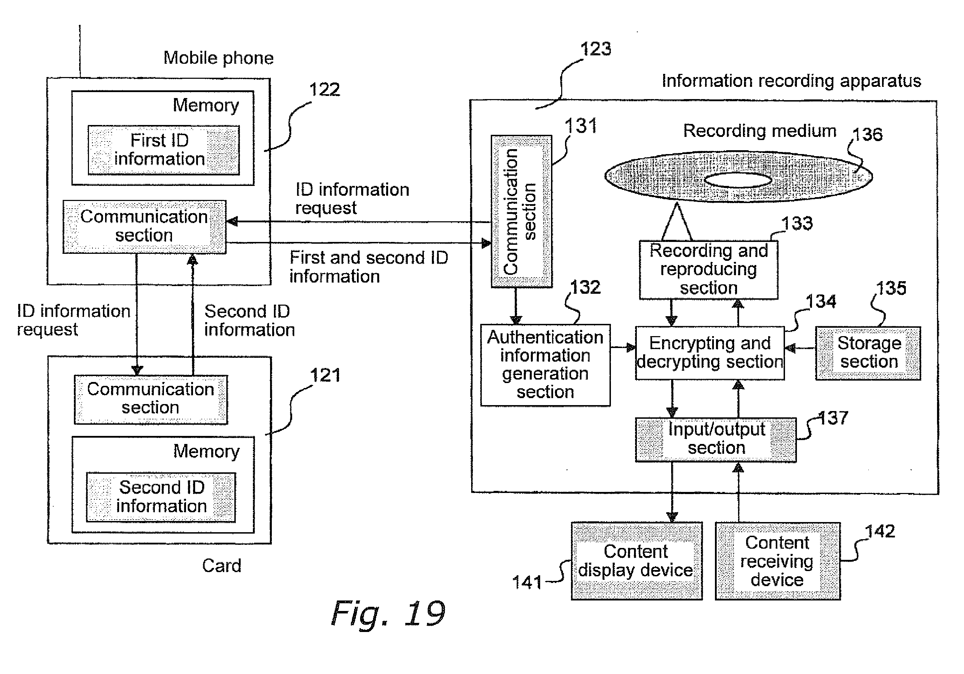

A form of such an information recording apparatus will be described specifically with reference to Figure **19****.**

Figure **19** is a block diagram showing a structure of an information recording apparatus **123** such as DVD player/recorders, or the like. The information recording apparatus **123** shown in Figure **19** is an apparatus which generates authentication information for authenticating a user based on two types of information which a user of the apparatus has, and uses the generated authentication information to reproduce information recorded on a recording medium **136** or records information on the recording medium **136.** The recording medium **136** may be, for example, a hard disc, CD, DVD, or other type of media. Reproduction of information refers to not only reproducing video and audio recorded on the recording medium **136** on a monitor or a speaker, but also a wide range of use such as transferring or copying the recorded information, and the like.
The information recording apparatus **123** is formed of a recording and reproducing section **133,** an encrypting and decrypting section **134,** a storage section **135,** an authentication information generating section **132,** an input/output section **137,** and a communication section **131.**

The recording and reproducing section **133** records the content encrypted at the encrypting and decrypting section **134** on the recording medium **136,** or reproduces the content recorded on the recording medium 136 and outputs to the encrypting and decrypting section **134.** The recording and reproducing section **133** may be formed of, for example, an optical pickup, an optical pickup driving device, or the like.
The communication section **131** obtains first ID information and second ID information respectively from the mobile phone **122** and the IC card **121,** which are provided outside the information recording apparatus **123.** Since the detailed structures of the mobile phone **122** and the IC card **121** are the same as those shown in Figure **13****,** descriptions thereof are omitted.
The authentication information generating section **132** generates the authentication information based on the first ID information and the second ID information obtained via the communication section **131.**

The storage section **135** stores content ID used for encrypting the content.
The encrypting and decrypting section **134** encrypts the content obtained via the input/output section **137** with the content ID, or decrypts the encrypted content obtained from the recording and reproducing section **133** with the content ID. Further, the encrypting and decrypting section **134** encrypts the content ID with the authentication information, or decrypts the encrypted content ID with the authentication information.
The input/output section **137** is connected to an external device, and inputs/outputs the content. Specifically, the input/output section **137** obtains the content from a content receiving device **142** connected outside (or included in) the information recording apparatus **123.** Herein, the content receiving device **142** may be, for example, a tuner device which receives broadcasting and outputs a content signal (for example, video/audio data), or may be a device which obtains a content signal by communication means via a network such as internet and outputs the signal. Further, the input/output section **137** outputs the content signal to a content display device **141** connected outside such as a monitor or the like to have the content signal being displayed.

Now, the relationship between the first ID information, the second information, the authentication information, the content ID, and the content is described.
The first ID information is the ID information of the mobile phone **122** and is information inherent to the mobile phone **122.** The second ID information is the information obtained by encrypting the authentication information with the first ID information. The content ID is information inherent to the content. In other words, the authentication information generating section **132** generates authentication information by decrypting the second ID information with the first ID information.

### (Authentication process)

The authentication process in the information recording apparatus **123** is described. In the authentication process in the information recording apparatus **123,** two types of information which only the user of the information recording apparatus **123** is permitted to have, i.e., the information recorded on the IC card **121** and the information in the mobile phone **122,** are used for extracting the authentication information. If the authentication information is extracted, the user having the IC card **121** and the mobile phone **122** is authenticated as a user of the information recording apparatus **123.** In the information recording apparatus **123,** this authentication information is used for performing encryption/recording and decryption/reproduction of the content.

Hereinafter, the authentication process is described in more details with reference to flow diagrams.

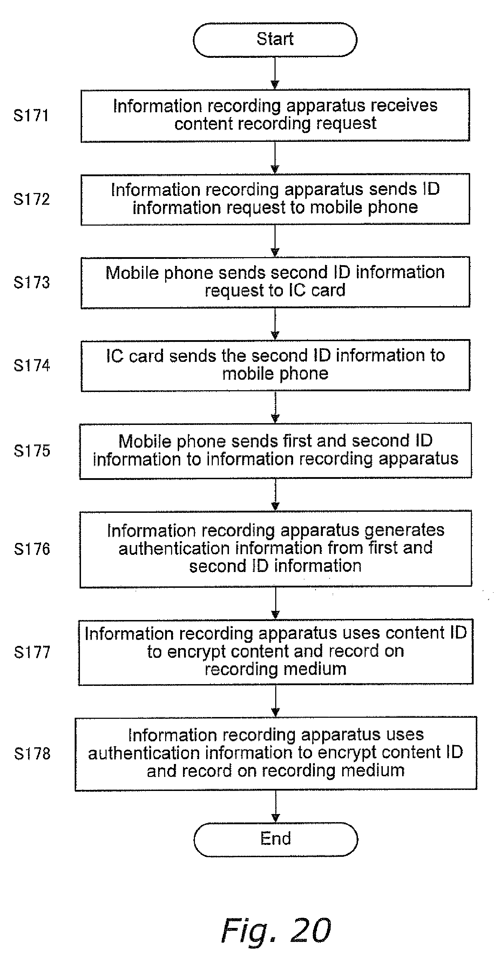

Figure **20** is a flow diagram showing an authentication process for recording content.
First, the information recording apparatus **123** receives a content recording request **(S171).** The content recording request is given manually by the user, or automatically by an included timer or the like. When the information recording apparatus **123** receives the content recording request, the communication section **131** sends an ID information request to the mobile phone **122,** which is a first device **(S172).**
When the mobile phone **122** receives the ID information request, the mobile phone **122** sends the ID information request to the IC card **121,** which is a second device **(S173).**
When the IC card **121** receives the ID information request, it sends the second ID information stored in the memory (see Figure **13****)** to the mobile phone **122 (S174).**

When the mobile phone **122** receives the second ID information from the IC card **121,** it sends the second ID information, and the first ID information which is stored in the mobile ID storage section (see Figure **13****)** to the information recording apparatus **123 (S175).**
In the information recording apparatus **123,** the communication section **131** receives the first and the second ID information, and the authentication information generating section **132** generates the authentication information **(S176).** The encrypting and decrypting section **134** uses the content ID stored in the storage section **135** to encrypt the content obtained from the content receiving device **142.** Further, the recording and reproducing section **133** records the encrypted content to the recording medium **136 (S177).** The encrypting and decrypting section **134** uses the authentication information to encrypt the content ID. Further, the recording and reproducing section **133** records the encrypted content ID to the recording medium **136 (S178).**

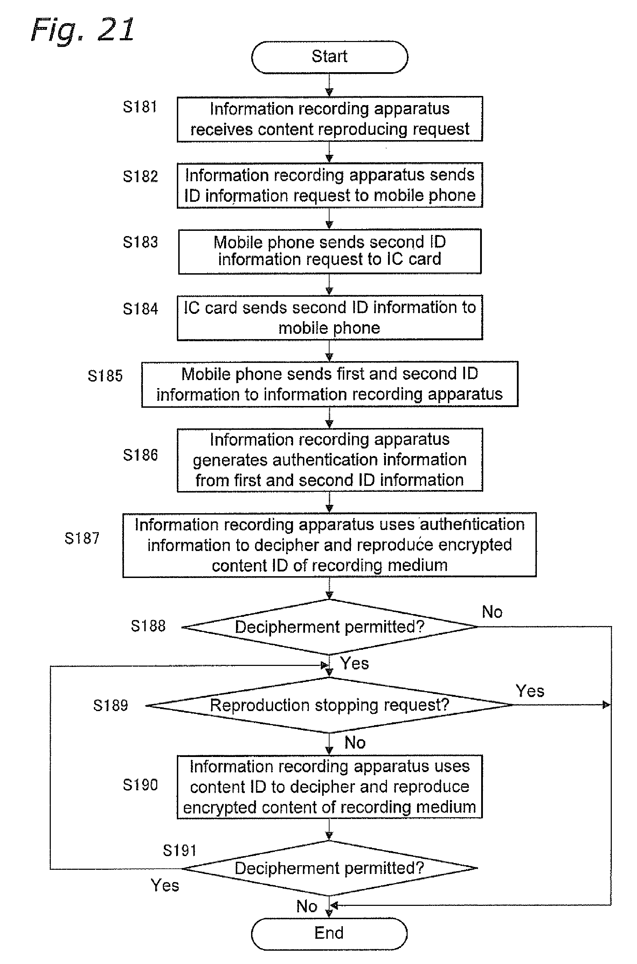

Figure **21** is a flow diagram showing an authentication process for reproducing content.
First, the information recording apparatus **123** receives a content reproducing request **(S181).** The content reproducing request is given manually by the user, or automatically by an included timer or the like. When the information recording apparatus **123** receives the content reproducing request, the communication section **131** sends an ID information request to the mobile phone **122,** which is a first device **(S182).**
When the mobile phone **122** receives the ID information request, the mobile phone **122** sends the ID information request to the IC card **121,** which is a second device **(S183).**
When the IC card **121** receives the ID information request, it sends the second ID information stored in the memory (see Figure **13****)** to the mobile phone **122 (S184).**
When the mobile phone **122** receives the second ID information from the IC card **121,** it sends the second ID information and the first ID information stored in the mobile ID storage section (see Figure **13****)** to the information recording apparatus **123 (S185).**

In the information recording apparatus **123,** the communication section **131** receives the first and the second ID information, and the authentication information generating section **132** generates the authentication information **(S186).** The encrypting and decrypting section **134** obtains the encrypted content ID which is recorded on the recording medium **136** via the recording and reproducing section **133,** and uses the authentication information to decrypt the content ID **(S187).** If the content ID cannot be decrypted at this step **(S188),** the process is finished as the authentication is not being allowed. In other words, the reproduction of the content is refused. On the other hand, if the content ID can be decrypted **(S188),** the authentication is permitted. Further, the encrypting and decrypting section **134** determines whether a reproduction stopping request is received or not **(S189).** The reproduction stopping request may be given manually by the user, or automatically by an included timer or the like, or by automatic determination on the end of reproduction of the content being reproduced. If the reproduction stopping request is received, the process is finished. On the other hand, if the reproduction stopping request is not received, the encrypting and decrypting section **134** obtains the encrypted content recorded on the recording medium **136** via the recording and reproducing section **133** and uses the content ID to decrypt the content (**S190).** At this step, if the content cannot be decrypted **(S191),** the process is finished as the authentication is not being allowed. In other words, the reproduction of the content is refused. On the other hand, if the content ID can be decrypted **(S191),** the authentication is permitted, and the content is reproduced. Then, the process of steps **S189** through **S191** is repeated until the reproduction stopping request is received.

### (Effects)

With above described features, the information recording apparatus **123** has the following effects.

In the information recording apparatus **123,** two types of information which only the user is permitted to have, i.e., the information recorded on the IC card **121** and the information in the mobile phone **122,** are used for generating the authentication information. The authentication information is used for encryption/recording, and decryption/reproduction of the content. Thus, a third party who does not have the IC card **121** and the corresponding mobile phone **122** can be prohibited from browsing.
Moreover, the second ID information stored in the IC card **121,** and received by the information recording apparatus **123** via the mobile phone **122** is the information obtained by encrypting the authentication information with the first ID information. Thus, the security level can be improved compared to that in the case where the authentication information is sent and received without being encrypted.

### (Variations)

### <1>

In the above embodiment, the IC card **121** sends and receives information to and from the information recording apparatus **123** via the mobile phone **122.** However, the IC card **121** may send and receive information directly to and from the information recording apparatus **123.** Further, the IC card **121** may be a card which can be incorporated into the information recording apparatus **123.**

In such a case, a process for the information recording apparatus **123** to obtain the first ID information and the second ID information from the IC card **121** and the mobile phone **122,** and to generate the authentication information (steps **S172** through **S176** of Figure **20** or steps **S182** through **S186** of Figure **21****)** may be a process shown in Figure **22**.
When the information recording apparatus **123** receives the content recording request or the content reproducing request, the communication section **131** sends the requests for the ID information to the mobile phone **122,** which is the first device, and to the IC card **121,** which is the second device **(S192).**
When the mobile phone **122** receives the ID information request, the mobile phone **122** sends the first ID information stored in the mobile ID storage section (see Figure **13****)** to the information recording apparatus **123 (S193).**
When the IC card **121** receives the ID information request, the IC card **121** sends the second ID information stored in the memory (see Figure **13****)** to the information recording apparatus **123 (S194).**

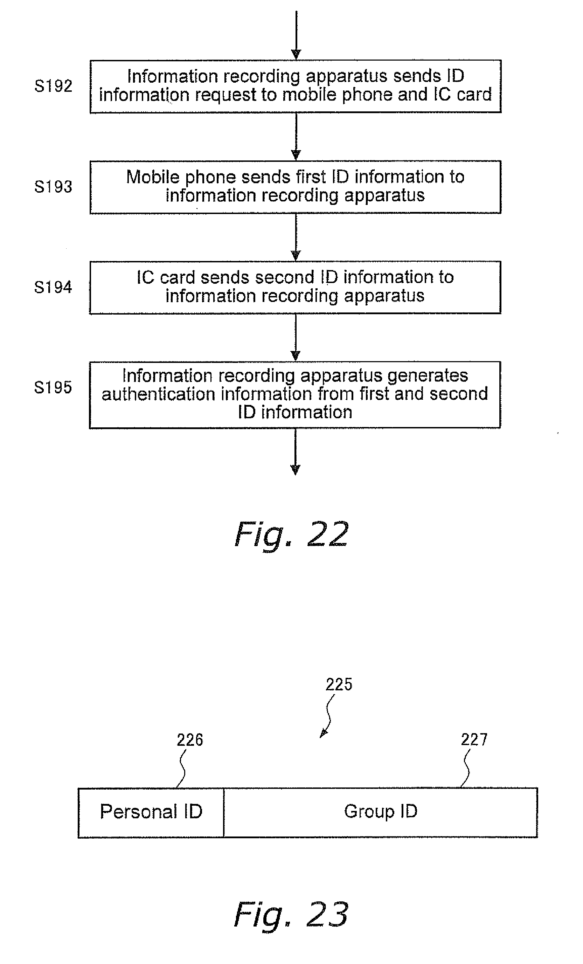

In the information recording apparatus **123,** the communication section **131** receives the first ID information and the second ID information, and the authentication information generating section **132** generates the authentication information **(S195).**
In the process shown in the flow diagram of Figure **22****,** the order for performing the process of the step **S193** and the process of the step **S194** may be changed.

### <2>

The encrypted content ID stored in the recording medium **136** may be encrypted with multiple authentication information.
In such a case, the recording medium **136** stores a plurality of content IDs encrypted with respective authentication information. For reproducing the content, the encrypting and decrypting section **134** uses the authentication information obtained from the authentication information generating section **132** to decrypt the encrypted content ID. At this time, a plurality of the encrypted content IDs are sequentially decrypted using the authentication information obtained from the authentication information generating section **132.** Decrypting is continued as long as there is an encrypted content ID which can be decrypted. If any of the plurality of the encrypted content IDs cannot be decrypted, the process is finished as the authentication is not permitted. On the other hand, if any of the plurality of encrypted content IDs can be decrypted, it is regarded that authentication is permitted and the content is further decrypted using the decrypted content ID.

In such a structure, content recorded on the recording medium **136** can be shared by a plurality of users. In other words, users of the number same as the number of authentication information used for encrypting the content ID can use the content recorded on the recording medium **136.**
The encryption method for encrypting the content IDs may be a method in which multiple authentication information are used for encrypting and decrypting can be performed with any of the multiple authentication information.
In such a case, a storage capacity of the content ID can be reduced.

### <3>

The authentication information may be formed of personal ID inherent to an object to be authenticated, and group ID shared by a group of a plurality of people including the object to be authenticated (e.g., family, school, company and the like).
An information recording apparatus, which is a variation of the information recording apparatus **123,** obtains such authentication information and authenticates a person or a group.

Specifically, the authentication information has a structure shown in Figure **23****.** Authentication information **225** is formed of personal ID **226** and group ID **227.** The group ID **227** may be formed of a plurality of subgroup IDs.
An authentication process using such authentication information 225 is described.

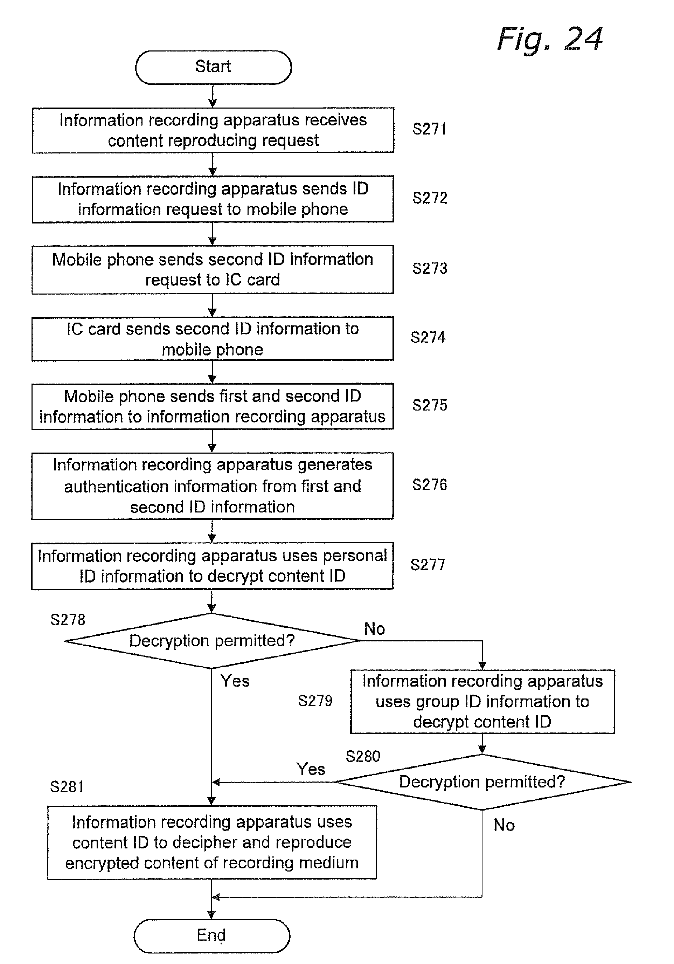

Figure **24** is a flow diagram showing an authentication process for reproducing content.
As shown in Figure **24****,** a process of steps **S271** through **S276** is a process similar to the process of steps **S181** through **S186** described with reference to Figure **21****,** and thus, description thereof is omitted. The authentication information generated at step **S276** is the authentication information **225.**
Next, the encrypting and decrypting section **134** obtains encrypted content ID which is recorded by the recording medium **136** via the recording and reproducing section **133,** and uses the personal ID **226** of the authentication information 225 to decrypt the content ID **(S277).** At this step, if the content ID cannot be decrypted **(S278),** the encrypting and decrypting section **134** uses the group ID **227** of the authentication information **225** to decrypt the content ID **(S279).** At this step, if the content ID cannot be decrypted **(S280),** the process is finished as the authentication is not permitted with this authentication information. In other words, the reproduction of the content is refused.

On the other hand, if the content ID can be decrypted at either step **S278** or **S280,** the authentication is permitted. Thus, the encrypting and decrypting section **134** obtains the encrypted content which is recorded by the recording medium 136 via the recording and reproducing section **133,** and decrypts content using the decrypted content ID **(S281).**
In such a case, the authentication information is formed of the personal ID **226** and the group ID **227.** The encrypted content ID can be decrypted with either one of them. With such a structure, it becomes easy to use the content for only a specific user, or to share it by a group of users.
For recording the content using such authentication information, it is desirable that the encrypting and decrypting section **134** knows with which of the personal ID **226** and the group ID **227** the content ID should be encrypted. Thus, the mobile phone **122** may send mode information indicating which of the personal ID **226** and the group ID **227** is to be used for encrypting the content ID when sending the first ID information and the second ID information.

In the encrypting and decrypting section **134,** the content ID is encrypted by authentication information specified by the mode information.
An authentication process using such mode information is described.

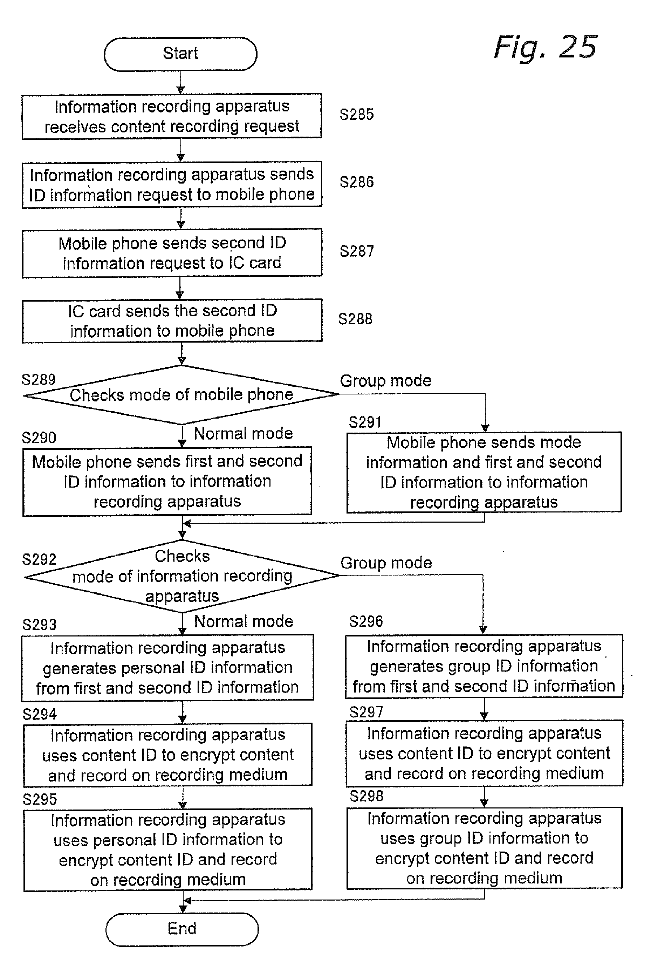

Figure **25** is a flow diagram showing an authentication process for recording content.
As shown in Figure **25****,** a process of steps **S285** through **S288** is similar to the process of step **S171** through **S174** described with reference to Figure **20****,** and thus, description thereof is omitted. The second ID information sent from the IC card **121** to the mobile phone **122** is information obtained by encrypting the authentication information **225** (see Figure **23****)** with the first ID information.
When the mobile phone **122** receives the second ID information, it checks designation of the mode information of the mobile phone **122 (S289).** At this step, if the mode is a normal mode (no designation for the mode information), the mobile phone **122** sends the second ID information and the first ID information which is stored in the mobile ID storage section (see Figure **13****)** to the information recording apparatus **123 (S290).** On the other hand, if the mode is a group mode (mode information designated), the mobile phone **122** sends the second ID information, the first ID information, and the mode information indicating that it is in the group mode to the information recording apparatus **123 (S291).**

In the information recording apparatus **123,** the mode for encryption is checked based on the information obtained by the communication section **131 (S292).**
When the mode information is not included, it is determined that encryption in the normal mode is to be performed, and the authentication information generating section **132** generates the personal ID **226** from the first ID information and the second ID information **(S293).** The encrypting and decrypting section **134** uses the content ID stored in the storage section **135** to encrypt the content obtained from the content receiving device **142.** Further, the recording and reproducing section **133** records the encrypted content on the recording medium **136 (S294).** The encrypting and decrypting section **134** uses the personal ID **226** to encrypt the content ID. Further, the recording and reproducing section **133** records the encrypted content ID on the recording medium **136 (S295).**

On the other hand, when the mode information is included, it is determined that encryption in the group mode is performed, and the authentication information generating section **132** generates the group ID **227** from the first ID information and the second ID information **(S296).** The encrypting and decrypting section **134** uses the content ID stored in the storage section **135** to encrypt the content obtained from the content receiving device **142.** Further, the recording and reproducing section **133** records the encrypted content on the recording medium **136 (S297).** The encrypting and decrypting section **134** uses the group ID **227** to encrypt the content ID. Further, the recording and reproducing section **133** records the encrypted content ID on the recording medium **136 (S298).**
In such a way, it becomes possible to designate whether the content is used by a specific person or is shared by a group upon encrypting.

In the above description, it is described that whether to switch between the normal mode and the group mode is determined by the presence/absence of the mode information. However, each of the modes may be switched based on the content of the mode information. Further, if the group ID **227** includes a plurality of subgroup IDs, the mode information may designate which of the subgroup IDs is used for encryption.
The mode setting of the information recording apparatus **123** may be previously set from outside.

### <4>

In the above embodiment, the storage section **135** may store authentication information of users who can use the information recording apparatus **123.**
In such a case, the storage section **135** has authentication information of users as a database.

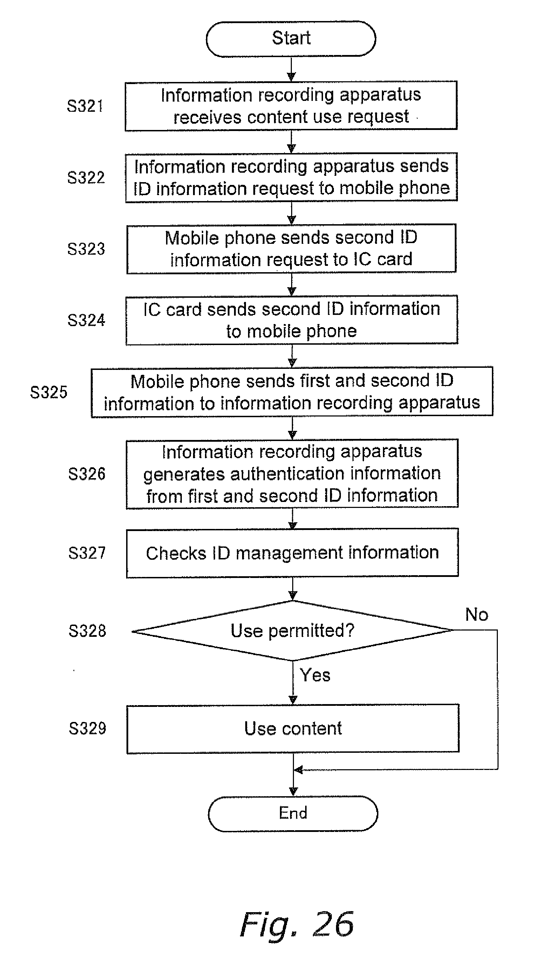

Figure **26** is a flow diagram showing an authentication process for reproducing and storing (hereinafter, referred to as using) content.
As shown in Figure **26****,** a process of steps **S321** through **S326** is similar to the process of steps **S181** through **S186** described with reference to Figure **21****,** or a process of steps **S171** through **S176** described with reference to Figure **20****,** and thus, description thereof is omitted.
The encrypting and decrypting section **134** searches whether the authentication information generated by the authentication information generating section **132** is stored in the database of the storage section **135 (S327).**
If there is no matching authentication information as a result of searching **(S328),** the encrypting and decrypting section **134** finishes encryption/recording and decryption/reproduction of the content. If there is matching authentication information as a result of searching **(S328),** the encrypting and decrypting section **134** uses the identification information to perform encryption/recording and decryption/reproduction of the content **(S329).**

With such a structure, the user of the information recording apparatus **123** is authenticated, and use by a person who does not have user authority can be prevented.
The storage section **135** may store the authentication information of users who can use the information recording apparatus **123.** In such a case, if a person who has improperly used the information recording apparatus **123** in the past tries to use again, it can be prevented.
The authentication information may have a structure shown in Figure **23****.** In such a case, in search of the database, search is respectively performed for the personal ID **226** and group ID **227.** In such a case, search may be performed for only the ID which corresponds to the mode previously set to the information recording apparatus **123** (normal mode or group mode: see variation <3>) (which means, either for the personal ID **226** or the group ID **227).**

### <5>

The information recording apparatus may determine the user authority of the object to be authenticated based on the authentication information.

Such an information recording apparatus **223** will be described specifically with reference to the drawings.

### <Structure>

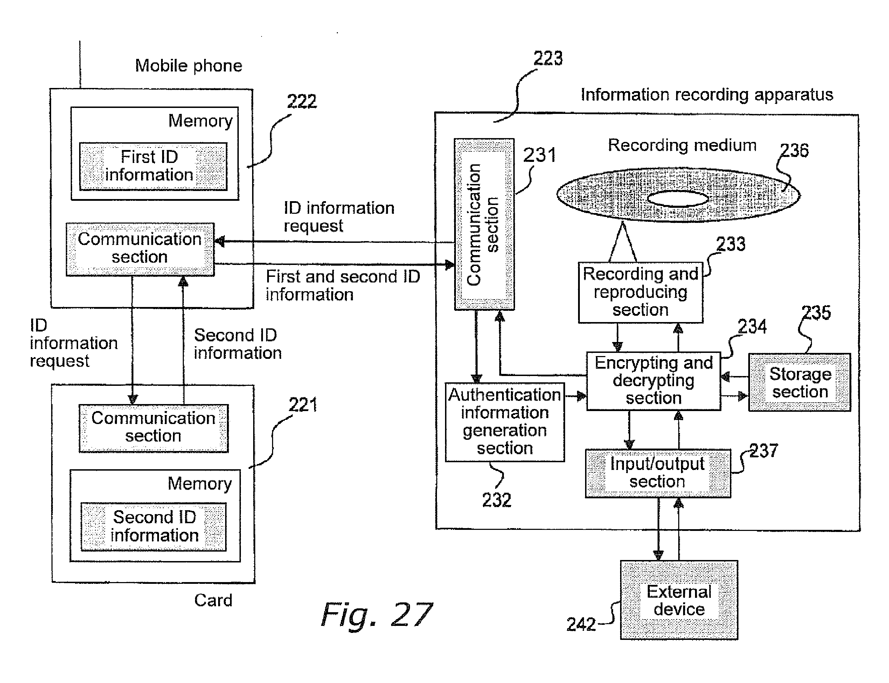

Figure **27** is a block diagram showing a structure of the information recording apparatus **223** such as DVD players/recorders and the like. The information recording apparatus **223** shown in Figure **27** is an apparatus which generates authentication information for authenticating a user based on two types of information which the user of the apparatus has, and uses the generated authentication information to reproduce information recorded on an recording medium **236** or record information on the recording medium **236.**
The information recording apparatus **223** is formed of a recording and reproducing section **233,** an encrypting and decrypting section **234,** a storage section **235,** an authentication information generating section **232,** an input/output section **237,** and a communication section **231.**

The recording and reproducing section **233,** the communication section **231,** and the authentication information generating section **232** function similarly to the recording and reproducing section **133,** the communication section **131,** and the authentication information generating section **132** shown in Figure **19****,** respectively. Thus, descriptions thereof are omitted.
The storage section **235** stores a content ID used for encrypting the content. The storage section **235** further stores an ID management information of the object to be authenticated. The ID management information will be described later.
The encrypting and decrypting section **234** encrypts the content obtained via the input/output section **237** with the content ID, or decrypts the encrypted content obtained from the recording and reproducing section **233** with the content ID. Further, the encrypting and decrypting section **234** encrypts the content ID with the authentication information, or decrypts the encrypted content ID with the authentication information.

The encrypting and decrypting section **234** further performs authentication of the object to be authenticated by using the ID management information stored in the storage section **235.** The authentication process will be described later.
The input/output section **237** is connected to an external device **242,** and inputs/outputs the content.

### <Authentication process>

The authentication process in the information recording apparatus **223** is described. In the authentication process in the information recording apparatus **223,** two types of information which only the user of the information recording apparatus **223** is allowed to have, i.e., the information recorded on the IC card **121** and the information in the mobile phone **122,** are used for extracting the authentication information. Further, the information recording apparatus **223** determines whether the user is trying to use the apparatus within the scope of the user authority of the user based on the extracted authentication information. If the use is within the user authority, the information recording apparatus **223** permits the authentication. If the use is out of the user authority, the information recording apparatus **223** disapproves the use.

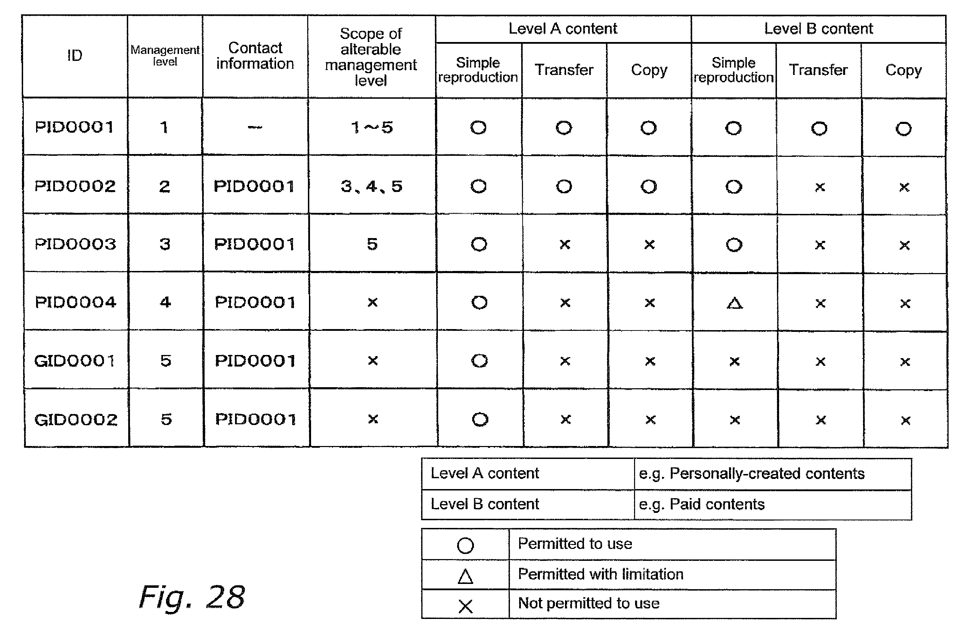

The use of content includes reproduction and recording of the content. The reproduction means not only reproducing the recorded video/audio on a monitor and/or speaker (hereinafter referred to as simple reproduction), but also transferring and copying the recorded information.
The authentication information generated in the present variation is the authentication information having a structure as shown in Figure **23****.**
Now, before describing the authentication process in detail, the ID management information stored in the storage section **235** is described with reference to Figure **28****.**
Figure **28** is a diagram illustrating a structure of the ID management information.
As shown in Figure **28****,** the ID management information includes "management level", "contact information", "scope of alterable management level", and "user authority for each content" for each of the authentication information (personal IDs and group IDs).

The "management level" is an indicator showing a level of authority for each authentication information. In Figure **28****,** the level is divided into five steps. In Figure **28****,** a smaller value shows a higher level.
The "contact information" is access information for accessing a person or an administrator of the group corresponding to the authentication information. It includes, for example, a telephone number and/or ID information of the mobile phone.
The "scope of alterable management level" shows an extent of the management level for which the user of a high management level can alter the use authority. Specifically, Figure **28** shows that a user of personal ID [PID**0001**] can alter the user authority of the users of the management levels from one to five.
The "user authority for each content" is information indicating the scope of authority for each authentication information. The scope of the authority for the contents are shown for each content of different content levels, such as "level A content", "level B content" or the like. In this example, the "level A content" is, for example, contents created personally, such as video/audio taken personally. They are contents which can be permitted to use relatively freely without causing any problem. The "level B content" is, for example, DVDs of movies, CDs of musical pieces, and other paid contents, which cannot be permitted to use freely.

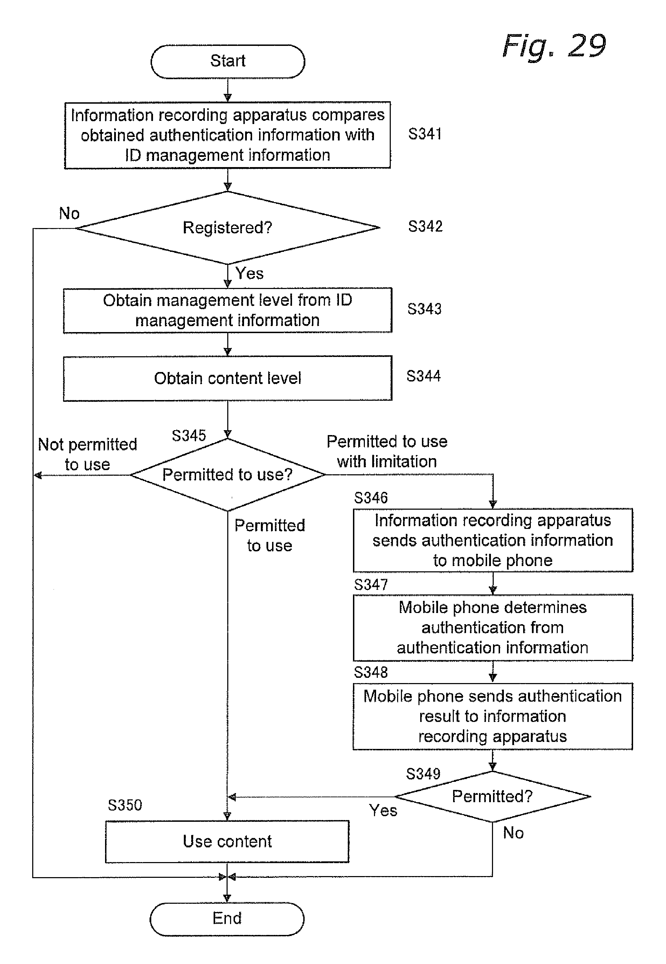

Further, for each of the contents, the user authority is set for each use form (simple reproduction, transferring, copying). In this example, the user authority is separated into three levels, such as "O","Δ", and "× ". "○" indicates that the user is permitted to use the content (i.e., has user authority). "Δ" indicates that the user is permitted to use the content with the permission from the person of high management level (has limited user authority). " × " indicates that user is not permitted to use (has no user authority).
Next, the authentication process is described with reference to Figure **29****.**
Figure **29** is a flow diagram showing the authentication process for reproducing and storing (hereinafter, referred to as using) the content.
In Figure **29****,** the process starts from where the authentication information is already obtained. This means that the process of steps **S321** through **S326** shown in Figure **26** is performed before the process shown in Figure **29****.**

The encrypting and decrypting section **234** searches whether the authentication information generated by the authentication information generating section **232** (either the personal ID or the group ID) is stored in the ID management information of the storage section **235 (S341).**
If there is no matching authentication information as a result of searching **(S342),** the encrypting and decrypting section **234** finishes encryption/recording and decryption/reproduction of the content. If there is matching authentication information as a result of searching **(S342),** the encrypting and decrypting section **234** obtains the management level corresponding of authentication information from the ID management information **(S343).** Further, the encrypting and decrypting section **234** obtains the content level **(S344).** The content level may be previously recorded when the content is recorded on the recording medium **236,** and may be obtained via the recording and reproducing section **233.** Alternatively, the content level may be obtained from the communication section 237 via the network.

Further, the encrypting and decrypting section **234** authenticates the user based on the obtained management level, the content level, and the use request for the content to the information recording apparatus **223 (S345).** Specifically, whether the user is permitted to use, permitted to use with limitation, or is not permitted to use the content is determined.
The process is described specifically with reference to Figure **28****.** For example, the personal ID [PID**0004**] is obtained from the authentication information. The "content level" of the content is "level A". The "use request for content" is "simple reproduction". In such an example, it is determined that the user is permitted to use the content. If the same user tries to "transfer" or "copy" the same content, it is determined that content is not permitted to be used.
When the determined result is "not permitted to use", the encrypting and decrypting section **234** finishes encryption/recording and decryption/reproduction of the content. On the other hand, when the determined result is "permitted to use", the encrypting and decrypting section **234** performs encryption/recording and decryption /reproduction of the content **(S350).**

When the determined result is "permitted with limitation", the encrypting and decrypting section **234** requests authentication to a user who has higher authority based on the "contact information" **(S346** through **S349).**
Specifically, the encrypting and decrypting section **234** sends the authentication information to the "contact information" via the communication section **231 (S346).** The user of the contact information who receives the authentication information decides whether to permit the authentication or not based on the authentication information **(S347),** and sends back the authentication result to the information recording apparatus **223 (S348).** The authentication result is obtained by the encrypting and decrypting section **234** via the communication section **231.** When the authentication result received by the encrypting and decrypting section **234** indicates that "authentication is not permitted" **(S349),** the encrypting and decrypting section **234** finishes encryption/recording and decryption/reproduction of the content. On the other hand, when the authentication result received by the encrypting and decrypting section **234** indicates that "authentication is permitted" **(S349),** the encrypting and decrypting section **234** performs encryption/recording and decryption /reproduction of the content **(S350).**

With the above-structure, use of content can be managed more appropriately. For example, use of content by children can be easily managed by their parents. Further, since the scope of the content, which can be used, can be readily defined in accordance with the authority, security of information is improved.
In the above description, the authentication information is sent to the "contact information" at step **S346.** However, a type of the use request for the content may be sent together. Such authentication confirmation may be performed in a predetermined interval.
In the above description, the ID management information is stored in the storage section **235.** However, the present invention is not limited to such an example, and at least a part of the ID management information may be included in the authentication information.

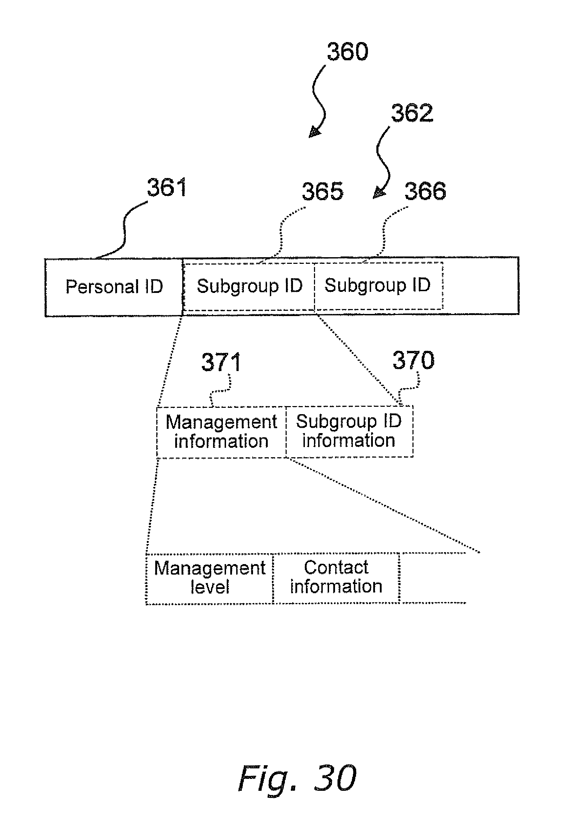

Figure **30** shows a structure of such authentication information.
The Authentication information **360** shown in Figure **30** is formed of a personal ID **361,** and a group ID **362.** The group ID **362** is further formed of subgroup IDs **365, 366,** and so on.
The subgroup ID **365** is further formed of subgroup ID information **370** and the management information **371.** The subgroup ID information **370** is information for specifying the subgroup. The management information **371** includes the "management level", "contact information" and the like. The "management level" and "contact information" are similar to those described with reference to Figure **28****,** and the "management level" and "contact information" corresponding to the subgroup ID information **370.**
With such a structure, the information recording apparatus **223** performs an authentication process similar to that described above by using the obtained management information **371.**

The personal ID **361** may also contain the management information similarly to the subgroup ID **365.**

### <6>

In the description of the above embodiment with reference to Figures **19** through **21****,** it is described that the "encrypted content ID is stored in the recording medium **136".** In this example, the encrypted content ID may be stored in an IC tag (IC chip) provided on the recording medium **136.**
In such an example, among the functions of the recording and reproducing section **133** (see Figure **19****),** recording of the encrypted content (see Figure **20****,** step **S178)** and reproduction (see Figure **21****,** step **S187)** may be performed by an IC tag recording and reproducing section which can record and reproduce the encrypted content ID for the IC tag.

With this structure, the speed of recording and reproduction can be increased compared to that of, for example, recording and reproducing on and from the recording medium **136** such as an optical disc. Thus, a time period necessary for authentication can be reduced.

### (Tenth embodiment)

In the present embodiment, a recording medium and an apparatus which prevent misuse of content stored in the recording medium is described as an example of an application of the authentication system.
The authentication system of the present embodiment is formed of a device provided on a side which gives permission to use content to a user, such as a shop which leases or hands over the recording media in which contents are stored (hereinafter, referred to as a shop device), and a device provided on a side which receives permission to use the content such as a house of user who borrows or purchase the recording media (hereinafter, referred to as user device). The authentication system of the present embodiment is a system for authenticating a user who is permitted to use content and have the user use the content stored in a recording medium.

Hereinafter, the recording medium, the shop device, and the user device used in such a system will be described respectively.

### (Structure of recording medium)

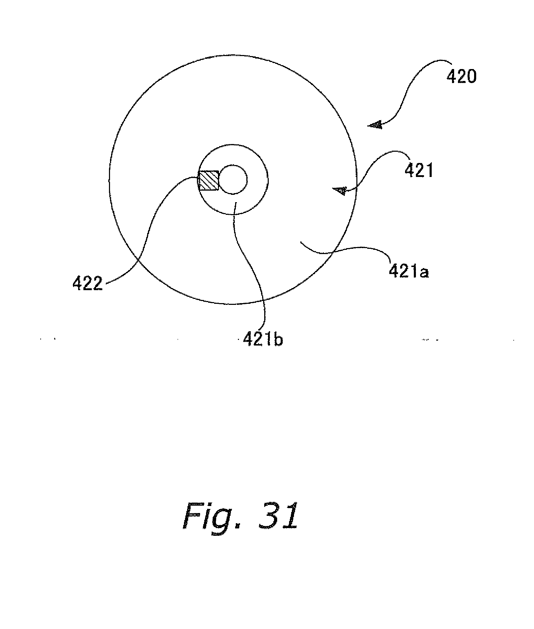

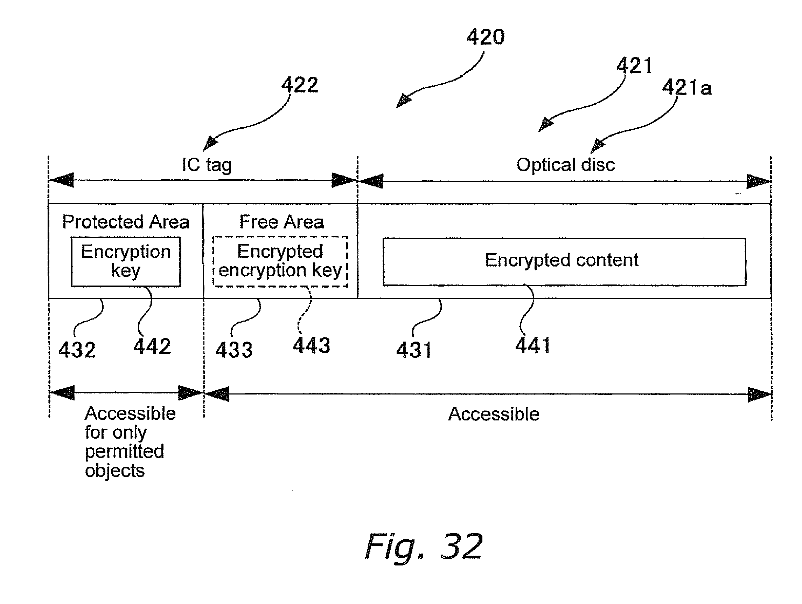

With reference to Figures **31** and **32****,** the structure of the recording medium is described.
Figure **31** is a diagram illustrating a physical configuration of a recording medium **420.** As shown in Figure **31****,** the recording medium **420** is an optical disc **421** which can be read optically, such as DVDs, CDs, BDs, and the like, with an IC tag (IC chip) **422** being attached thereon. The IC tag **422** is accessible by wireless communication. The IC tag **422** is attached to a position such that it does not prohibit the information recorded on the optical disc **421** to be read out. Specifically, the IC tag **422** is attached to the innermost area of the optical disc **421** where the information is not recorded (clamp area) **421b.**

The attachment position of the IC tag **422** is not limited to such a position. For example, the IC tag **422** may be provided at a radial position corresponding to an information recording area **421a** of the optical disc **421** if it is not on the side from which the information of the optical disc **421** is read out. If the IC tag **422** is provided on an outer peripheral part of the optical disc **421,** it is preferable to provide a plurality of the IC tags such that their center of gravity matches the center of rotation in order to avoid eccentricity of the optical disc **42a.** Further, when the optical disc **421** is used with being accommodated in a cartridge, the IC tag **422** may be provided on the cartridge.
Figure **32** is a diagram illustrating the relationship between the physical configuration of the recording medium **420** and the structure of data stored in the recording medium **420.** As shown in Figure **32****,** the recording medium **420** is formed of three recording areas (first through third recording areas **431** through **433)** which store different types of data.

The first recording area **431** is an area provided in the information recording area **421a** of the optical disc **421.** Various types of information, including multimedia contents such as video/audio, are recoded thereon with being encrypted. Hereinafter, the information recorded on the first recording area **431**is referred to as encrypted content **441.**
The second recording area **432** is an area provided in a part of the recording area of the IC tag **422.** An encryption key **442** for the encrypted content **441** recorded on the first recording area **431** is recorded thereon. The second recording area **432** is provided in a protected area of the IC tag **422,** and can be accessed from only the authenticated devices.
The third recording area **433** is an area provided in other parts of the recording area of the IC tag **422.** The area can store an encrypted encryption key **443** which is obtained by encrypting the encryption key **442.** The third recording area **433** is provided in a free area of the IC tag **422.** Encryption of the encryption key **442** is used by using an identification number of a user who is permitted to decrypt and use the encrypted content **441.**

### (Structure and operation of shop device)

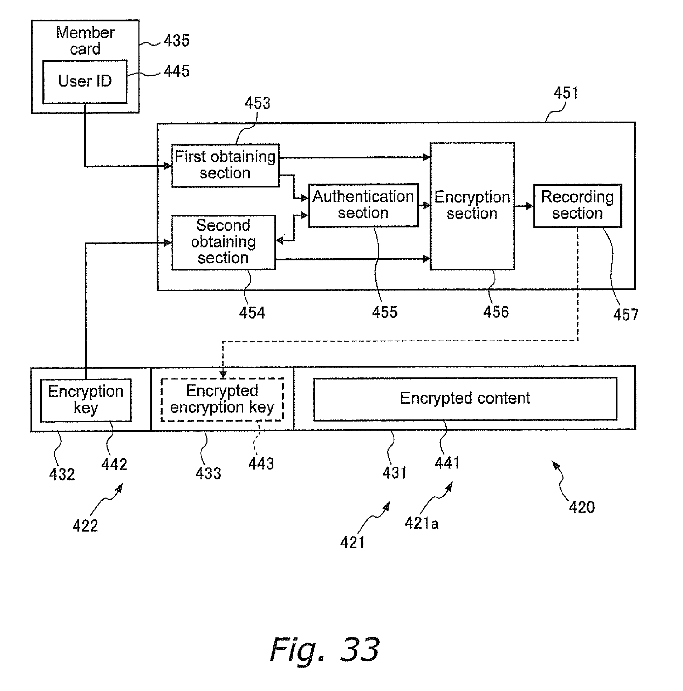

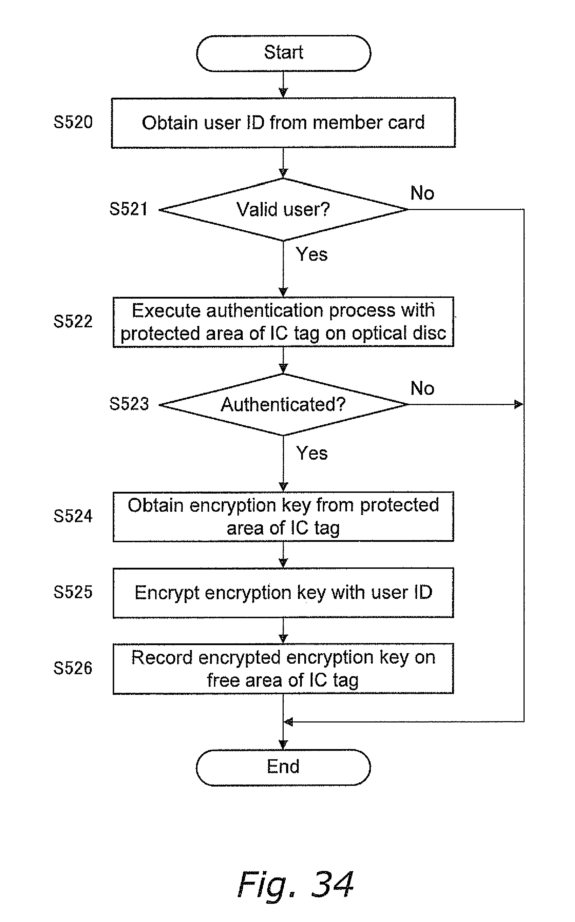

A structure and operations of the shop device will be described with reference to Figures **33** and **34****.**

Figure **33** is a block diagram showing a structure of a shop device **451.**
The shop device **451** is a device provided in a shop and the like which rents or sell the recording medium **420 to a user.** The shop device **451** records the encryption key **442** of the encrypted content **441** such that only the valid user can decrypt so as to ensure that only the valid user can use the encrypted content **441** stored in the recording medium **420.** The shop device **451** includes a first obtaining section **453,** a second obtaining section **454,** an authentication section **455,** an encryption section **456,** and a recording section **457.**
The first obtaining section **453** obtains user ID **445** recorded on a member card **435** or the like which is provided by the shop and the user has. The first obtaining section **453** reads the member card **435,** which is a magnetic card or an IC card, and obtains the user ID **445.**
The second obtaining section **454** communicates with the second recording area **432** of the IC tag **422,** and obtains the encryption key **442.** The encryption key **442** obtained by the communication with the second recording area **432** is obtained after mutual authentication between the shop device **451** and the IC tag **422** is performed. This is because the second recording area **432** is provided in the protected area of the IC tag **422.** The authentication process at the shop device **451** side is performed by the authentication section **455** based on the information obtained from the second obtaining section **454.** The authentication process for the IC tag has been described in the above embodiment, so descriptions thereof are omitted.

The authentication section **455** performs authentication of the user based on the user ID **445** obtained by the first obtaining section **453** in addition to the mutual authentication with the IC tag **422** via the second obtaining section **454.** Specifically, the authentication section **455** access a user database provided inside or outside the device, and determines whether the obtained user ID **445** is user ID of a valid user.
When the authentication result of the authentication section **455** shows that authentication is permitted, the encryption section **456** encrypts the encryption key **442** obtained from the second obtaining section **454** by using the user ID **445** obtained from the first obtaining section **453,** and generates an encrypted encryption key **443.**
The recording section **457** records the encrypted encryption key **443** generated by the encryption section **456** on the third recording area **433** of the recording medium **420.** Since the third recording area **433** is provided on the IC tag **422,** the recording section **457** records the encrypted encryption key **443** on the third recording area **433** through communication with the IC tag **422.**

Operations of the shop device **451** are further described with reference to Figure **34****.**
When the process of the shop device **451** is started, the first obtaining section **453** obtains the user ID **445** from the member card **435** (step **S520).** The authentication section **455** determines whether the user is a valid user or not based on the user ID **445** (step **S521).** If the result of determination is negative, the process of the shop device **451** is finished. On the other hand, if the result of determination is positive, the authentication section **455** performs the authentication process with the IC tag **422** of the recording medium **420** via the second obtaining section **454** (step **S522).** If the authentication is not permitted (step **S523),** the process of the shop device **451** is finished. On the other hand, if the authentication is permitted (step **S523),** the second obtaining section **454** obtains the encryption key **442** from the second recording area **432** on the IC tag **422** (step **S524).** The encryption section **456** uses the user ID **445** obtained by the first obtaining section **453** to encrypt the encryption key **442** obtained by the second obtaining section **454** and generates the encrypted encryption key **443** (step **S525).** The recording section **457** records the encrypted encryption key **443** on the third recording area **433** on the IC tag **422.**

With the above-described process, the shop device **451** provides the recording medium **420** on which the encrypted encryption key **443** is recorded to a user.

### (Structure and operation of user device)

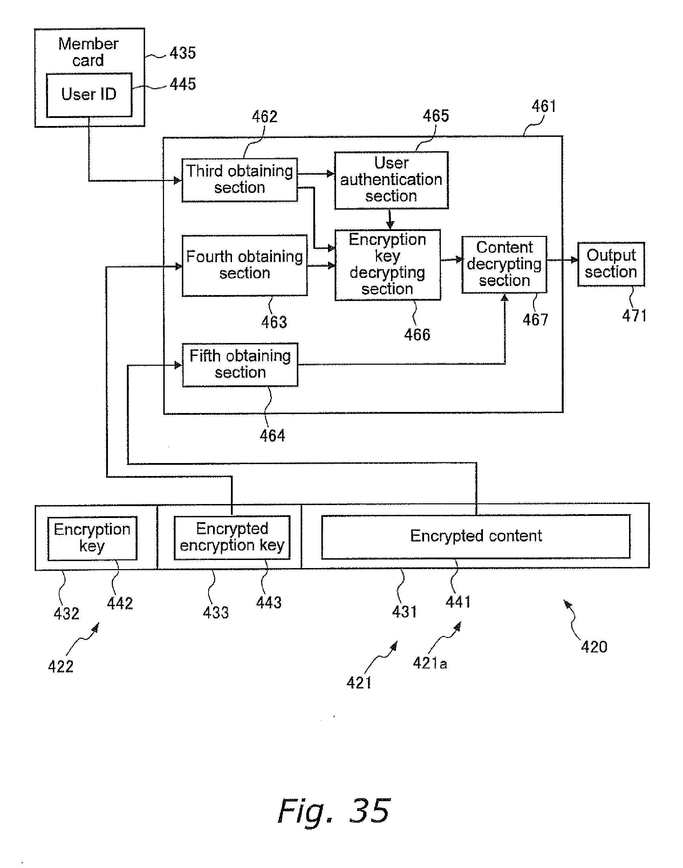

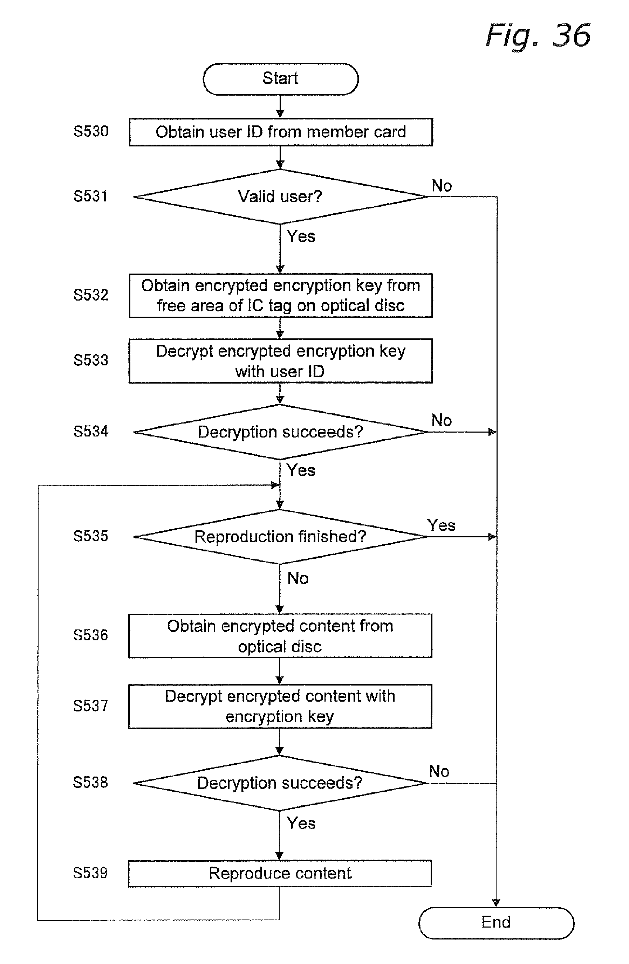

A structure and operations of the user device are described with reference to Figures **35** and **36****.**
Figure **35** is a block diagram showing a structure of a user device **461.**
The user device **461** is a device provided in a house or the like of the user who rented or purchased the recording medium **420** from the shop. The user device **461** authenticates whether the user is a valid user for the encrypted content **441** stored in the recording medium **420** (a user permitted to use the encrypted content **441),** and let the user use the encrypted content **441** when the authentication is permitted. Specifically, the user device **461** is mounted to an apparatus which can reproduce optical discs, such as a CD player, a DVD player, a BD player and the like, which is provided at the house of the user or the like. The user device **461** includes a third obtaining section **462,** a fourth obtaining section **463,** a fifth obtaining section **464,** a user authentication section **465,** an encryption key decrypting section **466,** and a content decrypting section **467.**

The third obtaining section **462** obtains the user ID **445** recorded on the member card **435** or the like which is provided by the shop or the like and the user has. The third obtaining section **462** reads the member card **435,** which is a magnetic card or an IC card, and obtains the user ID **445.**
The fourth obtaining section **463** communicates with the third recording area **433** of the IC tag **422** of the recording medium **420** placed on the user device **461,** and obtains the encrypted encryption key **443** recorded on the third recording area **433** at the shop. The encrypted encryption key **443** obtained through communication with third recording area **433** is obtained without mutual authentication between the user device **461** and the IC tag **422.** This is because the third recording area **433** is provided in the free area of the IC tag **422.** The communication with the IC tag has been described in the above embodiment, so descriptions thereof are omitted.
The fifth obtaining section **464** reproduces the information recording area **421a** of the optical disc **421** to obtain the encrypted content **441** recorded on the first recording area **431.** Specifically, the fifth obtaining section **464** is realized as the recording and reproducing section **133** of the information recording apparatus **123** shown in Figure **19****.**

The user authentication section **465** authenticates the user based on the user ID **445** obtained by the third obtaining section **462.** Specifically, the user authentication section **465** accesses the user database provided inside or outside the device, and determines whether the obtained user ID **445** is user ID of a user permitted to use the user device **461.**
When the user ID **445** is determined to be user ID of a user permitted to use the user device **461** by the user authentication section **465,** the encryption key decrypting section **466** uses the user ID **445** obtained by the third obtaining section **462** to perform decryption of the encrypted encryption key **443** obtained by the fourth obtaining section **463.** If the decryption having the user ID **445** as a decryption key is possible, it means that the user is authenticated as a valid user (user who is permitted to use the encrypted content **441).**

The content decrypting section **467** uses the encryption key **442** decrypted by the encryption key decrypting section **466** to decrypt the encrypted content **441** obtained by the fifth obtaining section **464.**
With the above-described process, the encrypted content **441** stored in the recording medium **420** is decrypted, and the decrypted content is output to an output device **471** connected to the user device **461** as, for example, a video/audio signal. The output device **471** is a device such as video/audio monitor and the like.
Operations of the user device **461** are further described with reference to Figure **36****.**
When the process of the user device **461** is started, the third obtaining section **462** obtains the user ID **445** from the member card **435** (step **S530).** The user authentication section **465** determines whether the user is a user who is permitted to use the user device **461** or not based on the user ID **445** (step **S531).** If the result of determination is negative, the process of the user device **461** is finished. On the other hand, if the result of determination is positive, the fourth obtaining section **463** obtains the encrypted encryption key **443** from the third recording area **433** on the IC tag **422** (step **S532).** The encryption key decrypting section **466** decrypts the encrypted encryption key **443** using the user ID **445** (step **S533).** If the encrypted encryption key **443** cannot be decrypted (step **S534),** the process of the user device **461** is finished. On the other hand, if the encrypted encryption key **443** can be decrypted, and the encryption key **442** is generated (step **S534),** a reproduction process of the encrypted content **441** is started (steps **S535** through **S539).**

First, end of reproduction of the encrypted content **441** is determined. If the reproduction is finished (step **S535),** the process of the user device **461** is finished. On the other hand, the reproduction is at the beginning or in a midcourse (step **S535),** the fifth obtaining section **464** obtains the encrypted content **441** from the first recording area **431** of the optical disc **421** (step **S536).** The content decrypting section **467** decrypts the encrypted content **441** obtained by the fifth obtaining section **464** with the encryption key **442** decrypted by the encryption key decrypting section **466** (step **S537).** When the encrypted content **441** cannot be decrypted (step **S538),** the process of the user device **461** is finished. On the other hand, when the encrypted content **441** can be decrypted (step **S538),** the decrypted content is reproduced (step **S539**). The above process is continued until the reproduction of the content is finished.

### (Effects)

In the recording medium **420,** the content is recorded on the optical disc **421** with being encrypted. This secures the safety in use of the content recorded on the optical disc **421**.

The encryption key **442** used for encryption is stored in a protected area of the IC tag **422,** to which only the authenticated object can access. Thus, inappropriate decryption of the encrypted content **441** using the encryption key **442** stored in the second recording area **432** can be prevented.
The encrypted encryption key **443** stored in the third recording area **433** is information obtained by encrypting the encryption key **442** by using the user ID **445** of the user permitted to use the content. Thus, it becomes possible to prevent that the encryption key **442** is inappropriately decrypted, and then the encrypted content **441** is inappropriately decrypted.

### (Variations)

In the above embodiment, for encrypting the encryption key **442** at the shop device **451,** the encryption using the user ID **445** obtained from the member card **435** is performed. Further, for decrypting the encryption key **442** at the user device **461,** decryption using the user ID **445** obtained from the member card **435** is performed as described above. In such an example, when confidentiality of the user ID **445** is required, it is preferable that the shop device **451** or the user device **461** obtains the information obtained by encrypting the user ID **445.**

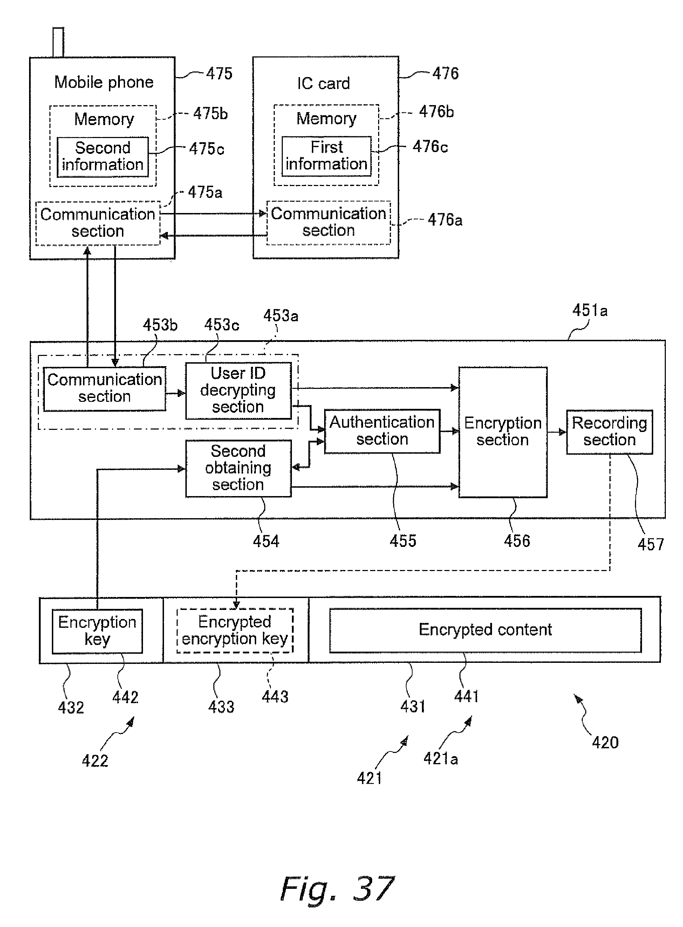

This feature is described with reference to Figures **37** through **40****.**
Figure **37** is a block diagram showing a structure of a shop device **451a** in the case where the user ID is provided using a mobile phone **475** and an IC card **476** instead of the member card **435.** Figure **37** shows a structure different from that of the shop device **451** shown in Figure **33****.** As shown in Figure **37****,** the shop device **451a** is different from the shop device **451** only in the structure of a first obtaining section **453a,** and the remaining part of the structure (the second obtaining section **454,** the authentication section **455,** the encryption section **456,** the recording section **457)** is similar.
Before describing the structure of the first obtaining section **453a** in details, the mobile phone **475** and the IC card **476** used instead of the member card **435** are described. The mobile phone **475** and the IC card **476** have similar structures as the mobile phone **122** and the IC card **121** described with reference to Figure **19****.** Specifically, the mobile phone **475** includes a communication section **475a** for communication with the outside, and a memory **475b.** The memory **475b** stores the second information **475c** which is the identification information of the mobile phone **475.** The IC card **476** includes a communication section **476a** for communication with the outside, and a memory **476b.** The memory **476b** stores first information **476c.** The first information **476c** is the information obtained by encrypting the user ID **445,** which is the identification information of the user, with the second information **475c** stored in the mobile phone **475.**

The communication sections **475a** and **476a** of the mobile phone **475** and the IC card **476** can communicate each other. Thus, the IC card **476** can send the first information **476c** to the mobile phone **475** in response to a request from the mobile phone **475.** Further, the communication section **475a** of the mobile phone **475** can communicate with the first obtaining section **453a** of the shop device **451a.** Thus, the mobile phone **475** can send the second information **475c** and the first information **476c** which is received from the IC card **476** to the shop device **451a** in response to a request from the shop device **451a.**
The mobile phone **475** and the IC card **476** as described above may be provided separately. Alternatively, they may be integrally provided by, for example, attaching an IC tag (IC chip) portion of the IC card **476** to the mobile phone **475.**

Next, a structure of the first obtaining section **453a** is described. The first obtaining section **453a** includes a communication section **453b** and a user ID decrypting section **453c.** The communication section **453b** can communicate with the mobile phone **475** having the above-described structure. Thus, the communication section **453b** sends a request for sending the second information **475c** and the first information **476c** to the communication sections **475a** of the mobile phone **475.** The communication section **453b** also receives the second information **475c** and the first information **476c** sent from the communication sections **475a.** The user ID decrypting section **453c** decrypts the user ID **445** based on the second information **475c** and the first information **476c** received by the communication section **453b.** Specifically, the first information **476c** is decrypted by using the second information **475c** to generate the user ID **445.**
The process by each of other sections of the shop device **451a** is similar to that described in the above embodiment, and thus, description thereof is omitted.

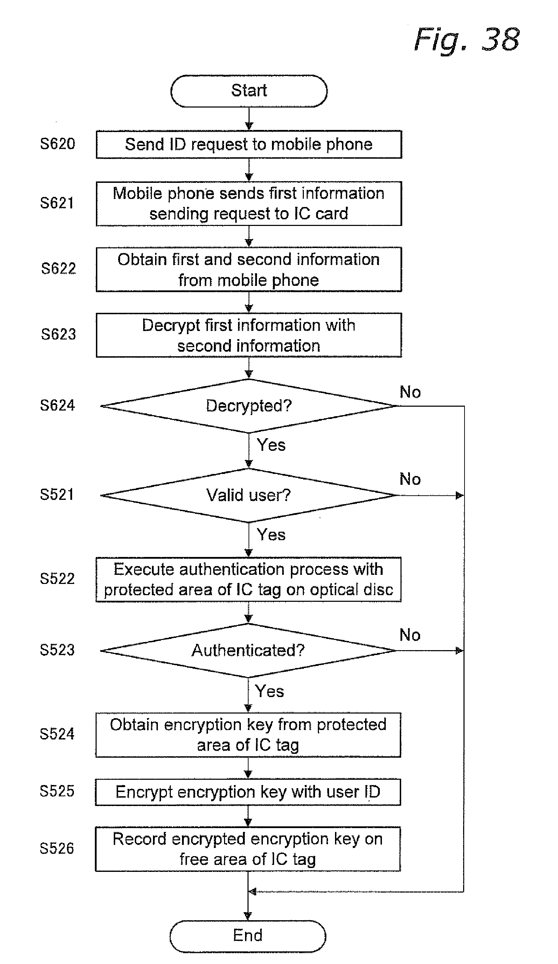

Operations of the shop device **451a,** particularly, operations until the shop device **451a** obtains the user ID **445** are further described with reference to Figure **38****.**
When the process of the shop device **451a** is started, the communication section **453b** sends an ID request to the mobile phone **475** (step **S620).** When the mobile phone **475** receives the ID request, it sends a request for sending the first information **476c** to the IC card **476** (step **S621),** and receives the first information **476c** sent from the IC card **476** in response to the sending request. When the mobile phone **475** receives the first information **476c** from the IC card **476,** it sends the first information **476c** to the shop device **451a** with the second information **475c** stored in the memory **475b.** In this way, the first obtaining section **453a** of the shop device **451a** obtains the first information **476c** and the second information **475c** from the mobile phone **475** (step **S622).** The user ID decrypting section **453c** uses the second information **475c** to decrypt the first information **476c** (step **S623).** If the first information **476c** cannot be decrypted (step **S624),** the process of the shop device **451a** is finished. On the other hand, if the first information **476c** can be decrypted and the user ID **445** can be obtained (step **S624),** then the process of steps **S521** through **S526** described in the above embodiment is performed. Since the process has been described in the above embodiment, descriptions thereof are omitted.

With the shop device **451a** as described above, the user ID **445** is obtained based on the information obtained from the mobile phone **475** and the IC card **476,** and it becomes possible to provide the user with the recording medium **420 recording** the encrypted encryption key **443** which is encrypted by using the obtained user ID **445.**

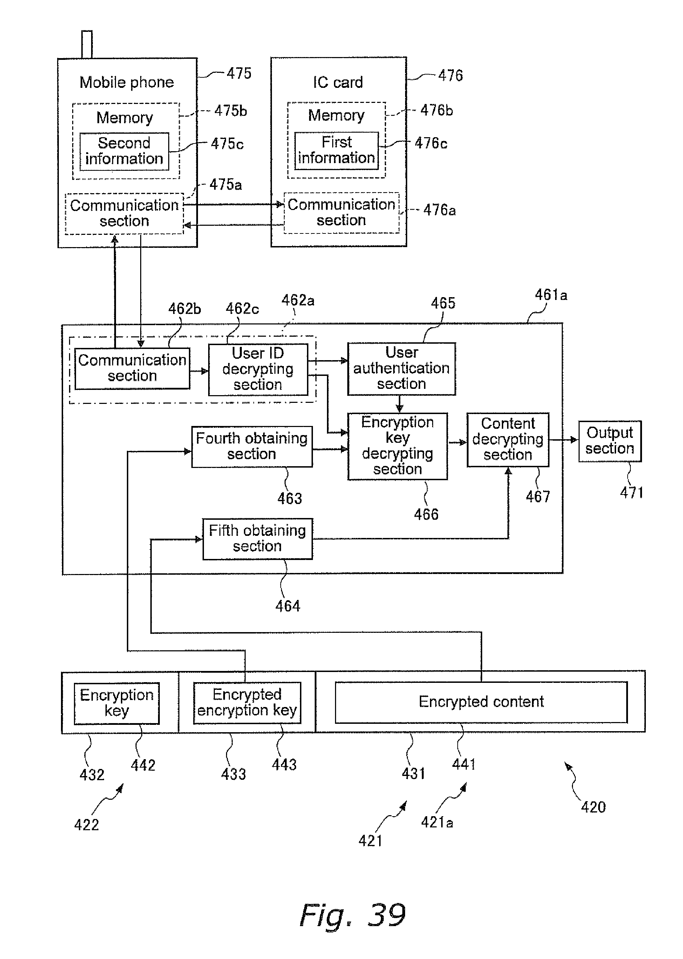

Figure **39** is a block diagram showing a structure of a user device **461a** in the case where the user ID is provided using a mobile phone **475** and an IC card **476** instead of the member card **435.** Figure **39** shows a structure different from that of the user device **461** shown in Figure **35****.** As shown in Figure **39****,** the user device **461a** is different from the user device **461** in the structure of a third obtaining section **462a,** and the remaining part of the structure (the fourth obtaining section **463,** the fifth obtaining section **464,** the user authentication section **465,** the encryption key decrypting section **466,** the content decrypting section **467)** is similar.
Further, the structures of the mobile phone **475** and the IC card **476** which communicate with the third obtaining section **462a** instead of the member card **435** are similar to those described with reference to Figure **37****.** The communication section **475a** of the mobile phone **475** can communicate with the third obtaining section **462b** of user device **461a.** Thus, the mobile phone **475** can send the second information **475c** and the first information **476c** which is received from the IC card **476** to the user device **461a** in response to a request from the user device **461a.**

A structure of the third obtaining section **462a** is described. The third obtaining section **462a** includes a communication section **462b** and a user ID decrypting section **462c.** The communication section **462b** can communicate with the mobile phone **475** having the above-described structure. Thus, the communication section **462b** sends a request for sending the second information **475c** and the first information **476c** to the communication section **475a** of the mobile phone **475.** The communication section **462b** also receives the second information **475c** and the first information **476c** sent from the communication section **475a.** The user ID decrypting section **462c** decrypts the user ID **445** based on the second information **475c** and the first information **476c** received by the communication section **462b.** Specifically, the first information **476c** is decrypted by using the second information **475c** to generate the user ID **445.**
The process by each of other sections of the user device **461a** is similar to that described in the above embodiment, and thus, description thereof is omitted.

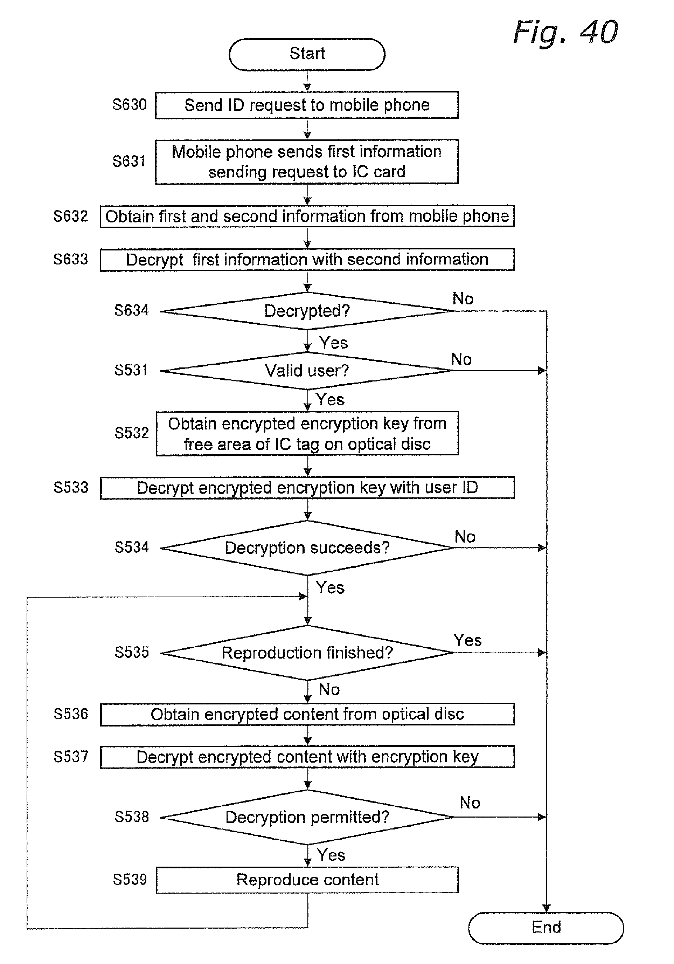

Operations of the user device **461a,** particularly, operations until the user device **461a** obtains the user ID **445** are further described with reference to Figure **40****.**
When the process of the user device **461a** is started, the communication section **462b** sends an ID request to the mobile phone **475** (step **S630**). When the mobile phone **475** receives the ID request, it sends a request for sending the first information **476c** to the IC card **476** (step **S631),** and receives the first information **476c** sent from the IC card **476** in response to the sending request. When the mobile phone **475** receives the first information **476c** from the IC card **476,** it sends the first information **476c** to the user device **461a** with the second information **475c** stored in the memory **475b.** In this way, the third obtaining section **462a** of the user device **461a** obtains the first information **476c** and the second information **475c** from the mobile phone **475** (step **S632).** The user ID decrypting section 462c uses the second information **475c** to decrypt the first information **476c** (step **S633).** If the first information **476c** cannot be decrypted (step **S634**), the process of the user device **461a** is finished. On the other hand, if the first information **476c** can be decrypted and the user ID **445** can be obtained (step **S634),** then the process of steps **S531** through **S539** described in the above embodiment is performed. Since the process has been described in the above embodiment, descriptions thereof are omitted.

With the user device **461a** as described above, the user ID **445** is obtained based on the information obtained from the mobile phone **475** and the IC card **476.** The encrypted encryption key **443** is decrypted with the obtained user ID **445** to generate the encryption key **442.** The encrypted content **441** which has been encrypted with the encryption key **442** can be decrypted to reproduce the content.
In the shop device **451a** and the user device **461a,** which are variations of the above embodiment, the encrypted user ID **445** is obtained and decrypted within the device for obtaining the user ID **445.** Thus, they are particularly useful when confidentiality of the user ID **445** is required.

### (Eleventh Embodiment)

Hereinafter, the eleventh embodiment of the present invention will be described in details with reference to the drawings.

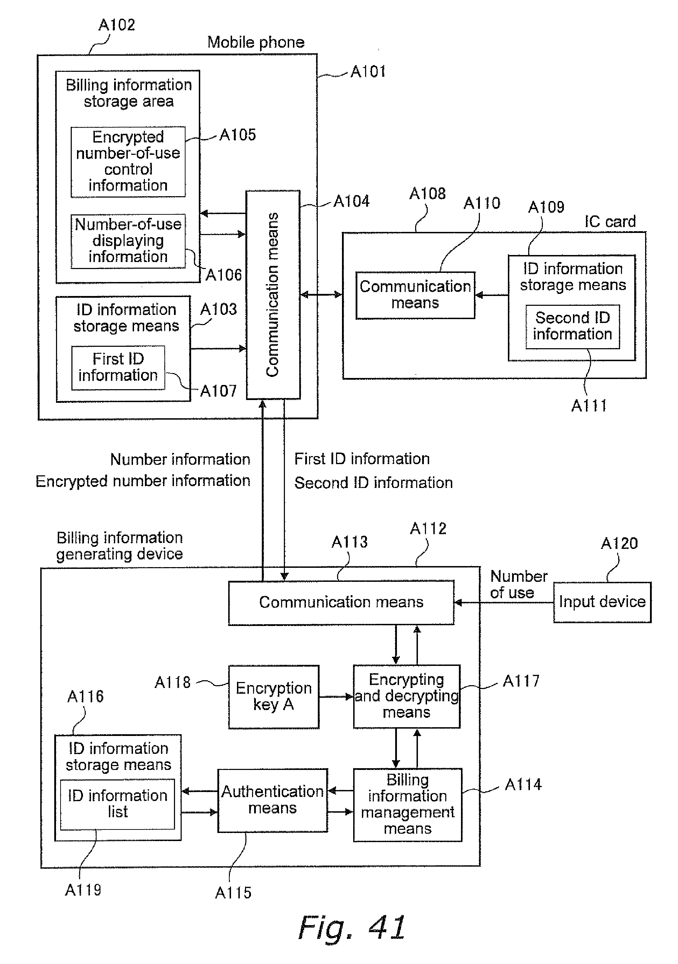

Figure **41** is a block diagram showing a structure of an authentication system according to the present embodiment. Figure **41** illustrates a method for purchasing tickets for rides in a theme park or the like. In Figure **41****,** reference numeral **A101** denotes a mobile phone, reference numeral **A108** denotes an IC card, reference numeral **A112** denotes a billing information generating device, which is a ticket vendor provided at the theme park, reference numeral **A120** denotes an input device for inputting the number of use to the billing information generating device **A112,** reference numeral **A102** denotes a billing information storage area, reference numeral **A103** denotes an ID information storage unit, reference numeral **A104** denotes a communication unit for performing communication with the IC card **A108** and/or the billing information generating device **A112,** reference numeral **A105** denotes encrypted number-of-use controlling information stored in the billing information storage area **A102,** reference numeral **A106** denotes number-of-use displaying information, reference numeral **A107** denotes first ID information stored in the ID information storage unit, reference numeral **A109** denotes an ID information storage unit, reference numeral **A110** denotes a communication unit for communicating with the mobile phone **A101,** reference numeral **A111** denotes second ID information stored in the ID information storage unit **A109,** and reference numeral **A113** denotes a communication unit for communicating with the mobile phone **A101** and/or the input device **A120.** As described in other embodiments, personal authentication of a user can be performed using the first ID information **A107** and the second ID information **A111.** In the present embodiment, the ID of the user having the mobile phone **A101** and the IC card **A108** is encrypted with the first ID information **A107** to obtain the second ID information **A111**.

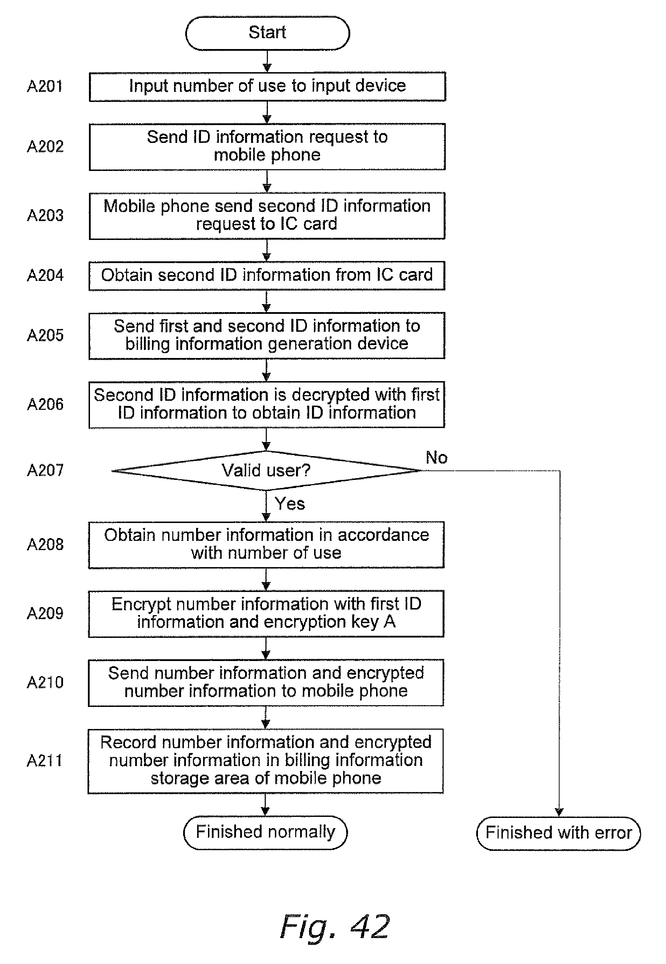

Hereinafter, a procedure for purchasing a ticket at a theme park with the authentication system of Figure **41** will be described with reference to Figure **42****.**
At step **A201,** the number of use is input to the input device **A120.**
At step **A202,** an ID information request is sent from the communication unit **A113** of the billing information generating device **A112** to the mobile phone **A101.**
At step **A203,** the communication unit **A104** of the mobile phone **A101** sends a request for the second ID information to the IC card **A108.**
At step **A204,** the second ID information **A111** is obtained from the IC card **A108.**
At step **A205,** the first ID information **A107** and the second ID information **A111** are sent to the billing information generating device **A112.**

At step **A206,** the second ID information **A111** is decrypted with the first ID information **A107** to obtain the user ID information.
At step **A207,** the user ID information obtained at step **A206** and ID information of an ID information list **A119** stored in the ID information storage unit **A116** are verified at the authentication unit **A115** to check whether the user is a valid user. If the user is a valid user, the process moves to step **A208,** and if the user is not a valid user, the process is finished with an error.
At step **A208,** the number-of-use control information in accordance with the number of use input at step **A201** is obtained from a memory, which is not shown, in the billing information generating device **A112.** The number-of-use control information is information formed of the number of use of rides, expiry date, and the like.
At step **A209,** the number-of-use control information is encrypted using the first ID information **A107** and an encryption key **AA118.** For encryption, from the first ID information **A107** and the encryption key **AA118,** a new encryption key (referred to as use information encryption key) is generated, and the use information encryption key is used. The encryption is not limited to the above-mentioned method. The number-of-use control information may be encrypted first with the first ID information **A107** and then with the encryption key **AA118,** or the other way around. In such cases, the order to use keys in decryption should be considered.

At step **A210,** the encrypted number-of-use controlling information **A105,** and the number-of-use displaying information **106** for displaying the number-of-use control information on the mobile phone **A101** are sent to the mobile phone. The number-of-use displaying information **A106,** the number-of-use control information obtained at step **A208** may be sent as it is, or information may be generated from a part of the number-of-use control information or the number-of-use control information itself.
At step **A211,** the encrypted number-of-use controlling information **A105** and the number-of-use displaying information **A106** are recorded on the billing information storage area **A102** of the mobile phone **A101.**
With the above-described procedure, the first ID information **A107** stored in the mobile phone **A101** and the second ID information **A111** stored in the IC card **A108** can be used to perform the purchasing process for a ticket for a ride at a theme park by the user who is determined to be a valid user. A process for determining the user to be the valid user or not is not essential, and can be omitted.

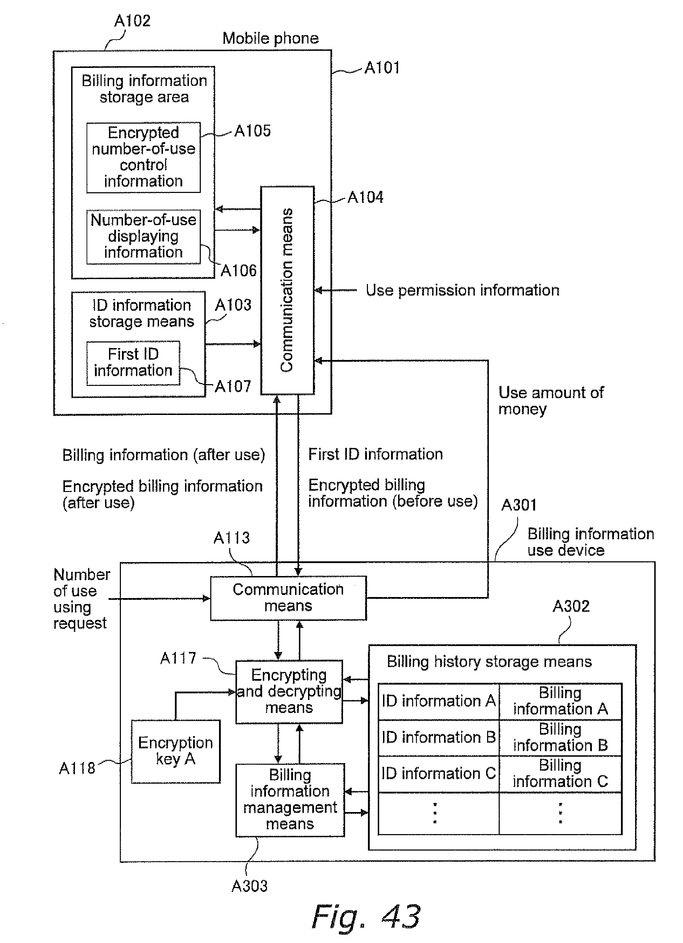

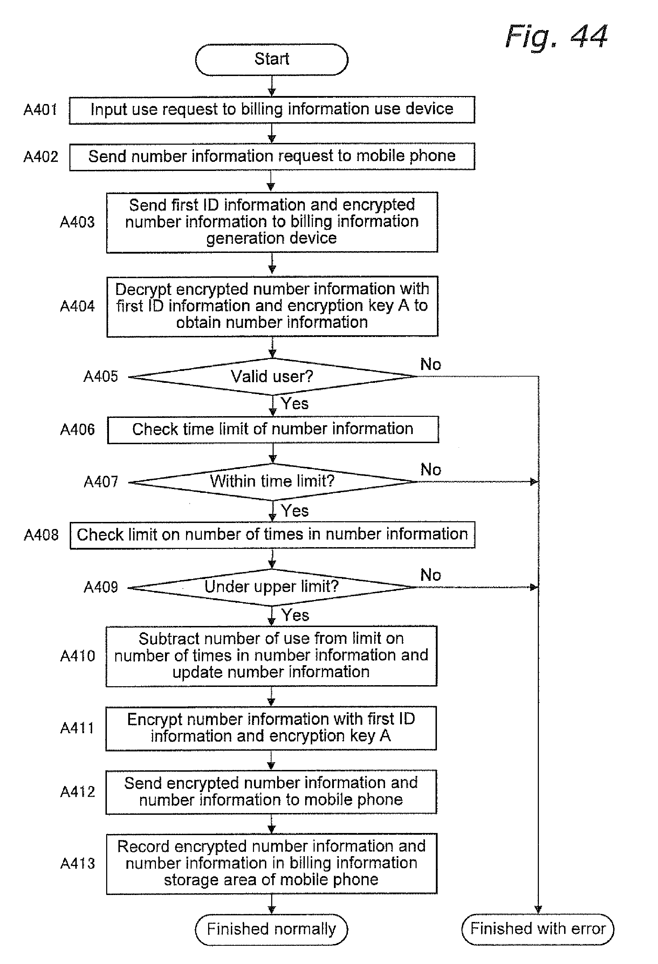

Hereinafter, a method for using a ticket for a ride of a theme park which is purchased with a procedure of Figure **42** is described with reference to Figures **43** and **44****.**
Figure **43** is a diagram illustrating a method for using a ticket for a ride at a theme park. The same components as those in Figure **41** are denoted by the same reference numerals, and descriptions thereof are omitted. Reference numeral **A301** denotes a billing information use device, reference numeral **A302** denotes a billing history storage unit, reference numeral **A303** denotes a billing information management unit. The billing history storage unit **A302** is an area for storing a user who is billed by the billing information use device **A301,** which means, a user who uses a ticket, as use history information for each user ID. The billing information management unit **A303** interprets the number-of-use control information input to the billing information use device **A301** and performs a billing process. In the present embodiment, the billing information generation device and the billing information use device are the same device, but they may be the separate devices.

Hereinafter, a procedure for using a ticket in a theme park with the authentication system of Figure **43** is described with reference to Figure **44****.**
At step **A401,** an input device, which is not shown, is used to input the number of use to the billing information use device **A301.** The number of use may be set as different values for each of the rides and facilities. However, for the sake of simplicity, the number of use is reduced by one for one use of any ride and facility.
At step **A402,** a number-of-use control information request is sent from the communication unit **A113** of the billing information use device **A301** to the mobile phone **A101**.
At step **A403,** the encrypted number-of-use controlling information **A105** and the first ID information **A107** are sent from the communication unit **A104** of the mobile phone **A101** to the billing information use device **A301.**
At step **A404,** the encrypted number-of-use controlling information **A105** is decrypted by using the first ID information **A107** and the encryption key **AA118.** Decryption is performed using the decryption key generated from the first ID information **A107** and the encryption key **AA118.** As described above, the procedure and/or method to perform decryption varies so as to conform to the method of encrypting at step **A209** described with reference to Figure **42****.**

At step **A405,** it is determined whether the user is a valid user or not depending upon the result of decryption at step **A404.** If the user is a valid user, the process moves to step **A406.** If the user is not a valid user, the process finishes with an error.
At step **A406,** as a result of decryption at step **A404,** expiry date included in the obtained number-of-use control information is confirmed. If it is determined to be within the expiry date at step **A407,** the process moves to step **A408,** and if it is determined to expire, the process is finished with an error.
At step **A408,** as a result of decryption at step **A404,** the number of use of rides included in the obtained number-of-use control information is confirmed. If it is determined that the number of use is left at step **A409,** the process moves to step **A410,** and if it is determined that the number of use is not left, the process finishes with an error. The number of use of the rides may be set to the maximum number which can be used, and the number of times that the user used may be recorded to the mobile phone **A101** or the billing information use device **A301.** Whether the number of use is left or not may be determined by comparing them.

At step **A410,** the number of use of the number-of-use control information is subtracted by "one", and the number of use is updated.
At step **A411,** the number-of-use control information updated at step **A410** is encrypted using the first ID information **A107** and the encryption key **AA118.**
At step **A412,** the encrypted number-of-use controlling information **A105** and the number-of-use displaying information **A106** which is for displaying the number-of-use control information on the mobile phone **A101** are sent to the mobile phone **A101.** The number-of-use displaying information **A106** is newly generated by using the number-of-use control information updated at step **A410.**
At step **A413,** the encrypted number-of-use controlling information **A105** and the number-of-use displaying information **A106** are recorded on the billing information storage area **A102** of the mobile phone **A101.**

: With the above procedure, the tickets for rides of a theme park are registered to the mobile phone **A101** in order to enable using rides and facilities of the theme park just by holding the mobile phone **A101.** Also, since the number-of-use control information stored in the mobile phone **A101** is encrypted with the information of the billing information use device **A301** and the information of the mobile phone **A101,** only a combination of a valid mobile phone and a valid use device can be used. Thus, manipulation by inappropriate user can be prevented.

### (Twelfth embodiment)

Hereinafter, an authentication process in which use is permitted within a limited authority range even with only one of two devices having inherent information will be described with reference to the drawings.

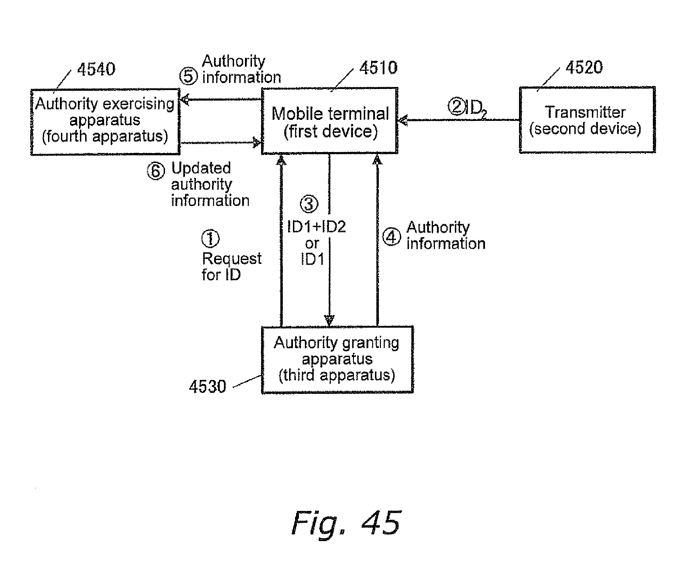

Figure 45 shows the configuration of the authentication system in this embodiment. This authentication system has a mobile terminal 4510 such as a mobile phone, a transmitter 4520 such as an IC tag, an authority granting apparatus 4530, and an authority exercising apparatus 4540 that operates according to the authority information. If a request for sending ID information is received from the authority granting apparatus 4530, the mobile terminal 4510, which is a first device, sends its own first ID information (hereinafter, referred to as ID1) to the authority granting apparatus 4530. Furthermore, if second ID information (hereinafter, referred to as ID2) is received from the transmitter 4520, which is a second device, the mobile terminal 4510 sends ID2 together with ID1 to the authority granting apparatus 4530. Moreover, as described later, if ID2 is received, the mobile terminal 4510 also sends reception determining information indicating whether or not the reception strength is at a predetermined level or higher. The authority granting apparatus 4530 that has received ID1, or both ID1 and ID2 generates authority information, or selects authority information that has been stored in advance, according to the number of authenticated IDs, and sends the authority information to the mobile terminal 4510. The mobile terminal 4510 sends the authority information to the authority exercising apparatus 4540, and the authority exercising apparatus 4540 operates according to the authority information. Herein, ID1 is user ID information, and ID2 is a digital signature of ID1.

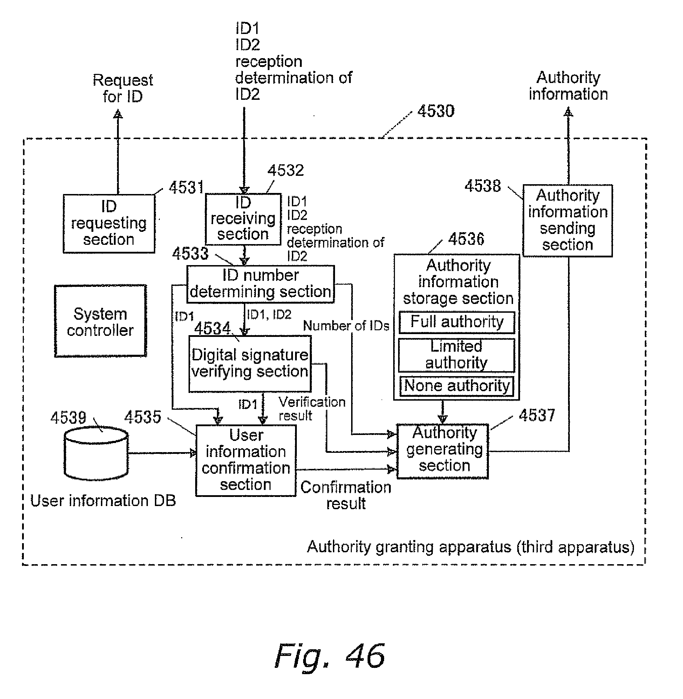

Figure 46 schematically shows the internal configuration of the authority granting apparatus 4530. In the authority granting apparatus 4530, an ID requesting section 4531 sends a signal for requesting ID information, to the mobile terminal 4510, for example, by polling or external input. As described later, an ID receiving section 4532 receives ID1, both ID1 and ID2, reception determining information of ID2, from the mobile terminal 4510. An ID number determining section 4533 determines the number of pieces of received ID information, that is, whether only ID1, or both ID1 and ID2 have been received. If both ID and ID2 have been received, the ID number determining section 4533 determines whether or not reception strength of ID2 is at a predetermined level or higher. If it is determined that only ID has been received, a user information confirmation section 4535 refers to a user information database 4539, and determines whether or not ID1 matches registered user information. If it is determined that both ID1 and ID2 have been received, a digital signature verifying section 4534 performs a digital signature verification process, as described later, so that it can exercise authentication and detect alteration of ID information, for example. As described later, an authority generating section 4537 generates authority information from the authority information (Full authority, Limited authority, None authority) that have been stored in advance in an authority information storage section 4536. An authority information sending section 4538 sends the generated authority information to the mobile terminal 4510.

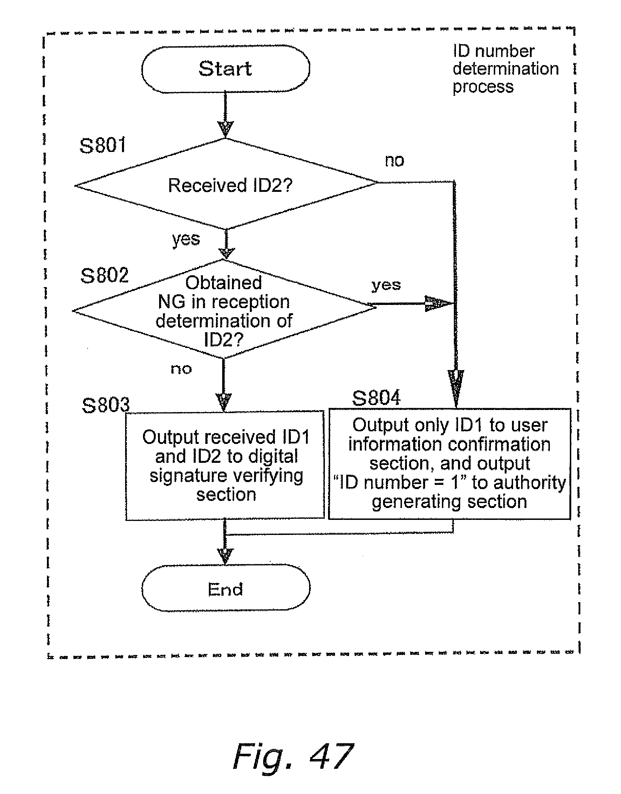

Figure 47 shows a flow of an ID number determination process performed by the ID number determining section 4533. First, it is determined whether or not ID2 has been received (S801). If it is determined that ID2 has not been received, only ID1 is output to the user information confirmation section 4535, and information indicating that the ID number is 1 is output (S804). If it is determined that ID2 has been received, it is further determined whether or not ID reception determination indicating that the reception strength of ID2 is at a predetermined level or higher has been negative (S802). If the reception strength of ID2 is at a predetermined level or higher, ID1 and ID2 are output to the digital signature verifying section 4534 (S803). If the strength of ID2 is not at a predetermined level or higher and thus the ID reception determination has been negative, only ID1 is output to the user information confirmation section 4535, and the ID number is set to be 1 (S804).

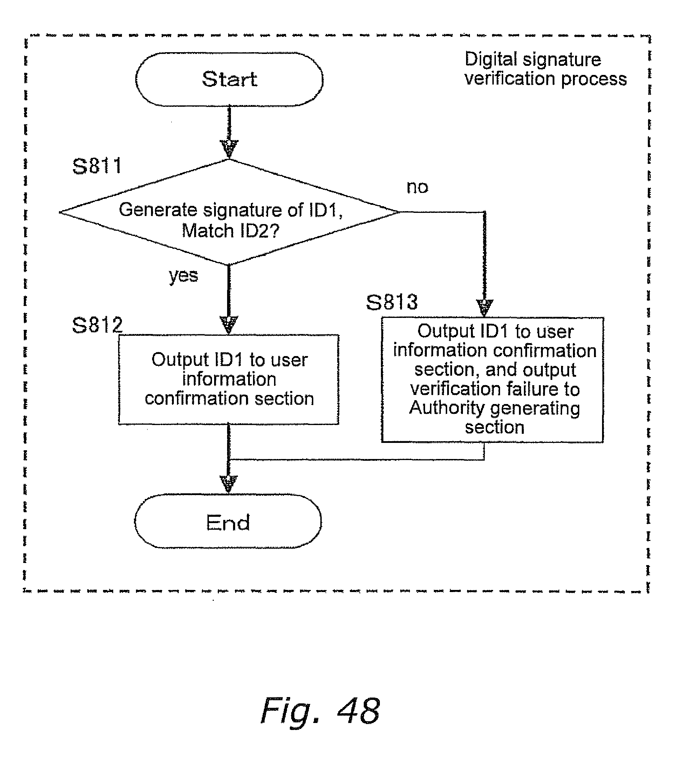

Figure 48 shows a flow of a digital signature verification process performed by the digital signature verifying section 4534, which is a process performed only when both ID1 and ID2 have been received. First, a digital signature of ID1 is generated, and it is determined whether or not the digital signature matches ID2 (S811). If the digital signature matches ID2, ID1 is output to the user information confirmation section 4535 (S812). If the digital signature does not match ID2, ID1 is output to the user information confirmation section 4535, and information indicating failure in signature verification is output to the authority information generating section 4537 (S813).

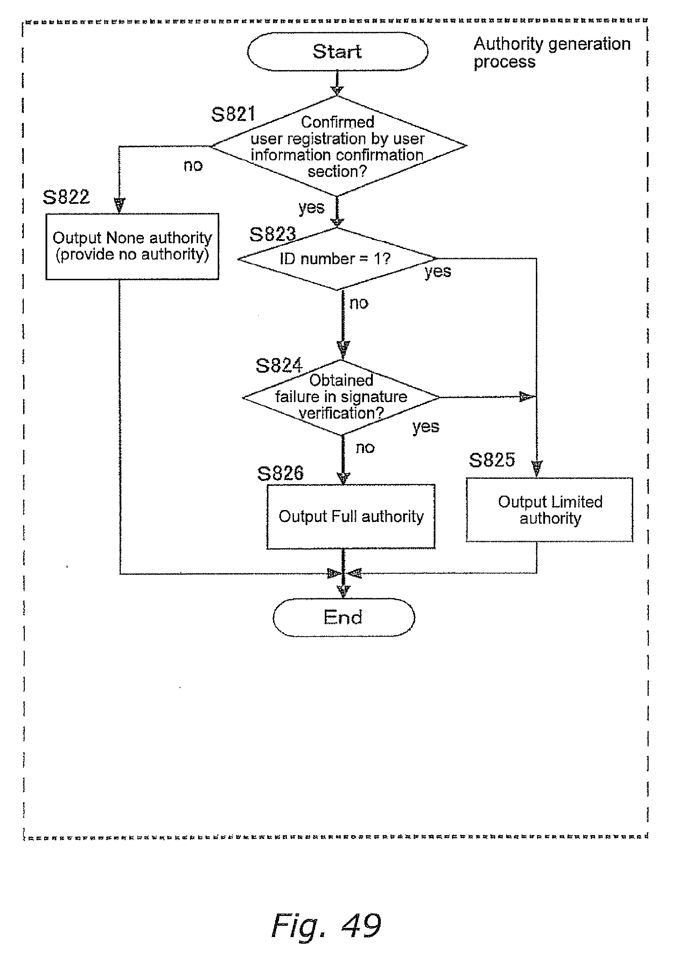

Figure 49 shows a flow of an authority information generation process performed by the authority generating section 4537. First, it is determined based on received confirmation information whether or not user registration has been confirmed by the user information confirmation section 4535 (S821). If confirmation information has not been received, None authority information is output (S822). If user registration has been confirmed, it is determined whether or not the number of pieces of ID information is 1 (S823). If the number of pieces of ID information is 1, Limited authority is output (S825). If the number of pieces of ID information is not 1, it is judged whether or not the above-mentioned information indicating failure in signature verification is present (S824). If the information indicating failure in signature verification is present, Limited authority is output (S825). If the information indicating failure in signature verification is not present, Full authority is output (S826).
Herein, Full authority and Limited authority will be described. For example, if the authority exercising apparatus 4540 is an automated teller machine (ATM), Full authority permits a transfer up to 5,000,000 yen, while Limited authority permits a transfer only up to 300,000 yen. Furthermore, if the authority exercising apparatus 4540 is a door restricting entrance/exit at a building entrance, Full authority is considered to permit unlock of all rooms in the building, while Limited authority is considered to permit unlock of only a part of rooms in the building. Moreover, if the authority exercising apparatus 4540 is used for an electronic money device or the like, Full authority permits use of all the total amount, while Limited authority permits purchase only up to 10,000 yen.

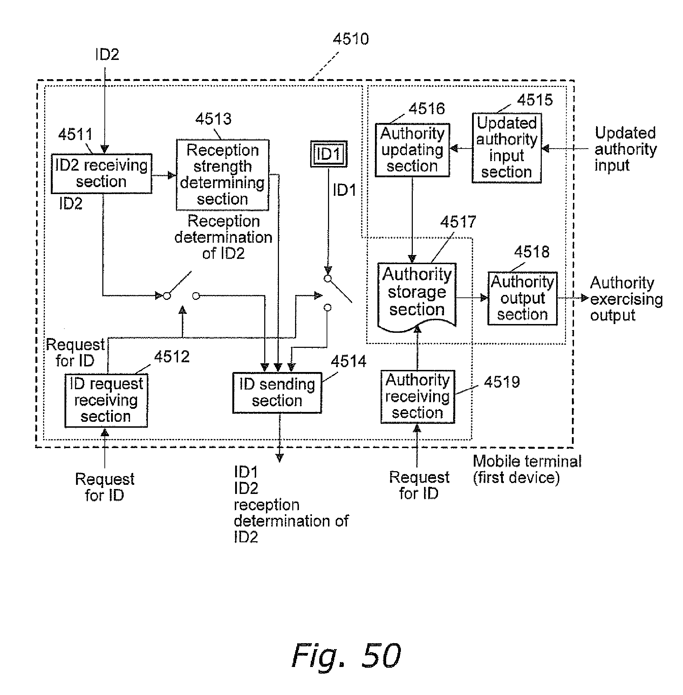

Figure 50 shows the configuration of the mobile terminal 4510, which is a first device. In the mobile terminal 4510, an ID2 receiving section 4511 receives ID2. Furthermore, an ID request receiving section 4512 receives a request for ID information, from the authority granting apparatus 4530. If ID2 is received, a reception strength determining section 4513 determines based on the reception strength of ID2 whether or not the reception level of ID2 is at a predetermined level or higher, and generates reception determining information. It is determined based on that determining information whether or not the transmitter 4520 is within a range of a predetermined distance from the mobile terminal 4510, and thus it is possible to perform authentication at a higher security level. The reception determining information of ID2 is output to an ID sending section 4514. If ID2 has not been received, the ID sending section 4514 sends only ID that has been stored in advance. If ID2 has been received, the ID sending section 4514 sends both ID1 and ID2, and the reception determining information of ID2 to the authority granting apparatus 4530.

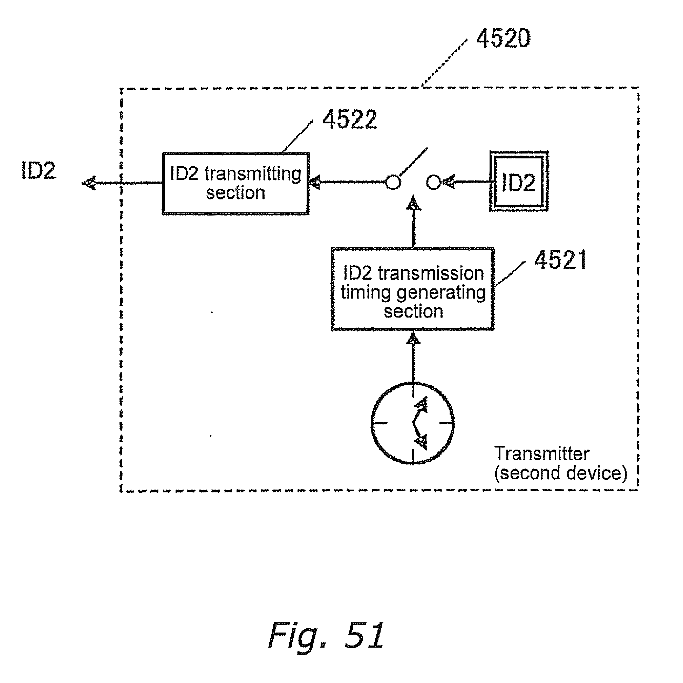

Figure 51 shows the transmitter 4520. In the transmitter 4520, an ID2 transmission timing generating section 4521 causes ID2 that has been stored in advance to be transmitted at a predetermined timing, and an ID2 transmitting section 4522 transmits ID2. Accordingly, ID2 is transmitted from the transmitter 4520 constantly at predetermined intervals.

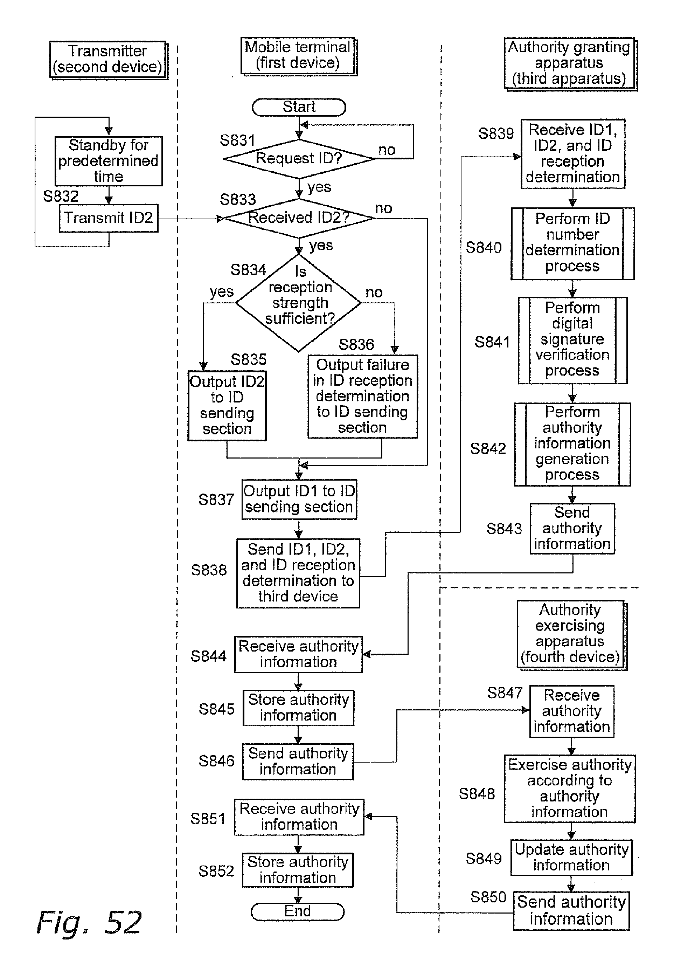

Figure 52 shows a flow of the entire process of the authentication system shown in Figure 50. First, the mobile terminal 4510 judges whether or not a request for sending ID information is present (S831). If a request for sending ID information is present, it is determined whether or not ID2, which is transmitted from the transmitter 4520 (S832), has been received (S833). If ID2 has not been received, ID1 is sent to the ID sending section 4514 (S837). If ID2 has been received, it is determined whether or not the reception strength is at a predetermined level or higher (S834). If it is determined that the reception strength of ID2 is at a predetermined level or higher, ID2 is output to the ID sending section 4514 (S835), and ID1 is also output to the ID sending section 4514 (S837). If it is determined that the reception strength of ID2 is not at a predetermined level or higher, information indicating negative as the reception determining information of ID2 is output to the ID sending section (S836), and ID1 is output to the ID sending section 4514 (S837). The ID sending section sends ID1, ID2, and the reception determining information of ID2 to the authority granting apparatus 4530 (S837). In the authority granting apparatus 4530, first, ID1, ID2, and the reception determining information of ID2 are received, and the ID number determination process (S840), the digital signature verification process (S841), and the authority information generation process (S842) are performed as described above. Then, as shown in Figure 49, generated authority information is sent to the mobile terminal 4510 (S843), and the authority information is received in the mobile terminal 4510 (S844). The received authority information is stored in the authority information storage section 4536 (S845), and the authority information is sent to the authority exercising apparatus 4540 (S846). If the authority information is received (S847), the authority exercising apparatus 4540 operates according to the authority information (S848). If the authority exercising apparatus 4540 operates once, the authority information is updated (S849), and the updated authority information is sent to the mobile terminal 4510 (S850). The mobile terminal 4510 receives the updated authority information (S851), and stores the authority information (S852).

Note that the first device and the second device are not limited to the foregoing embodiment. For example, the mobile terminal may be the second device, and the transmitter may be the first device.
Furthermore, in the foregoing embodiment, ID1 was the user ID information, and ID2 was the digital signature of the user ID information, but the opposite is also possible. Furthermore, one of the pieces of ID information may be encrypted user ID information, and the other ID information may be a decryption key.

### (Thirteenth embodiment)

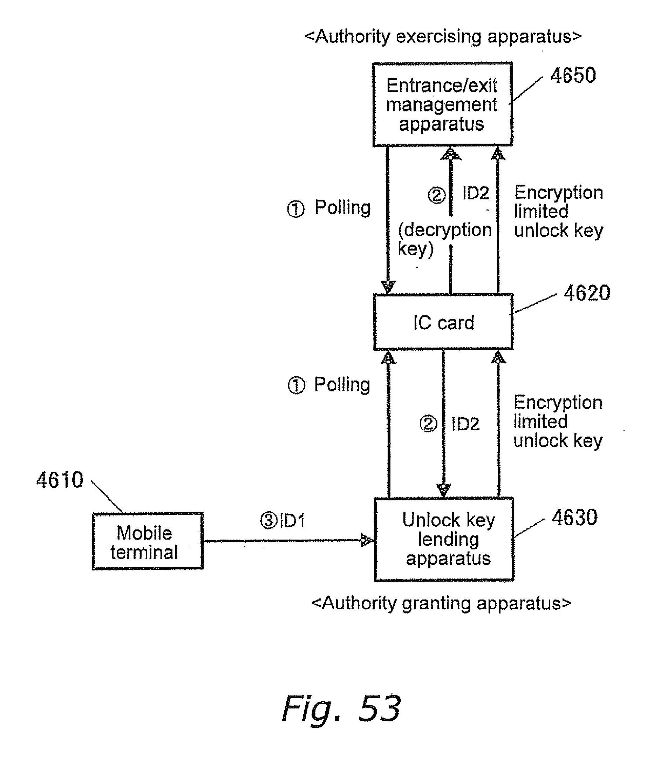

Figure 53 shows the configuration of an authentication system in entrance/exit management. The authentication system has a mobile terminal 4610 such as a mobile phone, an IC card 4620, an unlock key lending apparatus 4630 serving as an authority granting apparatus, and an entrance/exit management apparatus 4650 serving as an authority exercising apparatus. The unlock key lending apparatus 4630 sends a request for sending ID information, to the IC card 4620 by polling. If the unlock key lending apparatus 4630 that has received ID2 from the IC card 4620 further receives ID1 from the mobile terminal 4610, the unlock key lending apparatus 4630 generates a limited unlock key and sends it to the IC card 4620. On the other hand, the entrance/exit management apparatus 4650 sends a request for sending an unlock key, to the IC card 4620 by polling. If a request for sending an unlock key is received, the IC card 4620 sends the stored limited unlock key together with ID2.

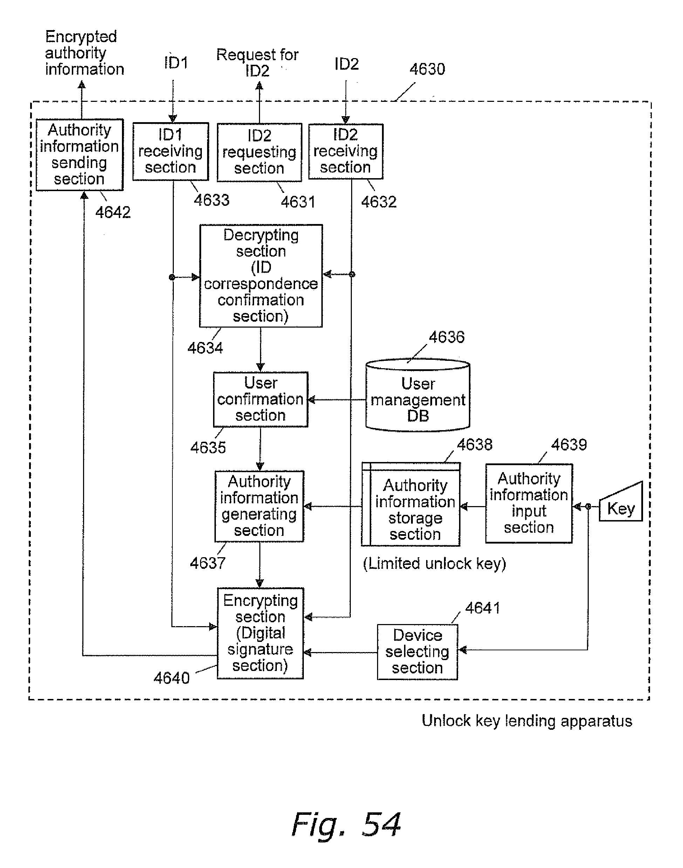

Figure 54 shows the internal configuration of the unlock key lending apparatus 4630. In the unlock key lending apparatus 4630, an ID2 requesting section 4631 sends a request for ID2, to the IC card 4620 by polling. If the IC card 4620 is within a signal reception range, an ID2 receiving section 4632 receives ID2. An ID1 receiving section receives ID1 from the mobile terminal 4610. An ID correspondence confirmation section 4634 confirms whether or not ID1 and ID2 correspond to each other. For example, in a case where ID2 serving as user ID information has been encrypted using ID1 serving as a key, if the ID correspondence confirmation section can decrypt it, it is confirmed that ID1 and ID2 correspond to each other. A user confirmation section 4635 refers to a user management database 4636, and confirms whether or not a user corresponding to the received user ID information has been registered. An authority information generating section 4637 generates authority information by reading authority information that has been input by an authority information input section 4639 and stored by an authority information storage section 4638, that is, an unlock key that can be used only within a limited range. An encrypting section 4640 encrypts the authority information with ID information corresponding to a device that has been selected by a device selecting section 4641, and provides a digital signature thereto. An authority information sending section 4642 sends the encrypted authority information to the selected device. With this process, the ID information contained in the selected device and the generated authority information are made to correspond to each other.

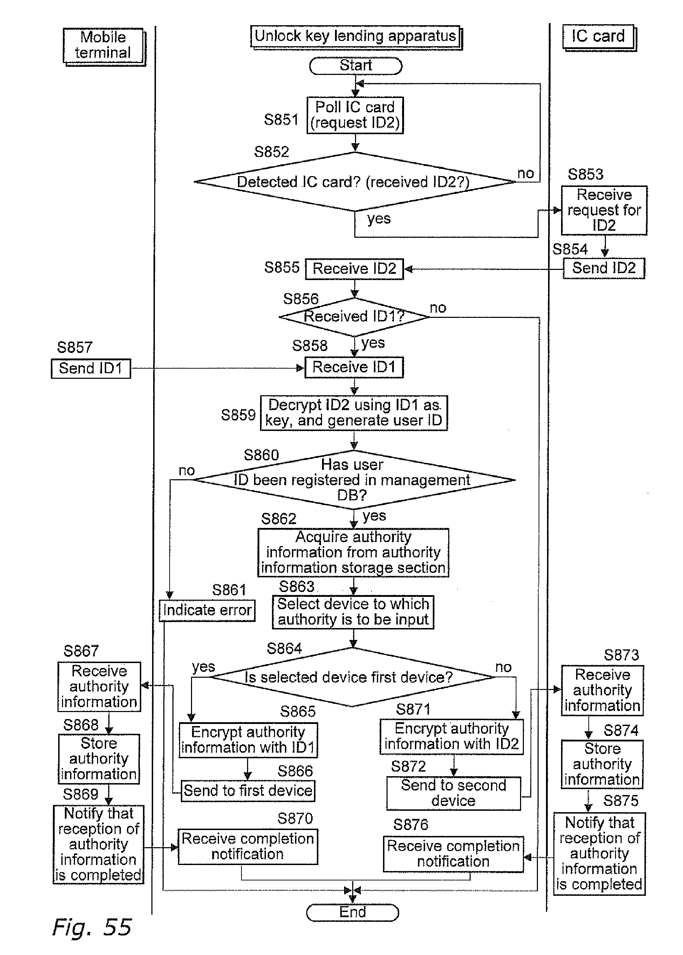

Figure 55 shows in more detail a flow of the process in the authentication system in this embodiment. First, the unlock key lending apparatus 4630 sends a request for sending ID2 by polling, to the IC card 4620 (S851). Whether or not the IC card 4620 has been detected, that is, whether or not ID2 has been received is determined (S852). The IC card 4620 that has received the request for sending ID2 (S853) sends ID2 (S854). Next, the unlock key lending apparatus 4630 that has received ID2 (S855) determines whether or not ID1 has been received (S856). If ID1 that has been intermittently sent from the mobile terminal 4610 (S857) is not received, the unlock key lending apparatus 4630 ends the process. If ID1 is received (S858), the unlock key lending apparatus 4630 decrypts ID2 using ID1 as a key, and generates user ID information (S859). Then, it is determined whether or not the user ID information has been registered in the user management database 4636 (S860). If the user ID information has not been registered, an error indication is generated and output (S861). If the user ID information has been registered, authority information is generated/acquired from the authority information storage section 4638 (S862), and a device to which the authority information is to be input is selected by the device selecting section 4641 (S863). It is determined whether or not the selected device is a first device, that is, the mobile terminal 4610 (S864). If the selected device is the mobile terminal 4610, the authority information is encrypted with IDI (S865), and sent to the mobile terminal 4610 (S866). If the selected device is not the first device, that is, the selected device is the IC card 4620, the authority information is encrypted with ID2 (S871), and sent to the IC card 4620 (S872). The authority information that has been sent to each device is stored (S867 to 868, S873 to 874), and the unlock key lending apparatus 4630 is notified that reception of the authority information has been completed (S869 to 870, S875 to 876).

Note that the foregoing embodiment can be applied to other apparatuses. For example, in an electronic money system, instead of a limited unlock key, limit information limiting the maximum amount of money that can be used may be generated and stored in a mobile terminal or an IC card.

### (Other embodiments)

Hereinafter, other embodiments of the authentication system according to the present invention will be described.
The authentication system according to the present invention is characterized in that it operates using information that is stored in an IC card or the like and identification information of a mobile terminal that only the same user as the IC card is allowed to have. In other words, with the authentication system using two or more types of information for specifying the user, such as an IC card and a password, or a passbook and a registered seal, an opportunity of misuse by a third party is eliminated and also complexity of setting a seal, signing, inputting a password or the like by the user can be eliminated.

In the above sixth through eighth embodiments, the authentication system is applied for the electronic money system or the crediting system. However, the present invention is not limited to these examples.
It is also beneficial to utilize the authentication system in an entrance/exit control system.
In such a case, user identification information is recorded in the IC card, and a cyclic redundancy check code (CRC) of the user identification information is recorded in the mobile device.
First, the entrance/exit control system reads out user information from the IC card when the user holds the IC card over the system.
Also, the entrance/exit control system reads out the check code from the mobile device at the same time as reading out the user information or immediately after reading.

The entrance/exit control system checks whether the user identification information is a valid information (does not include an error) or not according to the check code.
The entrance/exit control system permits unlocking only when the user information is determined to be valid.
According to the above-described procedure, a system which allows only the user of the IC card and the mobile device can unlock can be realized.
Further, according to this system, unless the IC card and the mobile device are both in the hand of a third party at the same time, the unlocking by this third party is impossible.
Furthermore, by providing a database in the system, to which a plurality of users can be registered, the system which can be used only by the plurality of users who are registered can be provided.

Moreover, by providing means for confirming whether the user is carrying the IC card and the mobile terminal when going outside the gate, it becomes possible to prevent the user from forgetting to carry the IC card and the mobile terminal.
In all the above embodiments, ID information is obtained from two devices. However, it is also possible to combine ID information obtained from more devices to perform authentication.

### (First additional statement)

### (Content of first additional statement)

### <Additional statement 1>

An authentication system, characterized by including: a first device having a first inherent information which is inherent to each customer; a second device having a second inherent information which is inherent to each customer; a third device to which signals output from the first device and the second device are input; a fourth device to which signals processed by the third device are input; and a fifth device to which signals output from the fourth device are input, in which the fourth device performs authentication of the customer for the fifth device when the signal input from the third device matches a pre-stored signal.

### <Additional statement 2>

The authentication system according to additional statement 1, characterized in that the first inherent information is encrypted with the second inherent information.

### <Additional statement 3>

The authentication system according to additional statement 1, characterized in that the signal input from the first device to the third device includes a signal for identifying the second inherent information.

### <Additional statement 4>

The authentication system according to additional statement 1, characterized in that the signal input from the first device to the third device includes address information of the fourth device.

### <Additional statement 5>

The authentication system according to additional statement 1, characterized in that the signal input from the second device to the third device includes address information of the fourth device.

### <Additional statement 6>

The authentication system according to additional statement 1, characterized in that the signal input from the third device to the fourth device includes address information of the fifth device.

### <Additional statement 7>

The authentication system according to additional statement 1, characterized in that the signal input from the fourth device to the fifth device includes address information of an object to be billed.

### <Additional statement 8>

The authentication system according to additional statement 1, characterized in that the third device checks, after it identifies the second inherent information, whether it has received the second inherent information transmitted by the second device.

### <Additional statement 9>

The authentication system according to additional statement 1, characterized in that the third device performs authentication of the customer in a predetermined range for the fifth device by receiving the first inherent information..

### <Additional statement 10>

The authentication system according to additional statement 1, characterized in that the first inherent information is transmitted upon an operation by the customer on the first device.

### <Additional statement 11 >

The authentication system according to additional statement 1, characterized in that the first inherent information is transmitted upon a request from the second device.

### <Additional statement 12>

The authentication system according to additional statement 1, characterized in that the first inherent information is transmitted upon a request from the third device.

### <Additional statement 13>

The authentication system according to additional statement 1, characterized in that the first inherent information is transmitted intermittently.

### <Additional statement 14>

The authentication system according to additional statement 1, characterized in that the second inherent information is transmitted upon an operation by the customer on the second device.

### <Additional statement 15>

The authentication system according to additional statement 1, characterized in that the second inherent information is transmitted upon a request from the first device.

### <Additional statement 16>

The authentication system according to additional statement 1, characterized in that the second inherent information is transmitted upon a request from the third device.

### <Additional statement 17>

The authentication system according to additional statement 1, characterized in that the second inherent information is transmitted intermittently.

### <Additional statement 18>

The authentication system according to additional statement 1, characterized in that the third device can receive the first inherent information transmitted from a distance of a few meters or shorter.

### <Additional statement 19>

The authentication system according to additional statement 1, characterized in that the third device can receive the second inherent information transmitted from a distance of a few meters or shorter.

### <Additional statement 20>

The authentication system according to additional statement 1, characterized in that there are a plurality of devices which include the first inherent information other than the first device.

### <Additional statement 21>

The authentication system according to additional statement 1, characterized in that transmission of the first inherent information is suspended by sending a predetermined signal to the first device.

### <Additional statement 22>

The authentication system according to additional statement 1, characterized in that predetermined information of the first device is erased by sending a predetermined signal to the first device.

### <Additional statement 23>

The authentication system according to additional statement 1, characterized in that predetermined information of the first device is transferred by sending a predetermined signal to the first device.

### <Additional statement 24>

The authentication system according to additional statement 1, characterized in that transmission of the second inherent information is suspended by sending a predetermined signal to the second device.

### <Additional statement 25>

The authentication system according to additional statement 1, characterized in that predetermined information of the second device is erased by sending a predetermined signal to the second device.

### <Additional statement 26>

The authentication system according to additional statement 1, characterized in that predetermined information of the second device is transferred by sending a predetermined signal to the second device.

### <Additional statement 27>

The authentication system according to additional statement 1, characterized in that authentication is not performed for the fifth device when a predetermined signal is sent to the fourth device.

### <Additional statement 28>

The authentication system according to additional statement 1, characterized in that misuse of the second device is notified to the fifth device from the fourth device by sending a predetermined signal to the fourth device.

### <Additional statement 29>

The authentication system according to any one of additional statements 21, 24, 27, and 28, characterized in that a predetermined code number is required for sending a predetermined signal to the first device, the second device, or the fourth device.

### <Additional statement 30>

The authentication system according to additional statement 1, characterized in that authentication is not performed for the fifth device in a place other than a predetermined place.

### <Additional statement 31>

The authentication system according to additional statement 1, characterized in that authentication is not performed for the fifth device in a time zone other than a predetermined time zone.

### <Additional statement 32>

The authentication system according to additional statement 1, characterized in that the fifth device is included in the third device.

### <Additional statement 33>

The authentication system according to additional statement 1, characterized in that the third device is included in the second device.

### (Description of the first additional statement)

An object of the invention described in the first additional statement is to provide an authentication system which can enhance authentication, and reduce a risk in the case of losing or forgetting to carry a device having inherent information.

In order to achieve such an object, the authentication system of the present invention includes: a first device having a first inherent information which is inherent to each customer; a second device having a second inherent information which is inherent to each customer; a third device to which signals output from the first device and the second device are input; a fourth device to which signals processed by the third device are input; and a fifth device to which signals output from the fourth device are input, and in such an authentication system, the fourth device performs authentication of the customer for the fifth device when the signal input from the third device matches a pre-stored signal.
In order to achieve such an object, in the authentication system of the present invention, the first inherent information is encrypted with the second inherent information.
In order to achieve such an object, in the authentication system of the present invention, the signal input from the first device to the third device includes a signal for identifying the second inherent information.

In order to achieve such an object, in the authentication system of the present invention, the signal input from the first device to the third device includes address information of the fourth device.
In order to achieve such an object, in the authentication system of the present invention, the signal input from the second device to the third device includes address information of the fourth device.
In order to achieve such an object, in the authentication system of the present invention, the signal input from the third device to the fourth device includes address information of the fifth device.
In order to achieve such an object, in the authentication system of the present invention, the signal input from the fourth device to the fifth device includes address information of an object to be billed.
In order to achieve such an object, in the authentication system of the present invention, the third device checks, after it identifies the second inherent information, whether it has received the second inherent information transmitted by the second device.

In order to achieve such an object, in the authentication system of the present invention, the third device performs authentication of the customer in a predetermined range for the fifth device by receiving the first inherent information.
In order to achieve such an object, in the authentication system of the present invention, the first inherent information is transmitted upon an operation by the customer on the first device.
In order to achieve such an object, in the authentication system of the present invention, the first inherent information is transmitted upon a request from the second device.
In order to achieve such an object, in the authentication system of the present invention, the first inherent information is transmitted upon a request from the third device.
In order to achieve such an object, in the authentication system of the present invention, the first inherent information is transmitted intermittently.

In order to achieve such an object, in the authentication system of the present invention, the second inherent information is transmitted upon an operation by the customer on the second device.
In order to achieve such an object, in the authentication system of the present invention, the second inherent information is transmitted upon a request from the first device.
In order to achieve such an object, in the authentication system of the present invention, the second inherent information is transmitted upon a request from the third device.
In order to achieve such an object, in the authentication system of the present invention, the second inherent information is transmitted intermittently.
In order to achieve such an object, in the authentication system of the present invention, the third device can receive the first inherent information transmitted from a distance of a few meters or shorter.

In order to achieve such an object, in the authentication system of the present invention, the third device can receive the second inherent information transmitted from a distance of a few meters or shorter.
In order to achieve such an object, in the authentication system of the present invention, there are a plurality of devices which include the first inherent information other than the first device.
In order to achieve such an object, in the authentication system of the present invention, transmission of the first inherent information is suspended by sending a predetermined signal to the first device.
In order to achieve such an object, in the authentication system of the present invention, predetermined information of the first device is erased by sending a predetermined signal to the first device.
In order to achieve such an object, in the authentication system of the present invention, predetermined information of the first device is transferred by sending a predetermined signal to the first device.

In order to achieve such an object, in the authentication system of the present invention, transmission of the second inherent information is suspended by sending a predetermined signal to the second device.
In order to achieve such an object, in the authentication system of the present invention, predetermined information of the second device is erased by sending a predetermined signal to the second device.
In order to achieve such an object, in the authentication system of the present invention, predetermined information of the second device is transferred by sending a predetermined signal to the second device.
In order to achieve such an object, in the authentication system of the present invention, authentication is not performed for the fifth device when a predetermined signal is sent to the fourth device.
In order to achieve such an object, in the authentication system of the present invention, misuse of the second device is notified to the fifth device from the fourth device by sending a predetermined signal to the fourth device.

In order to achieve such an object, in the authentication system of the present invention, a predetermined code number is required for sending a predetermined signal to the first device, the second device, or the fourth device.
In order to achieve such an object, in the authentication system of the present invention, authentication is not performed for the fifth device in a place other than a predetermined place.
In order to achieve such an object, in the authentication system of the present invention, authentication is not performed for the fifth device in a time zone other than a predetermined time zone.
In order to achieve such an object, in the authentication system of the present invention, the fifth device is included in the third device.
In order to achieve such an object, in the authentication system of the present invention, the third device is included in the second device.

According to the authentication system of the present invention, enhancement of authentication in various events which require authentication, reducing of risks in the case where a device including inherent information is lost, and prevention of impairing convenience when the device including inherent information is forgotten to be carried can be realized.

### (Second additional statement)

### (Content of second additional statement)

### <Additional statement 1>

An authentication system including:
an IC card having a communication unit with a reader/writer device, a mutual authentication unit with the reader/writer device, and a storage unit which stores first identification information which becomes accessible as a result of the mutual authentication unit;
a mobile device having a storage unit for storing second identification information and a communication unit with the reader/writer device;
a reader/writer having a first communication unit which detects an IC card which can communicate with and reads out the first identification information from the storage unit of the IC card after mutual authentication with the IC card, a second communication unit for reading out the second identification information from the mobile device, and a data conversion unit for extracting card information of the IC card by data conversion with the first identification information and the second identification information.

### <Additional statement 2>

The authentication system according to additional statement 1, in which:
the card information is crediting information of a user; and
the reader/writer of the authentication system further includes a billing money information generating unit for generating billing money information to the user and a communication unit for sending the billing money information and the crediting information to a credit settlement server, the authentication system further includes
a credit settlement server having a database for managing card information for each user, a communication unit with the reader/writer, and a credit settlement unit based on the crediting information, the billing money information and the database.

### <Additional statement 3>

The authentication system according to additional statement 1, in which:
the card information is electronic money information which the user can use;
the reader/writer of the authentication system further includes an input unit for inputting billing information or additional money information, an electronic money update unit for updating the electronic money information based on at least the billing information or the additional money information, a reverse data conversion unit for processing the electronic money information with reverse data conversion of the data conversion; and
the electronic money information processed with the reverse data conversion is recorded to update the storage unit of the IC card through the first communication unit.

### <Additional statement 4>

The authentication system according to any one of additional statements 1 through 3, in which at least the first communication unit of the first communication unit and the second communication unit has a key exchange unit for sharing an encryption and decryption key between the two devices which communicate each other, and is an encryption data communication unit using the encryption and decryption key.

### <Additional statement 5>

The authentication system according to any one of additional statements 1 through 3, in which:
the data conversion is decrypting conversion of encrypted information; and
the card information is previously encrypted with the second identification information to generate the first identification information, and is stored in the storage unit of the IC card.

### <Additional statement 6>

The authentication system according to any one of additional statements 1 through 3, in which the reader/writer is implemented in the mobile device.

### <Additional statement 7>

An authentication device, including
a first communication unit which detects an IC card to perform mutual authentication, and reads out a first identification information from the storage unit of the IC card;
a second communication unit for reading out a second identification information stored in a mobile device; and
a data conversion unit for extracting card information stored in the IC card by data conversion with the first identification information and the second identification information.

### <Additional statement 8>

An IC card including a communication unit which responds to a call from a reader/writer and establishes communication with the reader/writer and a storage unit which becomes accessible after mutual authentication with the reader/writer, in which:
the storage unit includes encrypted card information recorded thereon; and
key information for the encryption is identification information stored in a device different from the IC card.

### <Additional statement 9>

A mobile device including:
an input unit for allowing a user to input numerical and text information;
a display unit for the user;
a communication unit with a reader/writer; and
a storage unit which stores key information for decrypting or encrypting card information stored in an IC card.

### <Additional statement 10>

An authentication device including:
a first communication unit which detects an IC card to perform mutual authentication, and reads out first identification information from a storage unit of the IC card;
a storage unit which stores second identification information; and
a data conversion unit for extracting card information stored in the IC card by data conversion with the first identification information and the second identification information.

### <Additional statement 11 >

A personal authentication method, including the steps of:
reading out first identification information stored in an IC card:
   reading out second identification information stored in a mobile device;
   extracting personal information of a user by a data conversion with the first identification information and the second identification information; and
   completing personal authentication of the user by confirming validity of the personal information.

### <Additional statement 12>

The personal authentication method according to additional statement 11, in which the data conversion is encryption deciphering conversion for deciphering cipher of the first identification information by using the second identification information as a key.

### (Description of second additional statement)

An object of the present invention described in the second additional statement is to provide an authentication system and authentication device which does not require complicated input of a password or the like by a user, and can prevent misuse by a third party even when a card is lost or stolen.

An object of the present invention is to provide a settlement system utilizing the above-described authentication with the authentication system which can authenticate a user without input of a password or the like. Means for solving this is described.
An authentication system of the present invention includes: an IC card having a communication unit with a reader/writer device, a mutual authentication unit with the reader/writer device, and a storage unit which stores a first identification information which becomes accessible as a result of the mutual authentication unit; a mobile device having a storage unit for storing a second identification information and a communication unit with the reader/writer device; a reader/writer having a searching unit for searching a communicable IC card, a mutual authentication unit with the IC card found by the searching unit, a first communication unit for reading out the first identification information from the storage unit of the IC card after the mutual authentication, a second communication unit for reading out the second identification information from the mobile device, and a data conversion unit for extracting card information of a user of the IC card or the mobile terminal by data conversion with the first identification information and the second identification information.

Further, the authentication system of the present invention is characterized in that: the card information is crediting information of a user; the authentication system further includes a credit settlement server having a database for managing card information for each user, a communication unit with the reader/writer, and credit settlement unit which obtains the crediting information and the billing money information of the user from the reader/writer and at least based on the crediting information, the billing amount information and the database; and the reader/writer of the authentication system further includes a billing money information generating unit for generating billing money information to the user and a communication unit for sending the billing money information and the person specifying information to a credit settlement server.
The authentication system of the present invention is characterized in that: the card information is electronic money information which the user can use; the reader/writer of the authentication system further includes an input unit for inputting billing information or additional money information, an electronic money update unit for updating the electronic money information obtained from the IC card based on at least one of the billing information and additional money information, and a reverse data conversion unit for processing the updated electronic money information with reverse data conversion of the data conversion; and the updated electronic money information processed with the reverse data conversion is recorded to update the storage unit of the IC card through the first communication unit.

The authentication system of the present invention is characterized in that at least one of the first communication unit and the second communication unit has a key exchange unit for sharing an encryption and decryption key between the two devices which communicate each other, and is an encryption data communication unit using the encryption and decryption key.
The authentication system of the present invention is characterized in that: the data conversion is decrypting conversion of encrypted information; and the card information is previously encrypted with the second identification information to generate the first identification information, and is stored in the storage unit of the IC card.
The authentication system of the present invention is characterized in that the reader/writer is implemented in the mobile device.
Furthermore, the authentication device of the present invention, which is comprised of a reader and a writer, includes: a searching unit for searching an IC card which enables communication, a mutual authentication unit with the IC card found by the searching unit, a first communication unit which reads out a first identification information from the storage unit of the IC card after the mutual authentication; a second communication unit for reading out a second identification information from a mobile device; and a data conversion unit for extracting card information of a user of the IC card or the mobile terminal by data conversion with the first identification information and the second identification information.

The IC card of the present invention includes a communication unit with a reader/writer, mutual authentication unit with the reader/writer, and a storage unit which becomes accessible after the mutual authentication with the reader/writer, and is
characterized in that the storage unit includes encrypted card information recorded thereon, and key information for encryption is information stored in a device different from the IC card.
The mobile device according to the present invention is characterized by including: a communication unit with the reader/writer; an input unit from a user; a display unit for the user; and a storage unit which stores key information for decrypting or encrypting card information stored in an IC card.
According to the present invention, both the first identification information in the IC card and the second identification information stored in the mobile terminal are read out by the reader/writer, and card information of a user using the IC card is extracted by data conversion of the first identification information and the second identification information. Thus, unless the IC card and the mobile terminal are both in the hand of a third party at the same time, they are not misused. This provides the safety of a level similar to that in a conventional bank depositing system, in which the account is confirmed by a passbook, and user identification is performed by a registered seal, to a transaction of electronic data.

Since the card information of the user is extracted from the first identification information and the second identification information, the user does not have to perform a complicated password input operation.
According to the present invention, by employing a database for managing card information for each user, a communication unit of the IC card with the reader/writer, a mutual authentication unit with the reader/writer, and the billing server which performs settlement in accordance with the billing money information from the reader/writer, it becomes possible to use the card information extracted from the first identification information and the second identification information as the crediting information and/or account information. Thus, the complexity of the password input or the like by the user can be avoided with the convenience of conventional credit cards and debit card being maintained. Also, misuse in the case where the IC card in the hand of a third party can be prevented.
By utilizing the card information extracted from the first identification information and the second identification information of the authentication system according to the present invention as electronic money information which the user has, a threat of misuse by a third party can be averted without impairing convenience of conventional charging-type electronic money.

If the card information extracted from the first identification information and the second identification information of the authentication system according to the present invention is used as entrance/exit control information, the present invention can be applied to an entrance/exit control system which permits only entrance and exit of users who are previously registered, and can refuse entrance and exit of a third party who is inappropriately using the IC card of the registered user.
In the entrance/exit control system, entrance and exit are controlled by the IC card storing the first identification information and the mobile terminal storing the second identification information. Thus, when the registered user exits the gate, it is confirmed whether the user is carrying the IC card and the mobile terminal. If the user does not carry them, an alarm is output in order to ensure that the valid registered user can enter and exit the gate.
By applying the present invention to a digital information recording system in which digital information is encrypted with the card information extracted from the first identification information and the second identification information of the authentication system according to the present invention for recording, confidential digital information recording which is permitted to only the user becomes possible.

By applying the present invention to a digital information reproducing system in which digital information is decrypted with the card information extracted from the first identification information and the second identification information of the authentication system according to the present invention for reproducing, confidential digital information reproduction which is permitted to only the user becomes possible.
The first identification information of the authentication system according to the present invention is characterized in that the card information is previously encrypted with the second identification information and is stored in the IC card. In this way, the card information is extracted only when both of the first identification information and the second identification information can be obtained surely.
In the authentication system according to the present invention, the first identification information is card information, and the second identification information is a checking code for the first identification information. In this way, the card information is extracted only when that both the first identification information and the second identification information can be obtained surely.

The reader/writer which communicates with the IC card of the authentication system according to the present invention in a contact/non-contact manner is
characterized by being implemented in the mobile terminal. With such a structure, for example, for charging electronic money of a charging type as described above, the card information extracted from the first identification information and the second identification information is sent to the settlement server. The settlement server performs authentication of a user and a withdrawal process for the charged money from the account of the user, and updates the electronic money information in the IC card. In this way, the user can charge electronic money to own IC card in any place without restriction on a place.
As described above, the authentication system according to the present invention realizes the safety, which has been conventionally achieved by a combination of a passbook and a registered seal, in electronic personal authentication, and can be used for safe electronic money, entrance/exit control, digital information recording, or the like.

In the present embodiment, as an example of the device having the inherent information, the mobile phone has been described. However, it may be other types of devices as long as it has predetermined functions.

### INDUSTRIAL APPLICABILITY

The authentication system of the present invention is useful for performing personal authentication in electronic settlement and the like. Further, according to the authentication system, the authentication device, the IC card and the mobile device of the present invention, electronic money information or crediting information which allows use by only users can be recorded with an IC card and a mobile device which only the users are permitted to have.

### BRIEF DESCRIPTION OF THE DRAWINGS

Figure **1** is a diagram of an authentication system of the first embodiment.
Figure **2** is a diagram showing a structure of an authentication system as a variation of the first embodiment.
Figure **3** is a diagram showing a structure of an authentication system of the second embodiment.
Figure **4** is a diagram showing a structure of an authentication system as a variation of the second embodiment.
Figure **5** is a diagram showing a structure of an authentication system of the third embodiment.
Figure **6** is a diagram showing a structure of an authentication system of the third embodiment.
Figure **7** a diagram showing a structure of an authentication system as a variation of the third embodiment.
Figure **8** is a diagram showing a structure of an authentication system of the fourth embodiment.
Figure **9** is a diagram showing a structure of an authentication system as a variation of the fourth embodiment.
Figure **10** is a diagram showing a structure of an authentication system of the fifth embodiment.
Figure **11** is diagram showing a structure of an authentication system of the fifth embodiment.
Figure **12** is a diagram showing a structure of an authentication system as a variation of the fifth embodiment.
Figure **13** is a block diagram of an authentication system of the sixth embodiment.
Figure **14** is a diagram showing a flow of a process showing card capture and key exchange processing.
Figure **15** is a diagram showing a mutual authentication process between a card and a reader/writer.
Figure **16** is a diagram showing an electronic money information update procedure according to the sixth embodiment.
Figure **17** is a block diagram of an authentication system of the seventh embodiment.
Figure **18** is a block diagram of an authentication system of the eighth embodiment.
Figure **19** is a block diagram of an information recording apparatus of the ninth embodiment.
Figure **20** is a flow diagram showing an authentication process for recording content.
Figure **21** is a flow diagram showing an authentication process for reproducing content.
Figure **22** is a flow diagram showing an authentication process as a variation.
Figure **23** is a diagram illustrating a structure of authentication information.
Figure **24** is a flow diagram showing an authentication process for reproducing content.
Figure **25** is a flow diagram showing an authentication process for recording content.
Figure **26** is a flow diagram showing an authentication process for using content.
Figure **27** is a block diagram of an information recording apparatus as a variation.
Figure **28** is a diagram showing a structure of ID management information.
Figure **29** is a flow diagram illustrating an authentication process for using content.
Figure **30** is a diagram illustrating a structure of authentication information.
Figure **31** is a diagram illustrating a physical configuration of a recording medium of the tenth embodiment.
Figure **32** is a diagram illustrating the relationship between the physical configuration and data of the recording medium of the tenth embodiment.
Figure **33** is a block diagram showing a structure of a shop device of the tenth embodiment.
Figure **34** is a flow diagram showing an operation of the shop device of the tenth embodiment.
Figure **35** is a block diagram showing a structure of a user device of the tenth embodiment.
Figure **36** is a flow diagram showing an operation of the user device of the tenth embodiment.
Figure **37** is a block diagram showing a structure of a shop device of a variation of the tenth embodiment.
Figure **38** is a flow diagram showing an operation of the shop device of the variation of the tenth embodiment.
Figure **39** is a block diagram showing a structure of a user device of a variation of the tenth embodiment.
Figure **40** is a flow diagram showing an operation of the user device of the variation of the tenth embodiment.
Figure **41** is a block diagram showing a structure of an authentication system of the eleventh embodiment.
Figure **42** is a flow diagram showing an operation of the authentication system of the eleventh embodiment.
Figure **43** is a block diagram showing a structure of an authentication system of the eleventh embodiment.
Figure **44** is a flow diagram showing an operation of the authentication system of the eleventh embodiment.
Figure **45** is a diagram of an authentication system in a twelfth embodiment.
Figure **46** is a diagram of a right granting apparatus in the authentication system in the twelfth embodiment.
Figure **47** is a flowchart illustrating a part of the process of the right granting apparatus.
Figure **48** is a flowchart illustrating a part of the process of the right granting apparatus.
Figure **49** is a flowchart illustrating a part of the process of the right granting apparatus.
Figure **50** is a diagram of a mobile terminal in the authentication system in the twelfth embodiment.
Figure **51** is a diagram of a transmitter in the authentication system in the twelfth embodiment.
Figure **52** is a flowchart illustrating the operation of the authentication system in the twelfth embodiment.
Figure **53** is a diagram of an authentication system in a thirteenth embodiment.
Figure **54** is a diagram of an unlock key lending apparatus in the authentication system in the thirteenth embodiment.
Figure **55** is a flowchart illustrating the operation of the authentication system in the thirteenth embodiment.
Figure **56** is a diagram of an authentication system in a conventional example.

### REFERENCE NUMERALS

- 101: IC tag
- 102: Card
- 106: ATM
- 108: Host computer
- 110: Mobile phone
- 201: IC tag
- 203: Terminal (store)
- 204: Mobile phone
- 207: Host computer
- 1100: IC card
- 1101: Mobile phone
- 1102: Reader/writer
- 1201: IC card manufacturer's serial number
- 1202, 1203: Common key made through key exchange processing
- 1301, 1302: Sequence ID
- 1303, 1304: Communication key
- 1305, 1306: correspondence and comparison processing
- 1500: IC card
- 1501: Mobile phone
- 1502: Reader/writer
- 1503: Credit server
- 1504: Network
- 1600: IC card
- 1601: Mobile phone
- 1602: Bank server
- 1603: Network
- 4510: mobile terminal
- 4520: transmitter
- 4530: authority granting apparatus
- 4540: authority exercising apparatus
- 4610: mobile terminal
- 4620: IC card
- 4630: unlock key lending apparatus
- 4650: entrance/exit management apparatus

## Claims

1. An authentication system, comprising:
a receiving unit operable to receive first ID information from a first device, and receive second ID information from a second device; and
an authority information generating unit operable to generate authority information having an authority range varying according to the number of pieces of the ID information received by the receiving unit.

2. The authentication system according to claim 1,
wherein the first ID information is encrypted user ID information, and
the second ID information is a decryption key of the user ID information.

3. The authentication system according to claim 1,
wherein the second ID information is encrypted user ID information, and
the first ID information is a decryption key of the user ID information.

4. The authentication system according to claim 1,
wherein the first ID information is user ID information, and
the second ID information is a digital signature of the user ID information.

5. The authentication system according to claim 1,
wherein the second ID information is user ID information, and
the first ID information is a digital signature of the user ID information.

6. The authentication system according to claim 1, comprising:
a user management unit operable to hold information relating to a user; and
a user confirmation unit operable to make an inquiry as to the first ID information or the second ID information to the user management unit, and acquire information regarding whether or not a user corresponding to the first ID information or the second ID information has been registered,
wherein if information indicating that the user has been registered is not acquired by the user confirmation unit, the authority information generating unit does not generate the authority information.

7. The authentication system according to claim 1, comprising:
a user management unit operable to manage the first ID information and the second ID information such that they correspond to each other; and
an ID correspondence confirmation unit operable to acquire information regarding whether or not the first ID information and the second ID information correspond to each other.

8. The authentication system according to claim 1,
wherein if the receiving unit receives both the first ID information and the second ID information, the authority information generating unit generates, as the authority information, full authority information, and
if the receiving unit receives only either one of the first ID information and the second ID information, the authority information generating unit generates, as the authority information, limited authority information with which authority is limited more than the full authority information.

9. The authentication system according to claim 8, comprising a storage unit operable to store the full authority information and the limited authority information,
wherein the authority information generating unit selects either one of the full authority information and the limited authority information in the storage unit.

10. The authentication system according to claim 1, comprising a device selecting unit operable to select either one of the first device and the second device,
wherein the authority information generating unit generates the authority information according to a result of the selection performed by the device selecting unit.

11. The authentication system according to claim 10,
wherein if the first device is selected by the device selecting unit, the authority information generating unit generates the authority information, by encrypting the authority information with the first ID information, and
if the second device is selected by the device selecting unit, the authority information generating unit generates the authority information, by encrypting the authority information with the second ID information.

12. The authentication system according to claim 10,
wherein if the first device is selected by the device selecting unit, the authority information generating unit generates the authority information, by providing a digital signature to the authority information and the first ID information, and
if the second device is selected by the device selecting unit, the authority information generating unit generates the authority information, by providing a digital signature to the authority information and the second ID information.

13. The authentication system according to claim 10, comprising a sending unit operable to send the authority information to a device that has been selected by the device selecting unit.

14. The authentication system according to claim 1, comprising a sending unit operable to send the authority information that has been generated by the authority information generating unit, to the first device or the second device.

15. The authentication system according to claim 1, comprising an authority exercising unit configured to operate according to the authority information that has been generated by the authority information generating unit.

16. The authentication system according to claim 1, wherein the limited information is the amount of money that can be used, the number of times of operation that can be performed, time, period, expiration date, or area.
